# EUROPEAN PATENT APPLICATION

(11) **EP 4 661 241 A1**
(43) Date of publication of application: **10.12.2025**
(21) Application number: 24829889.5
(22) Date of filing: 28.02.2024
(51) Int. Cl.: H02J 7/00

(54) **POWER SOURCE ROLE SWITCHING METHOD AND SYSTEM, AND ELECTRONIC DEVICE**

(30) Priority: 30.06.2023 CN 202310809719
(71) Applicant: Huawei Technologies Co., Ltd., Shenzhen, Guangdong 518129 (CN)
(72) Inventor: PENG, Jiang, Shenzhen, Guangdong 518129 (CN); CHEN, Lihuang, Shenzhen, Guangdong 518129 (CN); YANG, Chengjun, Shenzhen, Guangdong 518129 (CN)
(74) Representative: Maiwald GmbH
(86) International application number: PCT/CN2024/079051
(87) International publication number: WO 2025/001233

(57) **Abstract**

This application is applicable to the field of terminal technologies, and in particular, relates to a power role switching method and system, and an electronic device. In the method, a first electronic device receives a first operation, where the first operation is used to switch a power role in a charging process; and sends a first instruction to a second electronic device based on the first operation, where the first instruction indicates the second electronic device to switch to a charged device, to be specific, enables the second electronic device to adjust an output voltage of the second electronic device, adjust a first signal line to be a signal line for the second electronic device to receive data sent by the first electronic device, and adjust a second signal line to be a signal line for the second electronic device to send data to the first electronic device. Based on the first operation, the first electronic device can adjust the first signal line to be a signal line for the first electronic device to send data to the second electronic device, adjust the second signal line to be a signal line for the first electronic device to receive data sent by the second electronic device, and adjust an output voltage of the first electronic device, to accurately switch the power role.

## Description

This application claims priority to Chinese Patent Application No. 202310809719.9, filed with the China National Intellectual Property Administration on June 30, 2023 and entitled "POWER ROLE SWITCHING METHOD AND SYSTEM, AND ELECTRONIC DEVICE", which is incorporated herein by reference in its entirety.

### TECHNICAL FIELD

This application belongs to the field of terminal technologies, and in particular, relates to a power role switching method and system, and an electronic device.

### BACKGROUND

With rapid development of electronic devices and charging technologies, electronic devices such as mobile phones, notebook computers, tablet computers, or smart large screens may be dual-role devices that have a function of being charged and a power supply function. To be specific, these dual-role devices may be used as power supply devices (namely, power roles) to provide electric energy for other electronic devices, and may also be used as charged devices to receive electric energy provided by power supply devices. This greatly improves user experience. In a charging process in which both two electronic devices are dual-role devices, how to switch a power role becomes an urgent problem to be resolved.

### SUMMARY

Embodiments of this application provide a power role switching method and system, and an electronic device, so that a power role can be accurately switched in a charging process in which both two electronic devices are dual-role devices, to improve user experience.

According to a first aspect, an embodiment of this application provides a power role switching method, applied to a first electronic device. Initially, the first electronic device is a charged device, and is configured to receive electric energy provided by a second electronic device. The first electronic device and the second electronic device each have a function of being charged and a power supply function. The first electronic device is connected to the second electronic device through a first signal line and a second signal line. The first signal line is a signal line for the first electronic device to receive data sent by the second electronic device. The second signal line is a signal line for the first electronic device to send data to the second electronic device. The method includes:
the first electronic device receives a first operation, where the first operation is used to switch a power role in a charging process;
the first electronic device sends a first instruction to the second electronic device based on the first operation, where the first instruction indicates the second electronic device to switch to a charged device; and
based on the first operation, the first electronic device adjusts the first signal line to be the signal line for the first electronic device to send the data to the second electronic device, adjusts the second signal line to be the signal line for the first electronic device to receive the data sent by the second electronic device, and adjusts an output voltage of the first electronic device, to switch the first electronic device to a power supply device.

In the foregoing provided power role switching method, in a charging process in which both the two electronic devices are dual-role devices, the power role can be accurately switched based on the first operation detected on the first electronic device, to improve user experience.

The first operation may be a switching operation, and the first instruction may be a switching instruction.

For example, that the first electronic device sends the first instruction to the second electronic device includes:
the first electronic device determines whether the first electronic device meets a switching condition; and
the first electronic device sends the first instruction to the second electronic device when the first electronic device meets the switching condition.

In the power role switching method provided in this implementation, whether to switch the power role can be determined based on whether the first electronic device meets the switching condition, to improve accuracy of switching the power role.

In an example, the method further includes:
the first electronic device receives a second instruction, where the second instruction is used to consent to switch the power role, and the second instruction is sent by the second electronic device to the first electronic device after the second electronic device receives the first instruction.

The second instruction may be a consent instruction for consenting to switch the power role.

Optionally, that the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device includes:
after receiving the second instruction, the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device.

In another example, after the first electronic device receives the second instruction, the method further includes:
the first electronic device sends a third instruction to the second electronic device, where the third instruction is used to confirm that the second instruction is received.

The third instruction may be an ACK for confirming that the consent instruction is received.

Optionally, that the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device includes:
after second preset duration of sending the third instruction, the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device.

In a possible implementation, after the first electronic device adjusts the first signal line to be the signal line for the first electronic device to send the data to the second electronic device, and adjusts the second signal line to be the signal line for the first electronic device to receive the data sent by the second electronic device, the method further includes:
the first electronic device detects a level on the second signal line; and
when detecting a high level on the second signal line within third preset duration, the first electronic device determines that a handshake between the first electronic device and the second electronic device succeeds; or
when detecting no high level on the second signal line within the third preset duration, the first electronic device determines that the handshake between the first electronic device and the second electronic device fails, and restarts a charging protocol handshake.

Optionally, that the first electronic device adjusts the output voltage of the first electronic device includes:
the first electronic device adjusts the output voltage of the first electronic device after fourth preset duration of determining that the handshake between the first electronic device and the second electronic device succeeds.

In the power role switching method provided in this implementation, after the fourth preset duration of determining that the handshake between the first electronic device and the second electronic device succeeds, the output voltage of the first electronic device can be adjusted, to electrify a VBUS, so as to avoid a power supply conflict on the VBUS, so as to improve user experience.

For example, that the first electronic device adjusts the first signal line to be the signal line for the first electronic device to send the data to the second electronic device, and adjusts the second signal line to be the signal line for the first electronic device to receive the data sent by the second electronic device includes:
the first electronic device sets the first signal line to a pull-up state, and sets the second signal line to a high resistive state.

In a possible implementation, the first electronic device is further connected to the second electronic device through a CC signal line.

After the first electronic device receives the first operation, the method further includes:
the first electronic device adjusts a level status of the CC signal line in the first electronic device based on the first operation.

Optionally, that the first electronic device adjusts the output voltage of the first electronic device includes:
the first electronic device adjusts the output voltage of the first electronic device based on the level status of the CC signal line in the first electronic device.

For example, that the first electronic device adjusts the output voltage of the first electronic device includes:
the first electronic device adjusts the output voltage of the first electronic device to a first preset value.

According to a second aspect, an embodiment of this application provides a power role switching apparatus, used in a first electronic device. Initially, the first electronic device is a charged device, and is configured to receive electric energy provided by a second electronic device. The first electronic device and the second electronic device each have a function of being charged and a power supply function. The first electronic device is connected to the second electronic device through a first signal line and a second signal line. The first signal line is a signal line for the first electronic device to receive data sent by the second electronic device. The second signal line is a signal line for the first electronic device to send data to the second electronic device. The apparatus includes:
an input module, configured to receive a first operation, where the first operation is used to switch a power role in a charging process;
a sending module, configured to send a first instruction to the second electronic device based on the first operation, where the first instruction indicates the second electronic device to switch to a charged device; and
an adjustment module, configured to: based on the first operation, adjust the first signal line to be the signal line for the first electronic device to send the data to the second electronic device, adjust the second signal line to be the signal line for the first electronic device to receive the data sent by the second electronic device, and adjust an output voltage of the first electronic device, to switch the first electronic device to a power supply device.

For example, the sending module is further configured to: determine whether the first electronic device meets a switching condition; and when the first electronic device meets the switching condition, send the first instruction to the second electronic device.

In an example, the apparatus further includes:
a receiving module, configured to receive a second instruction, where the second instruction is used to consent to switch the power role, and the second instruction is sent by the second electronic device to the first electronic device after the second electronic device receives the first instruction.

Optionally, the adjustment module is further configured to: after the second instruction is received, adjust the first signal line to be the signal line for the first electronic device to send the data to the second electronic device, adjust the second signal line to be the signal line for the first electronic device to receive the data sent by the second electronic device, and adjust the output voltage of the first electronic device.

In another example, the sending module is further configured to send a third instruction to the second electronic device, where the third instruction is used to confirm that the second instruction is received.

Optionally, the adjustment module is further configured to: after second preset duration of sending the third instruction, adjust the first signal line to be the signal line for the first electronic device to send the data to the second electronic device, adjust the second signal line to be the signal line for the first electronic device to receive the data sent by the second electronic device, and adjust the output voltage of the first electronic device.

In a possible implementation, the apparatus further includes:
a detection module, configured to: detect a level on the second signal line; and when detecting a high level on the second signal line within third preset duration, determine that a handshake between the first electronic device and the second electronic device succeeds; or when detecting no high level on the second signal line within the third preset duration, determine that the handshake between the first electronic device and the second electronic device fails, and restart a charging protocol handshake.

Optionally, the adjustment module is further configured to adjust the output voltage of the first electronic device after fourth preset duration of determining that the handshake between the first electronic device and the second electronic device succeeds.

For example, the adjustment module is further configured to: set the first signal line to a pull-up state, and set the second signal line to a high resistive state.

In a possible implementation, the first electronic device is further connected to the second electronic device through a CC signal line.

The adjustment module is further configured to adjust a level status of the CC signal line in the first electronic device based on the first operation.

Optionally, the adjustment module is further configured to adjust the output voltage of the first electronic device based on the level status of the CC signal line in the first electronic device.

For example, the adjustment module is further configured to adjust the output voltage of the first electronic device to a first preset value.

According to a third aspect, an embodiment of this application provides a power role switching method, applied to a second electronic device. Initially, the second electronic device is a power supply device, and is configured to provide electric energy for a first electronic device. The first electronic device and the second electronic device each have a function of being charged and a power supply function. The second electronic device is connected to the first electronic device through a first signal line and a second signal line. The first signal line is a signal line for the second electronic device to send data to the first electronic device. The second signal line is a signal line for the second electronic device to receive data sent by the first electronic device. The method includes:
the second electronic device receives a first instruction, where the first instruction indicates the second electronic device to switch to a charged device, the first instruction is sent by the first electronic device to the second electronic device when the first electronic device receives a first operation, and the first operation is used to switch a power role in a charging process; and
according to the first instruction, the second electronic device adjusts an output voltage of the second electronic device, adjusts the first signal line to be the signal line for the second electronic device to receive the data sent by the first electronic device, and adjusts the second signal line to be the signal line for the second electronic device to send the data to the first electronic device, to switch the second electronic device to the charged device.

In an example, after the second electronic device receives the first instruction, the method further includes:
the second electronic device sends a second instruction to the first electronic device after receiving the first instruction, where the second instruction is used to consent to switch the power role.

Optionally, according to the first instruction, that the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device includes:
after sending the second instruction, the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device.

In another example, after the second electronic device sends the second instruction to the first electronic device, the method further includes:
the second electronic device receives a third instruction, where the third instruction is sent by the first electronic device to the second electronic device after the first electronic device receives the second instruction, and the third instruction is used to confirm that the second instruction is received.

Optionally, according to the first instruction, that the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device includes:
after first preset duration of receiving the third instruction, the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device.

For example, that the second electronic device adjusts the first signal line to be the signal line for the second electronic device to receive the data sent by the first electronic device, and adjusts the second signal line to be the signal line for the second electronic device to send the data to the first electronic device includes:
the second electronic device sets the first signal line to a high resistive state, and sets the second signal line to a pull-up state.

For example, that the second electronic device adjusts the output voltage of the second electronic device includes:
the second electronic device adjusts the output voltage of the second electronic device to a second preset value.

In an example, after the second electronic device adjusts the first signal line to be the signal line for the second electronic device to receive the data sent by the first electronic device, and adjusts the second signal line to be the signal line for the second electronic device to send the data to the first electronic device, the method further includes:
the second electronic device detects a level on the first signal line; and
when detecting a high level on the first signal line within third preset duration, the second electronic device determines that a handshake between the second electronic device and the first electronic device succeeds; or
when detecting no high level on the first signal line within the third preset duration, the second electronic device determines that the handshake between the second electronic device and the first electronic device fails, and restarts a charging protocol handshake.

In a possible implementation, the first electronic device is further connected to the second electronic device through a VBUS power line.

The method further includes:
after determining that the handshake between the second electronic device and the first electronic device succeeds, the second electronic device detects whether a voltage on the VBUS power line meets a preset condition, where the preset condition is determined based on the second preset value; and
when detecting within fifth preset duration that the voltage on the VBUS power line meets the preset condition, the second electronic device receives, according to a charging protocol, electric energy provided by the first electronic device; or
the second electronic device restarts the charging protocol handshake when not detecting, within the fifth preset duration, that the voltage on the VBUS meets the preset condition.

In another possible implementation, the second electronic device is further connected to the first electronic device through a CC signal line.

The method further includes:
the second electronic device adjusts a level status of the CC signal line in the second electronic device according to the first instruction.

Optionally, that the second electronic device adjusts the output voltage of the second electronic device includes:
the second electronic device adjusts the output voltage of the second electronic device based on the level status of the CC signal line in the second electronic device.

According to a fourth aspect, an embodiment of this application provides a power role switching apparatus, used in a second electronic device. Initially, the second electronic device is a power supply device, and is configured to provide electric energy for a first electronic device. The first electronic device and the second electronic device each have a function of being charged and a power supply function. The second electronic device is connected to the first electronic device through a first signal line and a second signal line. The first signal line is a signal line for the second electronic device to send data to the first electronic device. The second signal line is a signal line for the second electronic device to receive data sent by the first electronic device. The apparatus includes:
a receiving module, configured to receive a first instruction, where the first instruction indicates the second electronic device to switch to a charged device, the first instruction is sent by the first electronic device to the second electronic device when the first electronic device receives a first operation, and the first operation is used to switch a power role in a charging process; and
an adjustment module, configured to: according to the first instruction, adjust an output voltage of the second electronic device, adjust the first signal line to be the signal line for the second electronic device to receive the data sent by the first electronic device, and adjust the second signal line to be the signal line for the second electronic device to send the data to the first electronic device, to switch the second electronic device to the charged device.

In an example, the apparatus further includes:
a sending module, configured to send a second instruction to the first electronic device after the first instruction is received, where the second instruction is used to consent to switch the power role.

Optionally, the adjustment module is further configured to: after the second instruction is sent, adjust the output voltage of the second electronic device, adjust the first signal line to be the signal line for the second electronic device to receive the data sent by the first electronic device, and adjust the second signal line to be the signal line for the second electronic device to send the data to the first electronic device.

In another example, the receiving module is further configured to receive a third instruction, where the third instruction is sent by the first electronic device to the second electronic device after the first electronic device receives the second instruction, and the third instruction is used to confirm that the second instruction is received.

Optionally, the adjustment module is further configured to: after first preset duration of receiving the third instruction, adjust the output voltage of the second electronic device, adjust the first signal line to be the signal line for the second electronic device to receive the data sent by the first electronic device, and adjust the second signal line to be the signal line for the second electronic device to send the data to the first electronic device.

For example, the adjustment module is further configured to: set the first signal line to a high resistive state, and set the second signal line to a pull-up state.

For example, the adjustment module is further configured to adjust the output voltage of the second electronic device to a second preset value.

In an example, the apparatus further includes:
a first detection module, configured to: detect a level on the first signal line; and when detecting a high level on the first signal line within third preset duration, determine that a handshake between the second electronic device and the first electronic device succeeds; or when detecting no high level on the first signal line within the third preset duration, determine that the handshake between the second electronic device and the first electronic device fails, and restart a charging protocol handshake.

In a possible implementation, the first electronic device is further connected to the second electronic device through a VBUS power line.

The apparatus further includes:
a second detection module, configured to: after it is determined that the handshake between the second electronic device and the first electronic device succeeds, detect whether a voltage on the VBUS power line meets a preset condition, where the preset condition is determined based on the second preset value; and when detecting within fifth preset duration that the voltage on the VBUS power line meets the preset condition, receive, according to a charging protocol, electric energy provided by the first electronic device; or restart the charging protocol handshake when not detecting, within the fifth preset duration, that the voltage on the VBUS meets the preset condition.

In another possible implementation, the second electronic device is further connected to the first electronic device through a CC signal line.

The adjustment module is further configured to adjust a level status of the CC signal line in the second electronic device according to the first instruction.

Optionally, the adjustment module is further configured to adjust the output voltage of the second electronic device based on the level status of the CC signal line in the second electronic device.

According to a fifth aspect, an embodiment of this application provides a power role switching system. The system includes a first electronic device and a second electronic device. The first electronic device and the second electronic device each have a function of being charged and a power supply function. Initially, the first electronic device is a charged device, and the second electronic device is a power supply device. The first electronic device is connected to the second electronic device through a first signal line and a second signal line. The first signal line is a signal line for the first electronic device to receive data sent by the second electronic device. The second signal line is a signal line for the first electronic device to send data to the second electronic device.

The first electronic device is configured to perform steps in the power role switching method according to any one in the first aspect.

The second electronic device is configured to perform steps in the power role switching method according to any one in the third aspect.

According to a sixth aspect, an embodiment of this application provides a power role switching method, applied to a second electronic device. Initially, the second electronic device is a power supply device, and is configured to provide electric energy for a first electronic device. The first electronic device and the second electronic device each have a function of being charged and a power supply function. The second electronic device is connected to the first electronic device through a first signal line and a second signal line. The first signal line is a signal line for the second electronic device to send data to the first electronic device. The second signal line is a signal line for the second electronic device to receive data sent by the first electronic device. The method includes:
the second electronic device receives a first operation, where the first operation is used to switch a power role in a charging process;
based on the first operation, the second electronic device adjusts an output voltage of the second electronic device, adjusts the first signal line to be the signal line for the second electronic device to receive the data sent by the first electronic device, and adjusts the second signal line to be the signal line for the second electronic device to send the data to the first electronic device; and
the second electronic device sends a first instruction to the first electronic device based on the first operation, where the first instruction is used to switch the first electronic device to a power supply device.

In an example, the method further includes:
the second electronic device receives a second instruction, where the second instruction is used to consent to switch the power role, and the second instruction is sent by the first electronic device to the second electronic device when the first electronic device determines, after receiving the first instruction, that the first electronic device meets a switching condition.

Optionally, that the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device includes:
after receiving the second instruction, the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device.

In another example, after the second electronic device receives the second instruction, the method further includes:
the second electronic device sends a third instruction to the first electronic device, where the third instruction is used to confirm that the second instruction is received.

Optionally, that the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device includes:
after first preset duration of sending the third instruction, the second electronic device adjusts the output voltage of the second electronic device, adjusts the first signal line to be the signal line for the second electronic device to receive the data sent by the first electronic device, and adjusts the second signal line to be the signal line for the second electronic device to send the data to the first electronic device.

For example, that the second electronic device adjusts the first signal line to be the signal line for the second electronic device to receive the data sent by the first electronic device, and adjusts the second signal line to be the signal line for the second electronic device to send the data to the first electronic device includes:
the second electronic device sets the first signal line to a high resistive state, and sets the second signal line to a pull-up state.

For example, that the second electronic device adjusts the output voltage of the second electronic device includes:
the second electronic device adjusts the output voltage of the second electronic device to a second preset value.

In a possible implementation, after the second electronic device adjusts the first signal line to be the signal line for the second electronic device to receive the data sent by the first electronic device, and adjusts the second signal line to be the signal line for the second electronic device to send the data to the first electronic device, the method further includes:
the second electronic device detects a level on the first signal line; and
when detecting a high level on the first signal line within third preset duration, the second electronic device determines that a handshake between the second electronic device and the first electronic device succeeds; or
when detecting no high level on the first signal line within the third preset duration, the second electronic device determines that the handshake between the second electronic device and the first electronic device fails, and restarts a charging protocol handshake.

In another possible implementation, the first electronic device is further connected to the second electronic device through a VBUS power line.

The method further includes:
after determining that the handshake between the second electronic device and the first electronic device succeeds, the second electronic device detects whether a voltage on the VBUS power line meets a preset condition, where the preset condition is determined based on the second preset value; and
the second electronic device performs charging from the first electronic device according to a charging protocol when detecting within fifth preset duration that the voltage on the VBUS power line meets the preset condition; or
the second electronic device restarts the charging protocol handshake when not detecting, within the fifth preset duration, that the power on the VBUS power line meets the preset condition.

In a possible implementation, the second electronic device is further connected to the first electronic device through a CC signal line.

After the second electronic device receives the first operation, the method further includes:
the second electronic device switches a level status of the CC signal line in the second electronic device based on the first operation.

Optionally, that the second electronic device adjusts the output voltage of the second electronic device includes:
the second electronic device adjusts the output voltage of the second electronic device based on the level status of the CC signal line in the second electronic device.

According to a seventh aspect, an embodiment of this application provides a power role switching apparatus, used in a second electronic device. Initially, the second electronic device is a power supply device, and is configured to provide electric energy for a first electronic device. The first electronic device and the second electronic device each have a function of being charged and a power supply function. The second electronic device is connected to the first electronic device through a first signal line and a second signal line. The first signal line is a signal line for the second electronic device to send data to the first electronic device. The second signal line is a signal line for the second electronic device to receive data sent by the first electronic device. The apparatus includes:
an input module, configured to receive a first operation, where the first operation is used to switch a power role in a charging process;
an adjustment module, configured to: based on the first operation, adjust an output voltage of the second electronic device, adjust the first signal line to be the signal line for the second electronic device to receive the data sent by the first electronic device, and adjust the second signal line to be the signal line for the second electronic device to send the data to the first electronic device; and
a sending module, configured to send a first instruction to the first electronic device based on the first operation, where the first instruction is used to switch the first electronic device to a power supply device.

In an example, the apparatus further includes:
a receiving module, configured to receive a second instruction, where the second instruction is used to consent to switch the power role, and the second instruction is sent by the first electronic device to the second electronic device when the first electronic device determines, after receiving the first instruction, that the first electronic device meets a switching condition.

Optionally, the adjustment module is further used, after the second instruction is received, by the second electronic device to adjust the output voltage of the second electronic device, adjust the first signal line to be the signal line for the second electronic device to receive the data sent by the first electronic device, and adjust the second signal line to be the signal line for the second electronic device to send the data to the first electronic device.

In another example, the sending module is further configured to send a third instruction to the first electronic device, where the third instruction is used to confirm that the second instruction is received.

Optionally, the adjustment module is further configured to: after first preset duration of sending the third instruction, adjust the output voltage of the second electronic device, adjust the first signal line to be the signal line for the second electronic device to receive the data sent by the first electronic device, and adjust the second signal line to be the signal line for the second electronic device to send the data to the first electronic device.

For example, the adjustment module is further configured to: set the first signal line to a high resistive state, and set the second signal line to a pull-up state.

For example, the adjustment module is further configured to adjust the output voltage of the second electronic device to a second preset value.

In a possible implementation, the apparatus further includes:
a first detection module, configured to: detect a level on the first signal line; and when detecting a high level on the first signal line within third preset duration, determine that a handshake between the second electronic device and the first electronic device succeeds; or when detecting no high level on the first signal line within the third preset duration, determine that the handshake between the second electronic device and the first electronic device fails, and restart a charging protocol handshake.

In another possible implementation, the first electronic device is further connected to the second electronic device through a VBUS power line.

The apparatus further includes:
a second detection module, configured to: after it is determined that the handshake between the second electronic device and the first electronic device succeeds, detect whether a voltage on the VBUS power line meets a preset condition, where the preset condition is determined based on the second preset value; and when detecting within fifth preset duration that the voltage on the VBUS power line meets the preset condition, perform charging from the first electronic device according to a charging protocol; or restart the charging protocol handshake when not detecting, within the fifth preset duration, that the power on the VBUS power line meets the preset condition.

In a possible implementation, the second electronic device is further connected to the first electronic device through a CC signal line.

The adjustment module is further configured to switch a level status of the CC signal line in the second electronic device based on the first operation.

Optionally, the adjustment module is further configured to adjust the output voltage of the second electronic device based on the level status of the CC signal line in the second electronic device.

According to an eighth aspect, an embodiment of this application provides a power role switching method, applied to a first electronic device. Initially, the first electronic device is a charged device, and is configured to receive electric energy provided by a second electronic device. The first electronic device and the second electronic device each have a function of being charged and a power supply function. The first electronic device is connected to the second electronic device through a first signal line and a second signal line. The first signal line is a signal line for the first electronic device to receive data sent by the second electronic device. The second signal line is a signal line for the first electronic device to send data to the second electronic device. The method includes:
the first electronic device receives a first instruction, where the first instruction indicates the first electronic device to switch to a power supply device, the first instruction is sent by the second electronic device to the first electronic device after the second electronic device receives a first operation, and the first operation is used to switch a power role in a charging process; and
according to the first instruction, the first electronic device adjusts the first signal line to be the signal line for the first electronic device to send the data to the second electronic device, adjusts the second signal line to be the signal line for the first electronic device to receive the data sent by the second electronic device, and adjusts an output voltage of the first electronic device, to switch the first electronic device to the power supply device.

In an example, after the first electronic device receives the first instruction, the method further includes:
the first electronic device determines whether the first electronic device meets a switching condition; and
the first electronic device sends a second instruction to the second electronic device when the first electronic device meets the switching condition, where the second instruction is used to consent to switch the power role.

Optionally, according to the first instruction, that the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device includes:
after sending the second instruction, the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device.

In an example, after the first electronic device sends the second instruction to the second electronic device, the method further includes:
the first electronic device receives a third instruction, where the third instruction is sent by the second electronic device to the first electronic device after the second electronic device receives the second instruction, and the third instruction is used to confirm that the second instruction is received.

Optionally, according to the first instruction, that the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device includes:
after second preset duration of receiving the third instruction, the first electronic device adjusts the first signal line to be the signal line for the first electronic device to send the data to the second electronic device, adjusts the second signal line to be the signal line for the first electronic device to receive the data sent by the second electronic device, and adjusts the output voltage of the first electronic device.

In an example, after the first electronic device adjusts the first signal line to be the signal line for the first electronic device to send the data to the second electronic device, and adjusts the second signal line to be the signal line for the first electronic device to receive the data sent by the second electronic device, the method further includes:
the first electronic device detects a level on the second signal line; and
when detecting a high level on the second signal line within third preset duration, the first electronic device determines that a handshake between the first electronic device and the second electronic device succeeds; or
when detecting no high level on the second signal line within the third preset duration, the first electronic device determines that the handshake between the first electronic device and the second electronic device fails, and restarts a charging protocol handshake.

Optionally, that the first electronic device adjusts the output voltage of the first electronic device includes:
the first electronic device adjusts the output voltage of the first electronic device after the third preset duration of determining that the handshake between the first electronic device and the second electronic device succeeds.

For example, that the first electronic device adjusts the first signal line to be the signal line for the first electronic device to send the data to the second electronic device, and adjusts the second signal line to be the signal line for the first electronic device to receive the data sent by the second electronic device includes:
the first electronic device sets the first signal line to a pull-up state, and sets the second signal line to a high resistive state.

In a possible implementation, the first electronic device is further connected to the second electronic device through a CC signal line.

The method further includes:
the first electronic device adjusts a level status of the CC signal line in the first electronic device according to the first instruction.

Optionally, that the first electronic device adjusts the output voltage of the first electronic device includes:
the first electronic device adjusts the output voltage of the first electronic device based on the level status of the CC signal line in the first electronic device.

For example, that the first electronic device adjusts the output voltage of the first electronic device includes:
the first electronic device adjusts the output voltage of the first electronic device to a first preset value.

According to a ninth aspect, an embodiment of this application provides a power role switching apparatus, used in a first electronic device. Initially, the first electronic device is a charged device, and is configured to receive electric energy provided by a second electronic device. The first electronic device and the second electronic device each have a function of being charged and a power supply function. The first electronic device is connected to the second electronic device through a first signal line and a second signal line. The first signal line is a signal line for the first electronic device to receive data sent by the second electronic device. The second signal line is a signal line for the first electronic device to send data to the second electronic device. The apparatus includes:
a receiving module, configured to receive a first instruction, where the first instruction indicates the first electronic device to switch to a power supply device, the first instruction is sent by the second electronic device to the first electronic device after the second electronic device receives a first operation, and the first operation is used to switch a power role in a charging process; and
an adjustment module, configured to: according to the first instruction, adjust the first signal line to be the signal line for the first electronic device to send the data to the second electronic device, adjust the second signal line to be the signal line for the first electronic device to receive the data sent by the second electronic device, and adjust an output voltage of the first electronic device, to switch the first electronic device to the power supply device.

In an example, the apparatus further includes:
a sending module, configured to: determine whether the first electronic device meets a switching condition; and send a second instruction to the second electronic device when the first electronic device meets the switching condition, where the second instruction is used to consent to switch the power role.

Optionally, the adjustment module is further configured to: after the second instruction is sent, adjust the first signal line to be the signal line for the first electronic device to send the data to the second electronic device, adjust the second signal line to be the signal line for the first electronic device to receive the data sent by the second electronic device, and adjust the output voltage of the first electronic device.

In an example, the receiving module is further configured to receive a third instruction, where the third instruction is sent by the second electronic device to the first electronic device after the second electronic device receives the second instruction, and the third instruction is used to confirm that the second instruction is received.

Optionally, the adjustment module is further configured to: after second preset duration of receiving the third instruction, adjust the first signal line to be the signal line for the first electronic device to send the data to the second electronic device, adjust the second signal line to be the signal line for the first electronic device to receive the data sent by the second electronic device, and adjust the output voltage of the first electronic device.

In an example, the apparatus further includes:
a detection module, configured to: detect a level on the second signal line; and when detecting a high level on the second signal line within third preset duration, determine that a handshake between the first electronic device and the second electronic device succeeds; or when detecting no high level on the second signal line within the third preset duration, determine that the handshake between the first electronic device and the second electronic device fails, and restart a charging protocol handshake.

Optionally, the adjustment module is further configured to adjust the output voltage of the first electronic device after the third preset duration of determining that the handshake between the first electronic device and the second electronic device succeeds.

For example, the adjustment module is further configured to: set the first signal line to a pull-up state, and set the second signal line to a high resistive state.

In a possible implementation, the first electronic device is further connected to the second electronic device through a CC signal line.

The adjustment module is further configured to adjust a level status of the CC signal line in the first electronic device according to the first instruction.

Optionally, the adjustment module is further configured to adjust the output voltage of the first electronic device based on the level status of the CC signal line in the first electronic device.

For example, the adjustment module is further configured to adjust the output voltage of the first electronic device to a first preset value.

According to a tenth aspect, an embodiment of this application provides a power role switching system. The system includes a first electronic device and a second electronic device. The first electronic device and the second electronic device each have a function of being charged and a power supply function. Initially, the first electronic device is a charged device, and the second electronic device is a power supply device. The first electronic device is connected to the second electronic device through a first signal line and a second signal line. The first signal line is a signal line for the second electronic device to send data to the first electronic device. The second signal line is a signal line for the second electronic device to receive data sent by the first electronic device.

The second electronic device is configured to perform steps in the power role switching method according to any one in the sixth aspect.

The first electronic device is configured to perform steps in the power role switching method according to any one in the eighth aspect.

According to an eleventh aspect, an embodiment of this application provides a first electronic device. Initially, the first electronic device is a charged device, and is configured to receive electric energy provided by a second electronic device. The first electronic device and the second electronic device each have a function of being charged and a power supply function. The first electronic device is connected to the second electronic device through a first signal line and a second signal line. The first signal line is a signal line for the first electronic device to receive data sent by the second electronic device. The second signal line is a signal line for the first electronic device to send data to the second electronic device.

The first electronic device includes a system on chip, a protocol module, a power management module, and an input module.

The input module is configured to: receive a first operation, and send first information of the first operation to the system on chip, where the first operation is used to switch a power role in a charging process.

The system on chip is configured to indicate, based on the first information of the first operation, the protocol module to send a first instruction to the second electronic device, where the first instruction indicates the second electronic device to switch to a charged device.

The protocol module is configured to: adjust the first signal line to be the signal line for the first electronic device to send the data to the second electronic device, and adjust the second signal line to be the signal line for the first electronic device to receive the data sent by the second electronic device.

The system on chip is further configured to indicate the power management module to adjust an output voltage of the first electronic device.

For example, the system on chip is further configured to: determine whether the first electronic device meets a switching condition; and when the first electronic device meets the switching condition, indicate the protocol module to send the first instruction to the second electronic device.

In an example, the protocol module further receives a second instruction. The second instruction is used to consent to switch the power role. The second instruction is sent by the second electronic device to the first electronic device after the second electronic device receives the first instruction.

Optionally, the protocol module is further configured to: after receiving the second instruction, adjust the first signal line to be the signal line for the first electronic device to send the data to the second electronic device, and adjust the second signal line to be the signal line for the first electronic device to receive the data sent by the second electronic device.

Alternatively, the system on chip is further configured to: after the second instruction is received, indicate the protocol module to adjust the first signal line to be the signal line for the first electronic device to send the data to the second electronic device, and adjust the second signal line to be the signal line for the first electronic device to receive the data sent by the second electronic device.

The system on chip is further configured to indicate the power management module to adjust the output voltage of the first electronic device.

In another example, the protocol module is further configured to send a third instruction to the second electronic device, where the third instruction is used to confirm that the second instruction is received.

Alternatively, the system on chip is further configured to indicate the protocol module to send a third instruction to the second electronic device, where the third instruction is used to confirm that the second instruction is received.

Optionally, the protocol module is further configured to: after second preset duration of sending the third instruction, adjust the first signal line to be the signal line for the first electronic device to send the data to the second electronic device, adjust the second signal line to be the signal line for the first electronic device to receive the data sent by the second electronic device, and adjust the output voltage of the first electronic device.

Alternatively, in a possible implementation, the protocol module is further configured to: detect a level on the second signal line; and when detecting a high level on the second signal line within third preset duration, determine that a handshake between the first electronic device and the second electronic device succeeds; or when detecting no high level on the second signal line within the third preset duration, determine that the handshake between the first electronic device and the second electronic device fails, and restart a charging protocol handshake.

Optionally, the system on chip is further configured to: after fourth preset duration of determining that the handshake between the first electronic device and the second electronic device succeeds, indicate the power management module to adjust the output voltage of the first electronic device.

For example, the protocol module is further configured to: set the first signal line to a pull-up state, and set the second signal line to a high resistive state.

In a possible implementation, the first electronic device is further connected to the second electronic device through a CC signal line.

The protocol module is further configured to adjust a level status of the CC signal line in the first electronic device based on the first operation.

Optionally, the system on chip is further configured to indicate, based on the level status of the CC signal line in the first electronic device, the power management module to adjust the output voltage of the first electronic device.

For example, the system on chip is further configured to indicate the power management module to adjust the output voltage of the first electronic device to a first preset value.

According to a twelfth aspect, an embodiment of this application provides a second electronic device. Initially, the second electronic device is a power supply device, and is configured to provide electric energy for a first electronic device. The first electronic device and the second electronic device each have a function of being charged and a power supply function. The second electronic device is connected to the first electronic device through a first signal line and a second signal line. The first signal line is a signal line for the second electronic device to send data to the first electronic device. The second signal line is a signal line for the second electronic device to receive data sent by the first electronic device.

The second electronic device includes a system on chip, a protocol module, and a power management module.

The protocol module is configured to: receive a first instruction, and send the first instruction to the system on chip, where the first instruction indicates the second electronic device to switch to a charged device, the first instruction is sent by the first electronic device to the second electronic device when the first electronic device receives a first operation, and the first operation is used to switch a power role in a charging process.

The system on chip is configured to indicate, according to the first instruction, the power management module to adjust an output voltage of the second electronic device.

The protocol module is further configured to: according to the first instruction, adjust the first signal line to be the signal line for the second electronic device to receive the data sent by the first electronic device, and adjust the second signal line to be the signal line for the second electronic device to send the data to the first electronic device.

In an example, the protocol module is further configured to send a second instruction to the first electronic device after receiving the first instruction, where the second instruction is used to consent to switch the power role.

Optionally, the system on chip is further configured to: after the second instruction is sent, indicate the power management module to adjust the output voltage of the second electronic device, and indicate the protocol module to adjust the first signal line to be the signal line for the second electronic device to receive the data sent by the first electronic device, and adjust the second signal line to be the signal line for the second electronic device to send the data to the first electronic device.

Alternatively, the protocol module is further configured to: after sending the second instruction, adjust the first signal line to be the signal line for the second electronic device to receive the data sent by the first electronic device, and adjust the second signal line to be the signal line for the second electronic device to send the data to the first electronic device.

In another example, the protocol module is further configured to receive a third instruction, where the third instruction is sent by the first electronic device to the second electronic device after the first electronic device receives the second instruction, and the third instruction is used to confirm that the second instruction is received.

Optionally, the system on chip is further configured to: after first preset duration of receiving the third instruction, indicate the power management module to adjust the output voltage of the second electronic device, and indicate the protocol module to adjust the first signal line to be the signal line for the second electronic device to receive the data sent by the first electronic device, and adjust the second signal line to be the signal line for the second electronic device to send the data to the first electronic device.

Alternatively, the protocol module is further configured to: after first preset duration of receiving the third instruction, adjust the first signal line to be the signal line for the second electronic device to receive the data sent by the first electronic device, and adjust the second signal line to be the signal line for the second electronic device to send the data to the first electronic device.

For example, the protocol module is further configured to: set the first signal line to a high resistive state, and set the second signal line to a pull-up state.

For example, the system on chip is further configured to indicate the power management module to adjust the output voltage of the second electronic device to a second preset value.

In an example, the protocol module is further configured to: detect a level on the first signal line; and when detecting a high level on the first signal line within third preset duration, determine that a handshake between the second electronic device and the first electronic device succeeds; or when detecting no high level on the first signal line within the third preset duration, determine that the handshake between the second electronic device and the first electronic device fails, and restart a charging protocol handshake.

In a possible implementation, the first electronic device is further connected to the second electronic device through a VBUS power line.

The system on chip is further configured to: after it is determined that the handshake between the second electronic device and the first electronic device succeeds, indicate the power management module to detect whether a voltage on the VBUS power line meets a preset condition, where the preset condition is determined based on the second preset value. When it is detected within fifth preset duration that the voltage on the VBUS power line meets the preset condition, the system on chip is further configured to indicate the protocol module to receive, according to a charging protocol, electric energy provided by the first electronic device. When it is not detected within the fifth preset duration that the voltage on the VBUS meets the preset condition, the system on chip is further configured to indicate the protocol module to restart the charging protocol handshake.

In another possible implementation, the second electronic device is further connected to the first electronic device through a CC signal line.

The protocol module is further configured to adjust a level status of the CC signal line in the second electronic device according to the first instruction.

Optionally, the system on chip is further configured to indicate, based on the level status of the CC signal line in the second electronic device, the power management module to adjust the output voltage of the second electronic device.

According to a thirteenth aspect, an embodiment of this application provides a second electronic device. Initially, the second electronic device is a power supply device, and is configured to provide electric energy for a first electronic device. The first electronic device and the second electronic device each have a function of being charged and a power supply function. The second electronic device is connected to the first electronic device through a first signal line and a second signal line. The first signal line is a signal line for the second electronic device to send data to the first electronic device. The second signal line is a signal line for the second electronic device to receive data sent by the first electronic device.

The second electronic device includes a system on chip, a protocol module, a power management module, and an input module.

The input module is configured to: receive a first operation, and send first information of the first operation to the system on chip, where the first operation is used to switch a power role in a charging process.

The system on chip is configured to indicate, based on the first information of the first operation, the power management module to adjust an output voltage of the second electronic device.

The protocol module is configured to: adjust the first signal line to be the signal line for the second electronic device to receive the data sent by the first electronic device, and adjust the second signal line to be the signal line for the second electronic device to send the data to the first electronic device.

The system on chip is further configured to indicate, based on the first information of the first operation, the protocol module to send a first instruction to the first electronic device, where the first instruction is used to switch the first electronic device to a power supply device.

In an example, the protocol module is further configured to receive a second instruction, where the second instruction is used to consent to switch the power role, and the second instruction is sent by the first electronic device to the second electronic device when the first electronic device determines, after receiving the first instruction, that the first electronic device meets a switching condition.

Optionally, the system on chip is further configured to: after the second instruction is received, indicate the power management module to adjust the output voltage of the second electronic device, and indicate the protocol module to adjust the first signal line to be the signal line for the second electronic device to receive the data sent by the first electronic device, and adjust the second signal line to be the signal line for the second electronic device to send the data to the first electronic device.

In another example, the protocol module is further configured to send a third instruction to the first electronic device, where the third instruction is used to confirm that the second instruction is received.

Optionally, the system on chip is further configured to: after first preset duration of sending the third instruction, indicate the power management module to adjust the output voltage of the second electronic device and adjust the first signal line to be the signal line for the second electronic device to receive the data sent by the first electronic device, and indicate the protocol module to adjust the second signal line to be the signal line for the second electronic device to send the data to the first electronic device.

For example, the protocol module is further configured to: set the first signal line to a high resistive state, and set the second signal line to a pull-up state.

For example, the system on chip is further configured to adjust the output voltage of the second electronic device to a second preset value.

In a possible implementation, the protocol module is further configured to: detect a level on the first signal line; and when detecting a high level on the first signal line within third preset duration, determine that a handshake between the second electronic device and the first electronic device succeeds; or when detecting no high level on the first signal line within the third preset duration, determine that the handshake between the second electronic device and the first electronic device fails, and restart a charging protocol handshake.

In another possible implementation, the first electronic device is further connected to the second electronic device through a VBUS power line.

The system on chip is further configured to: after it is determined that the handshake between the second electronic device and the first electronic device succeeds, indicate the power management module to detect whether a voltage on the VBUS power line meets a preset condition, where the preset condition is determined based on the second preset value. When it is detected within fifth preset duration that the voltage on the VBUS power line meets the preset condition, the system on chip is further configured to indicate the protocol module to perform charging from the first electronic device according to a charging protocol. When it is not detected within the fifth preset duration that the power on the VBUS power line meets the preset condition, the system on chip is further configured to indicate the protocol module to restart the charging protocol handshake.

In a possible implementation, the second electronic device is further connected to the first electronic device through a CC signal line.

The protocol module is further configured to switch a level status of the CC signal line in the second electronic device based on the first operation.

Optionally, the system on chip is further configured to indicate, based on the level status of the CC signal line in the second electronic device, the power management module to adjust the output voltage of the second electronic device.

According to a fourteenth aspect, an embodiment of this application provides a first electronic device. Initially, the first electronic device is a charged device, and is configured to receive electric energy provided by a second electronic device. The first electronic device and the second electronic device each have a function of being charged and a power supply function. The first electronic device is connected to the second electronic device through a first signal line and a second signal line. The first signal line is a signal line for the first electronic device to receive data sent by the second electronic device. The second signal line is a signal line for the first electronic device to send data to the second electronic device.

The first electronic device includes a system on chip, a protocol module, and a power management module.

The protocol module is configured to: receive a first instruction, and send the first instruction to the system on chip, where the first instruction indicates the first electronic device to switch to a power supply device, the first instruction is sent by the second electronic device to the first electronic device after the second electronic device receives a first operation, and the first operation is used to switch a power role in a charging process.

The protocol module is further configured to: according to the first instruction, adjust the first signal line to be the signal line for the first electronic device to send the data to the second electronic device, and adjust the second signal line to be the signal line for the first electronic device to receive the data sent by the second electronic device.

The system on chip is further configured to indicate, according to the first instruction, the power management module to adjust an output voltage of the first electronic device.

In an example, the system on chip is further configured to: determine whether the first electronic device meets a switching condition; and when the first electronic device meets the switching condition, indicate the protocol module to send a second instruction to the second electronic device, where the second instruction is used to consent to switch the power role.

Optionally, the system on chip is further configured to: after the second instruction is sent, indicate the protocol module to adjust the first signal line to be the signal line for the first electronic device to send the data to the second electronic device and adjust the second signal line to be the signal line for the first electronic device to receive the data sent by the second electronic device, and indicate the power management module to adjust the output voltage of the first electronic device.

In an example, the protocol module is further configured to receive a third instruction, where the third instruction is sent by the second electronic device to the first electronic device after the second electronic device receives the second instruction, and the third instruction is used to confirm that the second instruction is received.

Optionally, the protocol module is further configured to: after second preset duration of receiving the third instruction, adjust the first signal line to be the signal line for the first electronic device to send the data to the second electronic device, and adjust the second signal line to be the signal line for the first electronic device to receive the data sent by the second electronic device.

The system on chip is further configured to: after the second preset duration of receiving the third instruction, indicate the power management module to adjust the output voltage of the first electronic device.

In an example, the protocol module is further configured to: detect a level on the second signal line; and when detecting a high level on the second signal line within third preset duration, determine that a handshake between the first electronic device and the second electronic device succeeds; or when detecting no high level on the second signal line within the third preset duration, determine that the handshake between the first electronic device and the second electronic device fails, and restart a charging protocol handshake.

Optionally, the system on chip is further configured to: after third preset duration of determining that the handshake between the first electronic device and the second electronic device succeeds, indicate the power management module to adjust the output voltage of the first electronic device.

For example, the protocol module is further configured to: set the first signal line to a pull-up state, and set the second signal line to a high resistive state.

In a possible implementation, the first electronic device is further connected to the second electronic device through a CC signal line.

The protocol module is further configured to adjust a level status of the CC signal line in the first electronic device according to the first instruction.

Optionally, the system on chip is further configured to indicate, based on the level status of the CC signal line in the first electronic device, the power management module to adjust the output voltage of the first electronic device.

For example, the system on chip is further configured to indicate the power management module to adjust the output voltage of the first electronic device to a first preset value.

According to a fifteenth aspect, an embodiment of this application provides an electronic device, including a memory, a processor, and a computer program that is stored in the memory and that is capable of being run on the processor. When the processor executes the computer program, the electronic device is enabled to implement the power role switching method according to any one in the first aspect, the third aspect, the sixth aspect, or the eighth aspect.

According to a sixteenth aspect, an embodiment of this application provides a computer-readable storage medium. The computer-readable storage medium stores a computer program. When the computer program is executed by a computer, the computer is enabled to implement the power role switching method according to any one in the first aspect, the third aspect, the sixth aspect, or the eighth aspect.

According to a seventeenth aspect, an embodiment of this application provides a computer program product. When the computer program product runs on an electronic device, the electronic device is enabled to perform the power role switching method according to any one in the first aspect, the third aspect, the sixth aspect, or the eighth aspect.

### BRIEF DESCRIPTION OF DRAWINGS

FIG. 1 to FIG. 3 are diagrams of charging of dual-role devices;
FIG. 4 is a diagram of a structure of an electronic device according to an embodiment of this application;
FIG. 5 is a diagram of a software architecture of an electronic device according to an embodiment of this application;
FIG. 6 is a diagram 1 of a power role switching system according to an embodiment of this application;
FIG. 7(a) and FIG. 7(b) are a diagram 1 of an application scenario according to an embodiment of this application;
FIG. 8 is a diagram 2 of an application scenario according to an embodiment of this application;
FIG. 9A to FIG. 9C are a schematic flowchart 1 of a power role switching method according to an embodiment of this application;
FIG. 10(a) and FIG. 10(b) are a diagram of signal switching in power role switching according to an embodiment of this application;
FIG. 11 is a schematic flowchart 2 of a power role switching method according to an embodiment of this application;
FIG. 12 is a diagram 2 of a power role switching system according to an embodiment of this application;
FIG. 13A to FIG. 13C are a schematic flowchart of a power role switching method according to another embodiment of this application;
FIG. 14 is a diagram of signal switching in power role switching according to another embodiment of this application; and
FIG. 15A to FIG. 15C are a schematic flowchart of a power role switching method according to still another embodiment of this application.

### DESCRIPTION OF EMBODIMENTS

It should be understood that, when being used in the specification and the appended claims of this application, the term "include" indicates presence of described features, entireties, steps, operations, elements, and/or components, but does not exclude presence or addition of one or more other features, entireties, steps, operations, elements, components, and/or sets thereof.

It should be further understood that the term "and/or" used in the specification and the appended claims of this application means any combination and all possible combinations of one or more of associated enumerated items, and includes these combinations.

As being used in the specification and the appended claims of this application, the term "if" may be interpreted as "when", "once", "in response to determining", or "in response to detecting" depending on the context. Similarly, the phrase "if it is determined that" or "if (a described condition or event) is detected" may be interpreted as a meaning of "once it is determined that", "in response to determining", "once (the described condition or event) is detected", or "in response to detecting (the described condition or event)" depending on the context.

In addition, in descriptions of the specification and the appended claims of this application, the terms "first", "second", "third", and the like are merely intended for distinguishing the descriptions, but shall not be understood as an indication or an implication of relative importance.

Reference to "an embodiment", "some embodiments", or the like described in the specification of this application means that one or more embodiments of this application include a specific feature, structure, or characteristic described with reference to the embodiment. Therefore, the statements "in an embodiment", "in some embodiments", "in some other embodiments", "in other embodiments", and the like that appear in different places in this specification do not necessarily mean referring to a same embodiment. Instead, the statements mean "one or more but not all of embodiments", unless otherwise specifically emphasized in another manner. The terms "include", "contain", "have", and variants of the terms all mean "include but are not limited to", unless otherwise specifically emphasized in another manner.

In addition, "a plurality of" mentioned in embodiments of this application should be interpreted as two or more.

Steps in a power role switching method provided in embodiments of this application are merely examples. Not all the steps are mandatory, or not all content in each piece of information or each message is mandatory. The steps or the content may be added or reduced as required in a use process. A same step or steps or messages having a same function in embodiments of this application may be mutually referenced in different embodiments.

A service scenario described in embodiments of this application is intended to describe the technical solutions in embodiments of this application more clearly, and does not constitute a limitation on the technical solutions provided in embodiments of this application. Persons of ordinary skill in the art may learn that, with evolution of a network architecture and emergence of a new service scenario, the technical solutions provided in embodiments of this application are also applicable to similar technical problems.

With rapid development of electronic devices and charging technologies, electronic devices such as mobile phones, notebook computers, tablet computers, or smart large screens may be dual-role devices that have a function of being charged and a power supply function. To be specific, these dual-role devices may be used as power supply devices (namely, power roles) to provide electric energy for other electronic devices, and may also be used as charged devices to receive electric energy provided by power supply devices. This greatly improves user experience. In a charging process in which both two electronic devices are dual-role devices, how to switch a power role becomes an urgent problem to be resolved. For example, for a mobile phone A and a tablet computer B that have a function of being charged and a power supply function, in a process in which the mobile phone A charges the tablet computer B, when a user wants to switch a power role, to be specific, wants to switch to the tablet computer B to charge the mobile phone A, how to switch the power role from the mobile phone A to the tablet computer B becomes an urgent problem to be resolved.

It should be understood that the power supply device (which may also be referred to as a source) is a device that can provide electric energy. For example, the power supply device may be connected to the charged device through a charging cable, to provide the electric energy for the charged device.

The charged device (which may also be referred to as a sink) is a device that can receive the electric energy. For example, the charged device may be connected to the power supply device through the charging cable, to receive the electric energy provided by the power supply device.

Charging may mean that an electronic device is used as a charged device to receive electric energy provided by a power supply device. Power supply may mean that an electronic device is used as a power supply device to provide electric energy for a charged device. For example, for an electronic device A and an electronic device B, when the electronic device A is used as a charged device to receive electric energy provided by the electronic device B, a process in which the electronic device A receives the electric energy may be understood as charging, and a process in which the electronic device B provides the electric energy may be understood as power supply.

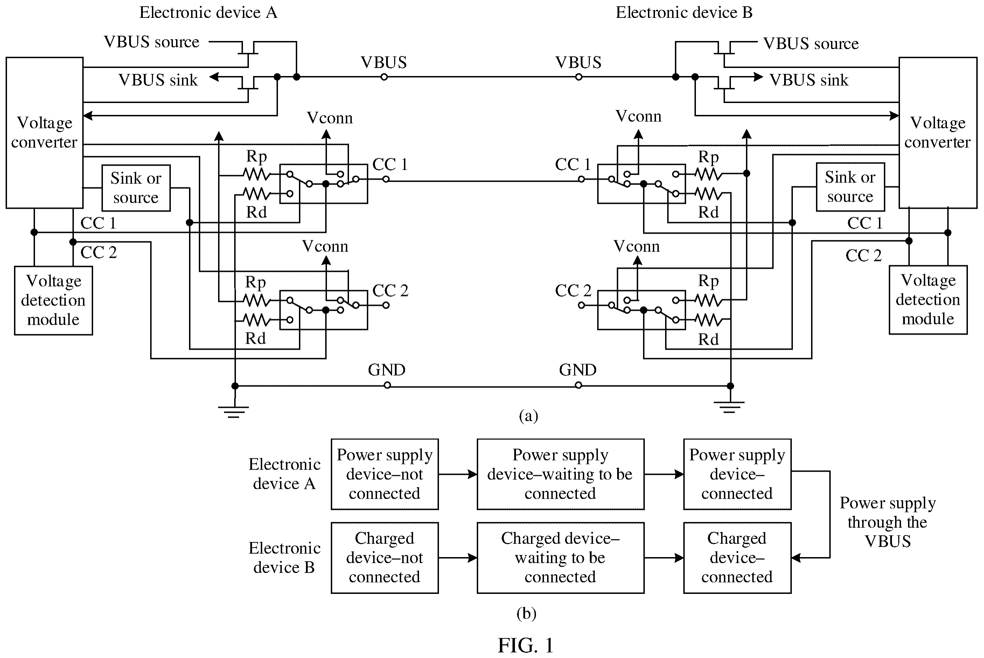

FIG. 1 to FIG. 3 are diagrams of charging of dual-role devices. When the dual-role devices (for example, an electronic device A and an electronic device B) perform charging according to a power delivery (Power Delivery, PD) charging protocol, the electronic device A and the electronic device B may be connected to each other through a USB Type-C cable.

It may be understood that the USB Type-C cable may include a signal line CC, a power line VBUS, and a ground line GND. The electronic device A and the electronic device B each may include two CC pins, for example, may include a CC 1 and a CC 2. One CC pin (for example, the CC 1 or the CC 2) in the two CC pins may be used as a connection between a charged device and a power supply device. To be specific, the electronic device A and the electronic device B may transfer a signal or the like through a CC connected to the CC 1 pin.

It should be understood that, in FIG. 1 to FIG. 3, the power supply device may be represented as a source, and the charged device may be represented as a sink. The electronic device A and the electronic device B each may include a voltage converter, a current detection module, and a sink or source identification module (represented as a sink or a source in FIG. 1 to FIG. 3). The voltage converter may be configured to control a voltage and the like in a charging process. The voltage detection module may be configured to detect voltage conditions on the CC 1 and the CC 2. The sink or source identification module may be configured to identify whether an electronic device is a power supply device or a charged device.

When charging is not started, for example, when the electronic device A is not connected to the electronic device B, both the electronic device A and the electronic device B may switch back and forth between a "Charged device-not connected" state and a "Power supply device-not connected" state. In this case, no power is supplied to the VBUS in the USB Type-C cable.

After the electronic device A is connected to the electronic device B, initially, the electronic device A and the electronic device B may be randomly identified as the power supply device or the charged device.

As shown in (a) in FIG. 1, when the electronic device A is identified as the power supply device and the electronic device B is identified as the charged device, the CC 1 of the electronic device A may be pulled up via a resistor Rp, to generate a pull-up signal. The CC 1 of the electronic device B may be pulled down via a resistor Rd, to generate a pull-down signal. In this case, the electronic device A may detect the pull-down signal of the electronic device B on the CC. In addition, the electronic device B may detect the pull-up signal of the electronic device A on the CC.

As shown in (b) in FIG. 1, when the electronic device A detects the pull-down signal of the electronic device B on the CC, the electronic device A may switch the electronic device A from the "Power supply device-not connected" state to a "Power supply device-waiting to be connected" state.

When the electronic device B detects the pull-up signal of the electronic device A on the CC, the electronic device B may switch the electronic device B from the "Charged device-not connected" state to a "Charged device-waiting to be connected" state.

After the electronic device A in the "Power supply device-waiting to be connected" state detects that the pull-down signal lasts for specific duration, the electronic device A may switch the electronic device A from the "Power supply device-waiting to be connected" state to a "Power supply device-connected" state, and may adjust an output voltage of the electronic device A, so that the VBUS starts to be electrified.

When the electronic device B detects that the electronic device B is in the "Charged device-waiting to be connected" state for specific duration, and detects that the VBUS has electricity, the electronic device B may switch the electronic device B from the "Charged device-waiting to be connected" state to a "Charged device-connected" state.

When the electronic device A is in the "Power supply device-connected" state, and the electronic device B is in the "Charged device-connected" state, the electronic device A may provide electric energy for the electronic device B through the VBUS.

It should be understood that, when a power role in the charging process needs to be switched, for example, when the electronic device B needs to be switched from the charged device to the power supply device, a user may input a switching operation on the electronic device A or the electronic device B. After the switching operation is detected, the electronic device A and the electronic device B may switch the power role based on the switching operation.

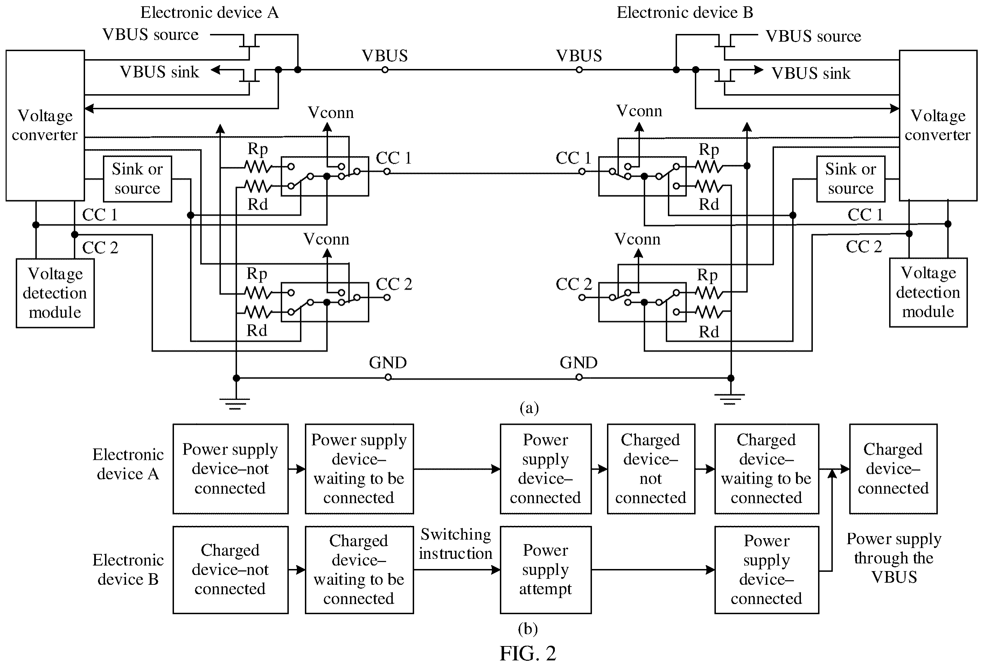

In an example, the user may input the switching operation on the electronic device B. It is assumed that, when the electronic device B detects the switching operation, the electronic device A is in the "Power supply device-connected" state, and the electronic device B is in the "Charged device-waiting to be connected" state. In this case, as shown in (a) in FIG. 2, the electronic device B may pull up the CC 1 of the electronic device B via a resistor Rp, to generate a pull-up signal. In addition, as shown in (b) in FIG. 2, the electronic device B may switch the electronic device B from the "Charged device-waiting to be connected" state to a "Power supply attempt" state.

After the electronic device B switches from the "Charged device-waiting to be connected" state to the "Power supply attempt" state, to be specific, after the CC 1 of the electronic device B is pulled up via the resistor Rp, to generate the pull-up signal, the electronic device A no longer detects the pull-down signal of the electronic device B. In this case, as shown in (a) in FIG. 2, the electronic device A may pull down the CC 1 of the electronic device A via a resistor Rd, to generate a pull-down signal. In addition, as shown in (b) in FIG. 2, the electronic device A may switch the electronic device A from the "Power supply device-connected" state to the "Charged device-not connected" state, and adjust the output voltage of the electronic device A, to stop power supply to the VBUS.

The electronic device A in the "Charged device-not connected" state may still detect the pull-up signal of the electronic device B on the CC. Therefore, as shown in (b) in FIG. 2, the electronic device A may continue to switch the electronic device A from the "Charged device-not connected" state to the "Charged device-waiting to be connected" state.

In addition, the electronic device B in the "Power supply attempt" state may detect the pull-down signal of the electronic device A on the CC. Therefore, as shown in (b) in FIG. 2, the electronic device B may switch the electronic device B from the "Power supply attempt" state to the "Power supply device-connected" state, and adjust an output voltage of the electronic device B, so that the VBUS starts to be electrified.

When the electronic device A detects that the electronic device A is in the "Charged device-waiting to be connected" state for specific duration, and detects that the VBUS has electricity, as shown in (b) in FIG. 2, the electronic device A may switch the electronic device A from the "Charged device-waiting to be connected" state to the "Charged device-connected" state.

After the electronic device B is in the "Power supply device-connected" state, and the electronic device A is in the "Charged device-connected" state, the electronic device B may provide electric energy for the electronic device A through the VBUS, to switch, to the charged device, the electronic device A originally used to provide the electric energy, and switch, to the power supply device, the electronic device B originally used to receive the electric energy. This implements switching of the power role.

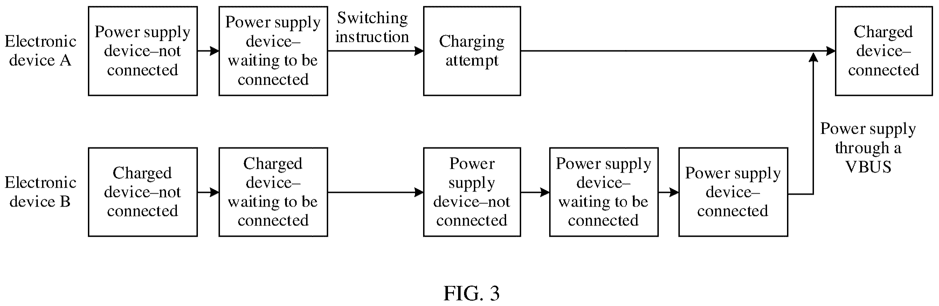

In another example, the user may alternatively input the switching operation on the electronic device A. It is assumed that, when the electronic device A detects the switching operation, the electronic device A is in the "Power supply device-waiting to be connected" state, and the electronic device B is in the "Charged device-waiting to be connected" state. In this case, as shown in (a) in FIG. 2, the electronic device A may pull down the CC 1 of the electronic device A via a resistor Rd, to generate a pull-down signal. In addition, as shown in FIG. 3, the electronic device A may switch the electronic device A from the "Power supply device-waiting to be connected" state to a "Charging attempt" state.

After the electronic device A switches from the "Power supply device-waiting to be connected" state to the "Charging attempt" state, to be specific, after the CC 1 of the electronic device A is pulled down via the resistor Rd, to generate the pull-down signal, the electronic device B no longer detects the pull-up signal of the electronic device A. In this case, as shown in (a) in FIG. 2, the electronic device B may pull up the CC 1 of the electronic device B via a resistor Rp, to generate a pull-up signal. In addition, as shown in FIG. 3, the electronic device B may switch the electronic device B from the "Charged device-waiting to be connected" state to the "Power supply device-not connected" state.

The electronic device B in the "Power supply device-not connected" state may still detect the pull-down signal of the electronic device A on the CC. In this case, as shown in FIG. 3, the electronic device B may continue to switch the electronic device B from the "Power supply device-not connected" state to the "Power supply device-waiting to be connected" state.

As shown in FIG. 3, after the electronic device B detects that the electronic device B is in the "Power supply device-waiting to be connected" state for specific duration, the electronic device B may switch the electronic device B from the "Power supply device-waiting to be connected" state to the "Power supply device-connected" state, and adjust an output voltage of the electronic device B, to start power supply to the VBUS. To be specific, the electronic device B may provide electric energy for the electronic device A through the VBUS, to switch, to the charged device, the electronic device A originally providing the electric energy, and switch, to the power supply device, the electronic device B originally receiving the electric energy. This implements switching of the power role.

As shown in FIG. 3, after detecting that the VBUS has electricity, the electronic device A may switch the electronic device A from the "Charging attempt" state to the "Charged device-connected" state.

It can be learned from the foregoing descriptions that, when electronic devices use a charging protocol in which communication is performed through a single signal line (namely, a CC), the electronic devices may switch a power role based on a connection status of the CC, namely, a pull-up signal and a pull-down signal that are detected on the CC. However, this switching manner is applicable only to the charging protocol in which communication is performed based on the single signal line. When the electronic device uses a charging protocol in which full-duplex communication is performed based on two signal lines, how to switch a power role is still an urgent problem to be resolved.

To resolve the foregoing problem, embodiments of this application provide a power role switching method and system, an electronic device, and a computer-readable storage medium. The system may include a first electronic device and a second electronic device. The first electronic device and the second electronic device each have a function of being charged and a power supply function. Initially, the first electronic device is a charged device, and the second electronic device is a power supply device. The first electronic device is connected to the second electronic device through a first signal line and a second signal line. The first signal line is a signal line for the first electronic device to receive data. The second signal line is a signal line for the first electronic device to send data. The first signal line may be a signal line for the second electronic device to send the data. The second signal line may be a signal line for the second electronic device to receive the data. When a power role needs to be switched, a user may perform a first operation on the first electronic device. After receiving the first operation, the first electronic device may send a first instruction to the second electronic device. The first instruction indicates the second electronic device to switch to a power supply device. After receiving the first instruction, the second electronic device may adjust an output voltage of the second electronic device, adjust the first signal line to be the signal line for the second electronic device to receive the data sent by the first electronic device, and adjust the second signal line to be the signal line for the second electronic device to send the data to the first electronic device, to switch the second electronic device to the charged device. In addition, the first electronic device may adjust the first signal line to be the signal line for the first electronic device to send the data to the second electronic device, adjust the second signal line to be the signal line for the first electronic device to receive the data sent by the second electronic device, and adjust an output voltage of the first electronic device, to switch the first electronic device to a power supply device. In other words, after adjustment, the first signal line may be the signal line for the first electronic device to send the data, the second signal line may be the signal line for the first electronic device to receive the data, the first signal line may be the signal line for the second electronic device to receive the data, and the second signal line may be the signal line for the second electronic device to send the data. To be specific, in this application, in a charging process in which both two electronic devices are dual-role devices, a power role can be accurately switched, to improve user experience, and high usability and practicability are achieved.

In embodiments of this application, the first electronic device and the second electronic device each may be an electronic device that can be used as a dual-role device, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a desktop computer. A specific type of an electronic device is not limited in embodiments of this application.

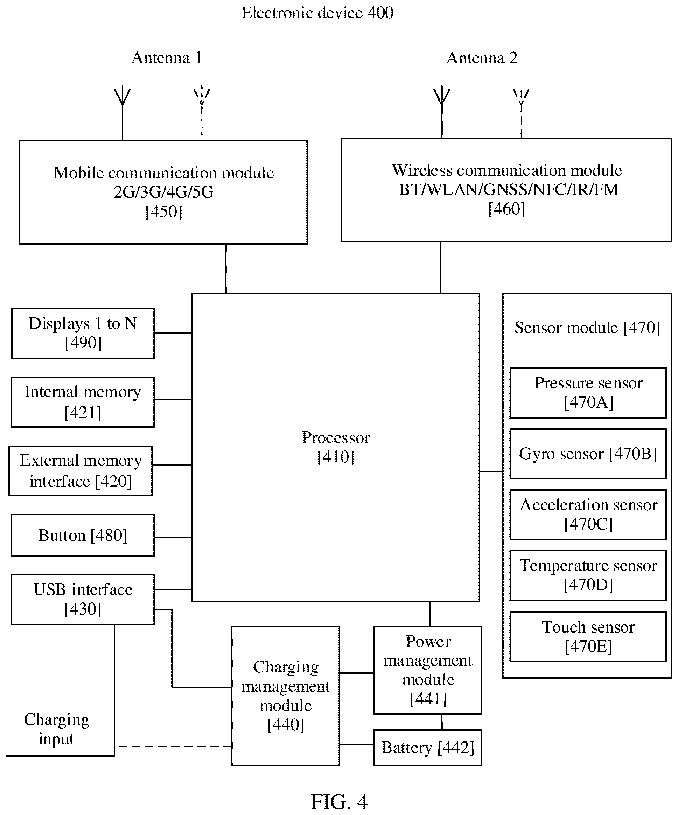

The following first describes the electronic device (namely, the first electronic device or the second electronic device) in embodiments of this application. FIG. 4 is a diagram of a structure of an electronic device 400.

The electronic device 400 may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, a sensor module 470, a button 480, a display 490, and the like. The sensor module 470 may include a pressure sensor 470A, a gyro sensor 470B, an acceleration sensor 470C, a temperature sensor 470D, a touch sensor 470E, and the like.

It may be understood that the structure shown in this embodiment of this application does not constitute a specific limitation on the electronic device 400. In some other embodiments of this application, the electronic device 400 may include more or fewer components than those shown in the figure, or combine some of the components, or split some of the components, or have different arrangements of the components. The components shown in the figure may be implemented by hardware, software, or a combination of the software and the hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural-network processing unit, NPU). Different processing units may be independent devices, or may be integrated into one or more processors.

The controller may generate an operation control signal based on an instruction operation code and a time sequence signal, to complete control of instruction fetching and instruction execution.

A memory may be further disposed in the processor 410, and is configured to store instructions and data. In some embodiments, the memory in the processor 410 is a cache. The memory may store an instruction or data just used or cyclically used by the processor 410. If the processor 410 needs to use the instruction or the data again, the processor may directly invoke the instruction or the data from the memory. This avoids repeated access, and reduces waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 410 may include a plurality of groups of I2C buses. The processor 410 may be separately coupled to the touch sensor 470E, a charger, and the like through different I2C bus interfaces. For example, the processor 410 may be coupled to the touch sensor 470E through the I2C interface, so that the processor 410 communicates with the touch sensor 470E through the I2C bus interface, to implement a touch function of the electronic device 400.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 410 to the wireless communication module 460. For example, the processor 410 communicates with a Bluetooth module in the wireless communication module 460 through the UART interface, to implement a Bluetooth function. The MIPI interface may be configured to connect the processor 410 to a peripheral device like the display 490. The MIPI interface includes a camera serial interface (camera serial interface, CSI), a display serial interface (display serial interface, DSI), and the like. In some embodiments, the processor 410 communicates with the display 490 through the DSI, to implement a display function of the electronic device 400.

The GPIO interface may be configured using software. The GPIO interface may be configured as a control signal or a data signal. In some embodiments, the GPIO interface may be configured to connect the processor 410 to the display 490, the wireless communication module 460, the sensor module 470, and the like. The GPIO interface may alternatively be configured as an I2C interface, an I2S interface, a UART interface, an MIPI interface, or the like.

The USB interface 430 is an interface that conforms to a USB standard specification, and may be specifically a mini USB interface, a micro USB interface, a USB Type-C interface, or the like. The USB interface 430 may be configured to connect to a charger to charge the electronic device 400, or may be configured to transmit data between the electronic device 400 and a peripheral device, or may be configured to connect to a headset, to play an audio through the headset. The interface may alternatively be configured to connect to another electronic device, for example, an AR device.

It may be understood that an interface connection relationship between the modules illustrated in this embodiment of this application is merely an example for description, and does not constitute a limitation on the structure of the electronic device 400. In some other embodiments of this application, the electronic device 400 may alternatively use an interface connection manner different from that in the foregoing embodiment, or use a combination of a plurality of interface connection manners.

The charging management module 440 is configured to receive a charging input from a charger. The charger may be a wireless charger or a wired charger. In some embodiments of wired charging, the charging management module 440 may receive a charging input from a wired charger through the USB interface 430. In some embodiments of wireless charging, the charging management module 440 may receive a wireless charging input through a wireless charging coil of the electronic device 400. When charging the battery 442, the charging management module 440 may further supply power to the electronic device via the power management module 441.

The power management module 441 is configured to connect to the battery 442, the charging management module 440, and the processor 410. The power management module 441 receives an input from the battery 442 and/or an input from the charging management module 440, and supplies power to the processor 410, the internal memory 421, the display 490, the wireless communication module 460, and the like. The power management module 441 may be further configured to monitor parameters such as a battery capacity, a battery cycle count, and a battery health status (electric leakage or impedance). In some other embodiments, the power management module 441 may alternatively be disposed in the processor 410. In some other embodiments, the power management module 441 and the charging management module 440 may alternatively be disposed in a same device.

A wireless communication function of the electronic device 400 may be implemented via the antenna 1, the antenna 2, the mobile communication module 450, the wireless communication module 460, the modem processor, the baseband processor, and the like.

The antenna 1 and the antenna 2 are configured to transmit and receive electromagnetic wave signals. Each antenna in the electronic device 400 may be configured to cover one or more communication frequency bands. Different antennas may be further reused, to improve antenna utilization. For example, the antenna 1 may be reused as a diversity antenna of a wireless local area network. In some other embodiments, an antenna may be used in combination with a tuning switch.

The mobile communication module 450 may provide a solution that is applied to the electronic device 400 and that includes wireless communication such as 2G/3G/4G/5G. The mobile communication module 450 may include at least one filter, a switch, a power amplifier, a low noise amplifier (low noise amplifier, LNA), and the like. The mobile communication module 450 may receive an electromagnetic wave through the antenna 1, perform processing like filtering or amplification on the received electromagnetic wave, and transmit a processed electromagnetic wave to the modem processor for demodulation. The mobile communication module 450 may further amplify a signal modulated by the modem processor, and convert an amplified signal into an electromagnetic wave for radiation through the antenna 1. In some embodiments, at least some functional modules of the mobile communication module 450 may be disposed in the processor 410. In some embodiments, at least some functional modules of the mobile communication module 450 may be disposed in a same device as at least some modules of the processor 410.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor displays an image or a video through the display 490. In some embodiments, the modem processor may be an independent device. In some other embodiments, the modem processor may be independent of the processor 410, and is disposed in a same device as the mobile communication module 450 or another functional module.

The wireless communication module 460 may provide a solution that is applied to the electronic device 400 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near-field communication, NFC), and an infrared (infrared, IR) technology. The wireless communication module 460 may be one or more devices integrating at least one communication processing module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the to-be-sent signal, and convert a processed signal into an electromagnetic wave for radiation through the antenna 2.

In some embodiments, in the electronic device 400, the antenna 1 is coupled to the mobile communication module 450, and the antenna 2 is coupled to the wireless communication module 460, so that the electronic device 400 can communicate with a network and another device using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 400 implements a display function via the GPU, the display 490, the application processor, and the like. The GPU is a microprocessor for image processing, and is connected to the display 490 and the application processor. The GPU is configured to: perform mathematical and geometric computation, and render an image. The processor 410 may include one or more GPUs, and execute program instructions to generate or change display information.

The display 490 is configured to display an image, a video, and the like. The display 490 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 400 may include one or N displays 490, where N is a positive integer greater than 1.

The digital signal processor is configured to process a digital signal, and may process another digital signal in addition to the digital signal. For example, when the electronic device 400 selects a frequency, the digital signal processor is configured to perform Fourier transform on frequency energy.

The video codec is configured to compress or decompress a digital video. The electronic device 400 may support one or more types of video codecs. In this way, the electronic device 400 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 400 may be implemented via the NPU, for example, image recognition, facial recognition, speech recognition, and text understanding.

The external memory interface 420 may be configured to connect to an external storage card, for example, a micro SD card, to extend a storage capability of the electronic device 400. The external storage card communicates with the processor 410 through the external memory interface 420, to implement a data storage function. For example, a file like a video is stored in the external storage card.

The internal memory 421 may be configured to store computer-executable program code, where the executable program code includes instructions. The internal memory 421 may include a program storage area and a data storage area. The program storage area may store an operating system, an application required by at least one function (for example, an image playing function), and the like. The data storage area may store data (for example, a phone book) created during use of the electronic device 400, and the like. In addition, the internal memory 421 may include a high-speed random access memory, and may further include a non-volatile memory, for example, at least one magnetic disk storage device, a flash memory device, and a universal flash storage (universal flash storage, UFS). The processor 410 runs the instructions stored in the internal memory 421 and/or the instructions stored in the memory disposed in the processor, to perform various function applications of the electronic device 400 and data processing.

The pressure sensor 470A is configured to sense a pressure signal, and may convert the pressure signal into an electrical signal. In some embodiments, the pressure sensor 470A may be disposed on the display 490. There are a plurality of types of pressure sensors 470A, for example, a resistive pressure sensor, an inductive pressure sensor, and a capacitive pressure sensor. The capacitive pressure sensor may include at least two parallel plates made of a conductive material. When a force is applied to the pressure sensor 470A, capacitance between electrodes changes. The electronic device 400 determines pressure intensity based on the change of the capacitance. When a touch operation is performed on the display 490, the electronic device 400 detects intensity of the touch operation via the pressure sensor 470A. The electronic device 400 may also calculate a touch location based on a detection signal of the pressure sensor 470A. In some embodiments, touch operations that are performed on a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 470B may be configured to determine a motion posture of the electronic device 400. In some embodiments, angular velocities of the electronic device 400 around three axes (namely, axes x, y, and z) may be determined via the gyro sensor 470B. The gyro sensor 470B may be used in a navigation scenario or a somatic game scenario.

The acceleration sensor 470C may detect magnitude of accelerations of the electronic device 400 in various directions (generally on three axes), may detect magnitude and a direction of gravity when the electronic device 400 is stationary, may be further configured to identify a posture of the electronic device, and is used in an application like switching between a landscape mode and a portrait mode or a pedometer.

The temperature sensor 470D is configured to detect a temperature. In some embodiments, the electronic device 400 executes a temperature processing strategy using the temperature detected by the temperature sensor 470D. For example, when the temperature reported by the temperature sensor 470D exceeds a threshold, the electronic device 400 lowers performance of a processor near the temperature sensor 470D, to reduce power consumption and implement thermal protection. In some other embodiments, when the temperature is lower than another threshold, the electronic device 400 heats the battery 442 to avoid abnormal shutdown of the electronic device 400 caused by the low temperature. In some other embodiments, when the temperature is less than still another threshold, the electronic device 400 boosts an output voltage of the battery 442 to avoid abnormal shutdown caused by the low temperature.

The touch sensor 470E is also referred to as a "touch device". The touch sensor 470E may be disposed on the display 490, and the touch sensor 470E and the display 490 form a touchscreen, which is also referred to as a "touchscreen". The touch sensor 470E is configured to detect a touch operation performed on or near the touch sensor. The touch sensor may transfer the detected touch operation to the application processor to determine a type of the touch event. A visual output related to the touch operation may be provided via the display 490. In some other embodiments, the touch sensor 470E may alternatively be disposed on a surface of the electronic device 400 at a location different from a location of the display 490.

The button 480 includes a power button, a volume button, and the like. The button 480 may be a mechanical button, or may be a touch button. The electronic device 400 may receive a button input, and generate a button signal input related to a user setting and function control of the electronic device 400.

A software system of the electronic device 400 may use a layered architecture, an event-driven architecture, a microkernel architecture, a microservice architecture, or a cloud architecture. For example, the software system of the electronic device 400 may use an Android operating system (Operating System, OS), a Harmony operating system (Harmony OS), or an iOS with the layered architecture. In this embodiment of this application, an Android system with the layered architecture is used as an example to illustrate a software structure of the electronic device 400.

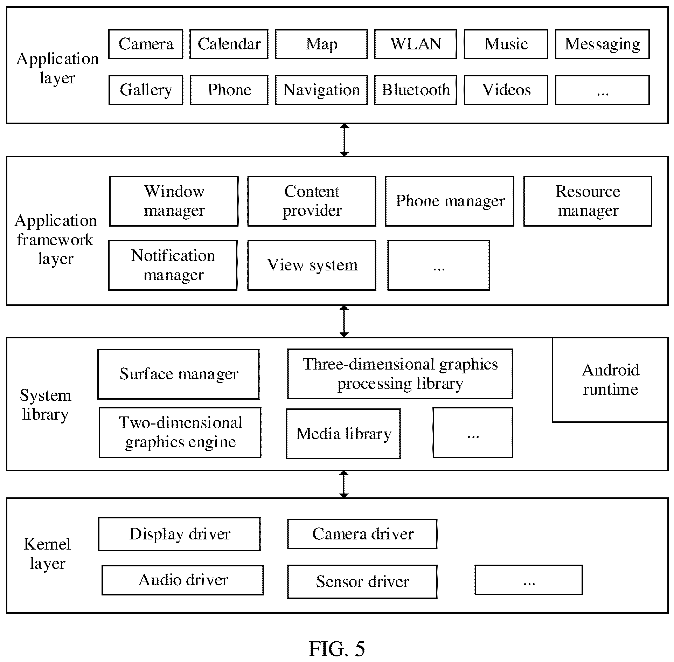

FIG. 5 is a block diagram of a software structure of the electronic device 400 according to an embodiment of this application.

In the layered architecture, software is divided into several layers. Each layer has a clear role and task. The layers communicate with each other through a software interface. In some embodiments, the Android system is divided into four layers from top to bottom: an application layer, an application framework layer, an Android runtime (Android^{®} runtime) and system library, and a kernel layer.

The application layer may include a series of application packages.

As shown in FIG. 5, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and the like.

The content provider is used to store and obtain data, and enable the data to be accessed by an application. The data may include a video, an image, an audio, calls that are made and answered, a browse history and a bookmark, a phone book, and the like.

The view system includes a visual control like a text display control or an image display control. The view system may be used to construct an application. A display interface may include one or more views. For example, a display interface including an SMS message notification icon may include a text display view and an image display view.

The phone manager is used to provide a communication function of the electronic device 400, for example, management of a call status (including answering or declining).

The resource manager provides various resources such as a localized character string, an icon, a picture, a layout file, and a video file for an application.

The notification manager enables an application to display notification information in a status bar, may be used to convey a notification message, and may automatically disappear after a short pause without requiring user interaction. For example, the notification manager is used to notify download completion and provide a message notification. The notification manager may alternatively be a notification that appears in a top status bar of the system in a form of a graph or a scroll bar text, for example, a notification of an application that runs in a background, or may be a notification that appears on a screen in a form of a dialog window. For example, text information is prompted in the status bar, an alert tone is made, the electronic device vibrates, or an indicator light blinks.

The Android runtime includes a core library and a virtual machine. The Android runtime is responsible for scheduling and management of the Android system.

The core library includes two parts: a function that needs to be invoked in a Java language, and a core library of Android.

The application layer and the application framework layer run on the virtual machine. The virtual machine executes Java files at the application layer and the application framework layer as binary files. The virtual machine is used to implement functions such as object lifecycle management, stack management, thread management, security and exception management, and garbage collection.

The system library may include a plurality of functional modules such as a surface manager (surface manager), a media library (Media Libraries), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording of audios and videos in a plurality of commonly used formats, a static image file, and the like. The media library may support a plurality of audio and video encoding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With reference to the accompanying drawings and specific application scenarios, the following provides example descriptions for the power role switching method provided in embodiments of this application.

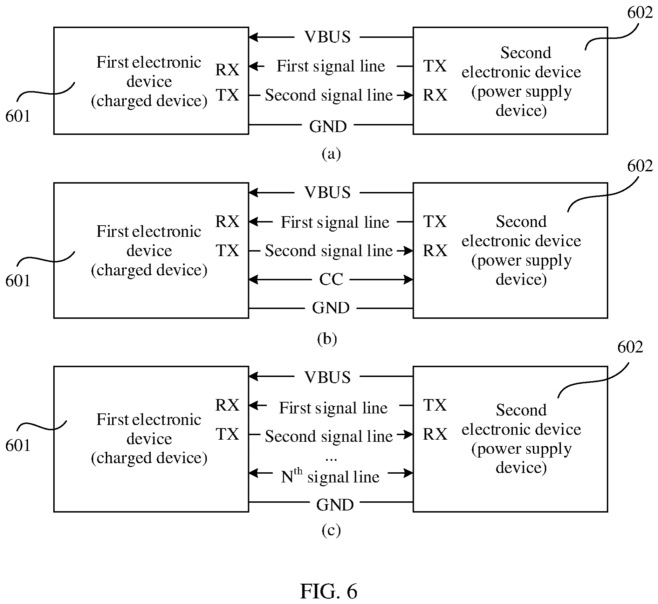

FIG. 6 is a diagram 1 of a power role switching system according to an embodiment of this application.

As shown in (a) in FIG. 6, the system may include a first electronic device 601 and a second electronic device 602. The first electronic device 601 and the second electronic device 602 each may be a dual-role device that has a function of being charged and a power supply function. In other words, in some application scenarios, the first electronic device 601 may be used as a charged device to receive electric energy provided by another power supply device. For example, the first electronic device 601 may be used as the charged device, the second electronic device 602 may be used as a power supply device, and the first electronic device 601 may receive electric energy provided by the second electronic device 602. In some other application scenarios, the first electronic device 601 may be used as a power supply device to provide electric energy to another electronic device. For example, the first electronic device 601 may be used as the power supply device, the second electronic device 602 may be used as a charged device, and the second electronic device 602 may receive the electric energy provided by the first electronic device 601, that is, the first electronic device 601 may provide the electric energy for the second electronic device 602.

Optionally, the first electronic device 601 and the second electronic device 602 may perform charging according to a charging protocol. The charging protocol may be a charging protocol in which full-duplex communication is performed based on two signal lines. In other words, in a charging process, for example, in a process in which the first electronic device 601 provides the electric energy for the second electronic device 602, or in a process in which the first electronic device 601 receives the electric energy provided by the second electronic device 602, the first electronic device 601 may be connected to the second electronic device 602 through a charging cable. The charging cable may include at least two signal lines. In the at least two signal lines, one signal line (which may be referred to as a first signal line below) may be a positive data line (namely, data+, D+), and another signal line (which may be referred to as a second signal line below) may be a negative data line (namely, data-, D-).

It should be understood that, for the power supply device, the positive data line may be a signal line for sending data (namely, a transmitter, TX), and the negative data line may be a signal line for receiving data (namely, a receiver, RX). For the charged device, the positive data line may be an RX, and the negative data line may be a TX.

For example, when the first electronic device 601 is the power supply device, and the second electronic device 602 is the charged device, for the first electronic device 601, the first signal line may be the TX, and the second signal line may be the RX. For the second electronic device 602, the first signal line may be the RX, and the second signal line may be the TX. To be specific, when the first electronic device 601 provides the electric energy for the second electronic device 602, the first electronic device 601 may send data to the second electronic device 602 through the first signal line, and may receive, through the second signal line, data sent by the second electronic device 602. The second electronic device 602 may receive, through the first signal line, the data sent by the first electronic device 601, and may send the data to the first electronic device 601 through the second signal line.

For example, as shown in (a) in FIG. 6, when the first electronic device 601 is the charged device, and the second electronic device 602 is the power supply device, for the first electronic device 601, the first signal line may be the RX, and the second signal line may be the TX. For the second electronic device 602, the first signal line may be the TX, and the second signal line may be the RX. To be specific, when the second electronic device 602 provides the electric energy for the first electronic device 601, the first electronic device 601 may receive, through the first signal line, data sent by the second electronic device 602, and may send data to the second electronic device 602 through the second signal line. The second electronic device 602 may send the data to the first electronic device 601 through the first signal line, and may receive, through the second signal line, the data sent by the first electronic device 601.

It should be noted that, as shown in (a) in FIG. 6, the charging cable may further include a VBUS, a GND, and the like. In the charging process, the first electronic device 601 and the second electronic device 602 may perform power supply through the VBUS. For example, when the first electronic device 601 is the power supply device, and the second electronic device 602 is the charged device, the first electronic device 601 may provide the electric energy for the second electronic device 602 through the VBUS. For example, as shown in (a) in FIG. 6, when the first electronic device 601 is the charged device, and the second electronic device 602 is the power supply device, the second electronic device 602 may provide the electric energy for the first electronic device 601 through the VBUS.

In this embodiment of this application, initially, that is, when the first electronic device 601 is just connected to the second electronic device 602, to perform charging, the first electronic device 601 may be identified as the charged device or the power supply device, and the second electronic device 602 may be identified as the power supply device or the charged device.

It may be understood that, a specific identification manner in which the first electronic device 601 and the second electronic device 602 are identified as the charged device or the power supply device is not limited in embodiments of this application, and may be specifically determined based on an actual scenario.

For example, as shown in (b) in FIG. 6, the charging cable may further include a CC. The first electronic device 601 may identify, based on a signal detected on the CC, the second electronic device 602 as the charged device or the power supply device. Similarly, the second electronic device 602 may identify, based on the signal detected on the CC, the first electronic device 601 as the charged device or the power supply device.

For example, as shown in (c) in FIG. 6, the charging cable may further include another signal line that may be configured to identify the charged device or the power supply device. The first electronic device 601 may identify the second electronic device 602 as the charged device or the power supply device based on the another signal line in the charging cable. Similarly, the second electronic device 602 may identify the first electronic device 601 as the charged device or the power supply device based on the another signal line in the charging cable.

It should be understood that, in addition to the foregoing signal lines, the charging cable may further include another signal line used for another function. In FIG. 6, an example in which the first electronic device 601 is the charged device and the second electronic device 602 is the power supply device is used for description.

The following uses an example in which, initially, the first electronic device 601 is identified as the charged device and the second electronic device 602 is identified as the power supply device for description.

It should be understood that, after the first electronic device 601 is identified as the charged device and the second electronic device 602 is identified as the power supply device, the first electronic device 601 may send a connection confirmation instruction to the second electronic device 602, to conform whether the first electronic device 601 is connected to the second electronic device 602. For example, the first electronic device 601 may send a ping instruction to the second electronic device 602, and may detect whether an ACK (Acknowledgment) that is returned by the second electronic device 602 and that is used to confirm that the ping instruction is received is received. When the first electronic device 601 receives the ACK returned by the second electronic device 602 for confirming that the ping instruction is received, the first electronic device 601 may determine that the first electronic device 601 is connected to the second electronic device 602. In this case, the first electronic device 601 and the second electronic device 602 may perform charging according to the charging protocol, to be specific, the second electronic device 602 may provide the electric energy for the first electronic device 601 according to the charging protocol.

For example, when the second electronic device 602 provides the electric energy for the first electronic device 601 according to the charging protocol, if a user wants to switch a power role in the charging process, to be specific, wants to switch the first electronic device 601 from the charged device to a power supply device, and switch the second electronic device 602 from the power supply device to a charged device, to provide the electric energy for the second electronic device 602 via the first electronic device 601, the user may perform a switching operation on the first electronic device 601, or may perform the switching operation on the second electronic device 602. After detecting the switching operation, the first electronic device 601 may switch the power role based on the switching operation, or after detecting the switching operation, the second electronic device 602 may switch the power role based on the switching operation, to switch the first electronic device 601 to the power supply device, and switch the second electronic device 602 to the charged device.

It should be noted that a specific type of the switching operation is not limited in embodiments of this application, and may be specifically determined based on an actual scenario. Optionally, the switching operation may be any operation like a touch operation, a press operation, or a gesture operation.

Optionally, the switching operation may be an operation of touching a switching button on the first electronic device 601, or may be an operation of touching a switching button on the second electronic device 602.

For example, in the charging process, the first electronic device 601 may display, in a display interface of the first electronic device 601, a power role switching button. When the user wants to switch the power role in the charging process, the user may touch the switching button on the first electronic device 601, to switch the power role.

For example, in the charging process, the second electronic device 602 may display, in a display interface of the second electronic device 602, a power role switching button. When the user wants to switch the power role in the charging process, the user may touch the switching button on the second electronic device 602, to switch the power role.

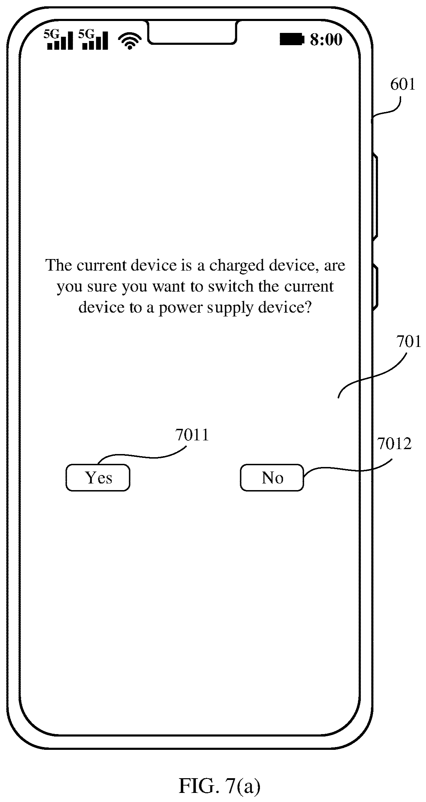

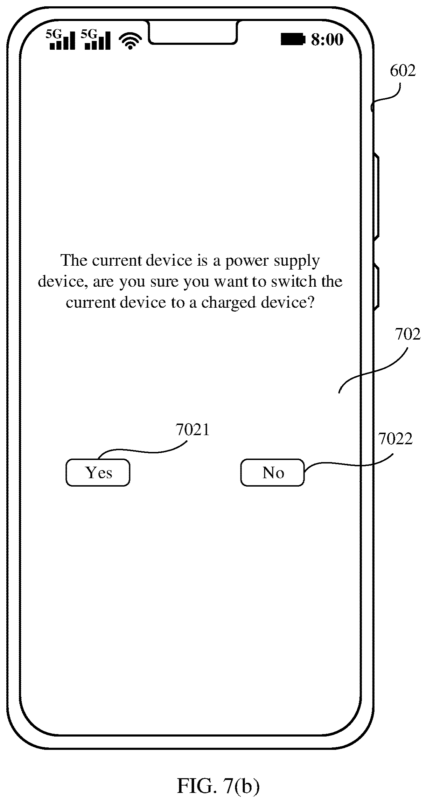

FIG. 7(a) and FIG. 7(b) are a diagram 1 of an application scenario according to an embodiment of this application. In this application scenario, an example in which the first electronic device 601 is a charged device and the second electronic device 602 is a power supply device is used for description.

As shown in FIG. 7(a), in a charging process, the first electronic device 601 may display a switching prompt interface (which may be referred to as a first switching prompt interface below) 701 in a display interface of the first electronic device 601. Prompt information indicating whether to switch a power role is displayed in the first switching prompt interface 701. For example, the prompt information may be "The current device is a charged device, are you sure you want to switch the current device to a power supply device?". In addition, a "Yes" button 7011 and a "No" button 7012 may be further displayed in the first switching prompt interface 701. The "Yes" button 7011 is used to trigger switching of the power role, and the "No" button 7012 is used to refuse switching of the power role.

When a user wants to switch the power role in a charging process, the user may touch the "Yes" button 7011 in the first switching prompt interface 701. When detecting the touch operation on the "Yes" button 7011, the first electronic device 601 may determine that the power role needs to be switched, to be specific, the first electronic device 601 needs to be switched to a power supply device. In this case, the first electronic device 601 may trigger switching of the power role. When the user does not want to switch the power role in the charging process, the user may touch the "No" button 7012 in the first switching prompt interface 701. When detecting the touch operation on the "No" button 7012, the first electronic device 601 may determine that the power role does not need to be switched. In this case, the first electronic device 601 does not trigger switching of the power role.

As shown in FIG. 7(b), in the charging process, the second electronic device 602 may display a switching prompt interface (which may be referred to as a second switching prompt interface below) 702 in a display interface of the second electronic device 602. Prompt information indicating whether to switch the power role may be displayed in the second switching prompt interface 702. For example, the prompt information may be "The current device is a power supply device, are you sure you want to switch the current device to a power supply device?". In addition, a "Yes" button 7021 and a "No" button 7022 may be further displayed in the second switching prompt interface 702. The "Yes" button 7021 is used to trigger switching of the power role, and the "No" button 7022 is used to refuse witching of the power role.

When the user wants to switch the power role in the charging process, the user may touch the "Yes" button 7021 in the second switching prompt interface 702. When detecting the touch operation on the "Yes" button 7021, the second electronic device 602 may determine that the power role needs to be switched, to be specific, the second electronic device 602 needs to be switched to the charged device. In this case, the second electronic device 602 may trigger switching of the power role. When the user does not want to switch the power role, the user may tap the "No" button 7022 in the second switching prompt interface 702. When detecting the touch operation on the "No" button 7022, the second electronic device 602 may determine that the power role does not need to be switched. In this case, the second electronic device 602 does not trigger switching of the power role.

Optionally, the switching operation may be an operation of pressing a specific physical button in the first electronic device 601, or may be an operation of pressing a specific physical button in the second electronic device 602.

For example, in the charging process, the user may simultaneously press a "battery level+" button and a power button of the first electronic device 601, to switch the power role. For example, in the charging process, the user may simultaneously press a "battery level+" button and a power button of the second electronic device 602, to switch the power role.

Optionally, the switching operation may be an operation of performing a specific gesture on the first electronic device 601, or an operation of performing a specific gesture on the second electronic device 602. For example, the specific gesture may be a touch by two fingers or three fingers on a display interface, or may be a single tap or a double-tap by two knuckles on the display interface.

For example, in the charging process, the user may touch the display interface of the first electronic device 601 by two fingers or three fingers, to switch the power role. For example, in the charging process, the user may singly tap or double tap the display interface of the first electronic device 601 by two knuckles, to switch the power role. For example, in the charging process, the user may touch the display interface of the second electronic device 602 by two fingers or three fingers, to switch the power role. For example, in the charging process, the user may singly tap or double tap the display interface of the second electronic device 602 by two knuckles, to switch the power role.

It can be learned from the foregoing descriptions that the user can perform the switching operation on the first electronic device 601, to switch the power role in the charging process, that is, the first electronic device 601 can trigger switching of the power role in the charging process based on the switching operation detected by the first electronic device 601. Alternatively, the user can perform the switching operation on the second electronic device 602, to switch the power role in the charging process, that is, the second electronic device 602 can trigger switching of the power role in the charging process based on the switching operation detected by the second electronic device 602.

The following separately describes the following cases: 1. The first electronic device 601 triggers switching of the power role in the charging process based on the switching operation detected by the first electronic device 601. 2. The second electronic device 602 triggers switching of the power role in the charging process based on the switching operation detected by the second electronic device 602.
**1. The first electronic device 601 triggers switching of the power role in the charging process based on the switching operation detected by the first electronic device 601.**

In a process in which the first electronic device 601 is the charged device, and the second electronic device 602 is the power supply device, to be specific, the second electronic device 602 provides the electric energy for the first electronic device 601, when the user wants to trigger switching of the power role on the first electronic device 601, the user may perform the switching operation on the first electronic device 601, for example, may tap the "Yes" button 7011 shown in FIG. 7(a). After detecting the switching operation, the first electronic device 601 determines that the power role in the charging process needs to be switched.

In an example, after detecting the switching operation, the first electronic device 601 may send a switching instruction (which may be referred to as a switching instruction A below) to the second electronic device 602. To be specific, the first electronic device 601 may send the switching instruction A to the second electronic device 602 through the second signal line. The switching instruction A is used to request to switch the second electronic device 602 to the charged device, to implement switching of the power role in the charging process.

After receiving the switching instruction A, the second electronic device 602 may adjust an output voltage of the second electronic device 602, for example, may adjust the output voltage of the second electronic device 602 to a preset value (which may be referred to as a preset value A below), to de-electrify the VBUS. In this way, the second electronic device 602 stops providing the electric energy for the first electronic device 601 through the VBUS.

In addition, the second electronic device 602 may further switch statuses of the first signal line and the second signal line in the second electronic device 602, to be specific, exchange the RX and the TX in the second electronic device 602. For example, initially, for the second electronic device 602, the first signal line may be the TX, and the second signal line may be the RX. After the statuses of the first signal line and the second signal line in the second electronic device 602 are switched, the first signal line may be an RX, and the second signal line may be a TX.

It should be understood that, after detecting the switching operation, the first electronic device 601 may also switch statuses of the first signal line and the second signal line in the first electronic device 601, to be specific, exchange the RX and the TX in the first electronic device 601. For example, initially, for the first electronic device 601, the first signal line may be the RX, and the second signal line may be the TX. After the statuses of the first signal line and the second signal line in the first electronic device 601 are switched, the first signal line may be a TX, and the second signal line may be an RX.

After detecting the switching operation, the first electronic device 601 may further adjust an output voltage of the first electronic device 601. For example, may adjust the output voltage of the first electronic device 601 to a preset value (which may be referred to as a preset value B below), to electrify the VBUS. In this way, the first electronic device 601 may provide the electric energy for the second electronic device 602 through the VBUS, to switch the first electronic device 601 to the power supply device, and switch the second electronic device 602 to the charged device.

It should be noted that specific values of the preset value A and the preset value B are not limited in embodiments of this application, and may be specifically determined based on an actual scenario. For example, the preset value A may be determined as 0 V based on the actual scenario. For example, the preset value B may be determined as any value like 5 V, 10 V, or 20 V based on the actual scenario.

For example, to avoid a power supply conflict on the VBUS, and ensure effective switching of the power role, after switching the statuses of the first signal line and the second signal line, the first electronic device 601 may detect a level on the second signal line (namely, a switched RX). When the first electronic device 601 detects a high level on the second signal line within preset duration (which may be referred to as preset duration T01 below), the first electronic device 601 may determine that a handshake between the first electronic device 601 used as the power supply device and the second electronic device 602 used as the charged device succeeds. In this case, the first electronic device 601 may adjust the output voltage of the first electronic device 601 to the preset value B after preset duration (which may be referred to as preset duration T1 below) of determining that the handshake between the first electronic device 601 and the second electronic device 602 succeeds, to electrify the VBUS. In this way, the first electronic device 601 may provide the electric energy for the second electronic device 602 through the VBUS.

In other words, after detecting the switching operation, the first electronic device 601 may first switch the statuses of the first signal line and the second signal line, and then may adjust the output voltage of the first electronic device 601 after the preset duration T1 of determining that the handshake between the first electronic device 601 used as the power supply device and the second electronic device 602 used as the charged device succeeds, to electrify the VBUS. In this way, the first electronic device 601 may provide the electric energy for the second electronic device 602 through the VBUS, to ensure effective switching of the power role.

When detecting no high level on the second signal line within the preset duration T01, the first electronic device 601 may restart a charging handshake protocol handshake. When the restarted charging protocol handshake succeeds, the first electronic device 601 may adjust the output voltage of the first electronic device 601, to electrify the VBUS. When the restarted charging protocol handshake fails, the first electronic device 601 may exit charging, so that the charging process between the first electronic device 601 and the second electronic device 602 is terminated.

It should be understood that, after switching the statuses of the first signal line and the second signal line, the second electronic device 602 may also detect a level on the first signal line (namely, a switched RX). When the second electronic device 602 detects a high level on the first signal line within preset duration (which may be referred to as preset duration T02 below), the second electronic device 602 may determine that the handshake between the second electronic device 602 used as the charged device and the first electronic device 601 used as the power supply device succeeds. After the second electronic device 602 determines that the handshake between the second electronic device 602 used as the charged device and the first electronic device 601 used as the power supply device succeeds, the second electronic device 602 may detect whether a voltage on the VBUS meets a preset condition. When the second electronic device 602 detects, within preset duration (which may be referred to as preset duration T03 below), that the voltage on the VBUS meets the preset condition, the second electronic device 602 may determine that a power connection between the second electronic device 602 and the first electronic device 601 succeeds, and may perform communication according to a charging protocol. In this case, the second electronic device 602 may receive, according to the charging protocol, the electric energy provided by the first electronic device 601.

The preset condition may be determined based on the preset value B. A specific manner of determining the preset condition may be determined based on an actual scenario. This is not specifically limited in embodiments of this application. Optionally, a voltage range may be determined based on the preset value B, and the preset condition may be that the voltage falls with the voltage range.

For example, when the preset value B is 5 V, it may be determined that the preset condition is that the voltage falls within [4.5 V, 5.5 V]. In other words, when the second electronic device 602 detects that the voltage on the VBUS falls within [4.5 V, 5.5 V], for example, detects that the voltage on the VBUS is 5.2 V, the second electronic device 602 may determine that the detected voltage on the VBUS meets the preset condition. When the second electronic device 602 detects that the voltage on the VBUS does not fall within [4.5 V, 5.5 V], for example, detects that the voltage on the VBUS is 2 V, the second electronic device 602 may determine that the detected voltage on the VBUS does not meet the preset condition.

For example, when the preset value B is 10 V, it may be determined that the preset condition is that the voltage falls within [8.5 V, 11.5 V]. In other words, when the second electronic device 602 detects that the voltage on the VBUS falls within [8.5 V, 11.5 V], for example, detects that the voltage on the VBUS is 10.2 V, the second electronic device 602 may determine that the detected voltage on the VBUS meets the preset condition. When the second electronic device 602 detects that the voltage on the VBUS does not fall within [8.5 V, 11.5 V], for example, detects that the voltage on the VBUS is 2 V, the second electronic device 602 may determine that the detected voltage on the VBUS does not meet the preset condition.

For example, when the preset value B is 15 V, it may be determined that the preset condition is that the voltage falls within [12 V, 16 V]. In other words, when the second electronic device 602 detects that the voltage on the VBUS falls within [12 V, 16 V], for example, detects that the voltage on the VBUS is 14 V, the second electronic device 602 may determine that the detected voltage on the VBUS meets the preset condition. When the second electronic device 602 detects that the voltage on the VBUS does not fall within [12 V, 16 V], for example, detects that the voltage on the VBUS is 5 V, the second electronic device 602 may determine that the detected voltage on the VBUS does not meet the preset condition.

It may be understood that, when the second electronic device 602 detects, within the preset duration T02, no high level on the first signal line, or the second electronic device 602 detects, within the preset duration T03, that the voltage on the VBUS does not meet the preset condition, the second electronic device 602 may restart the charging protocol handshake.

When the restarted charging protocol handshake succeeds, and it is detected, within the preset duration T03 after the handshake succeeds, that the voltage on the VBUS meets the preset condition, the second electronic device 602 may determine that the power connection between the second electronic device 602 and the first electronic device 601 succeeds, to be specific, determine that the second electronic device 602 may communicate with the first electronic device 601 according to the charging protocol. In this case, the second electronic device 602 may receive, according to the charging protocol, the electric energy provided by the first electronic device 601. When the restarted charging protocol handshake fails, the second electronic device 602 may exit charging, so that the charging process between the first electronic device 601 and the second electronic device 602 is terminated.

It should be noted that the foregoing descriptions that the first electronic device 601 or the second electronic device 602 exits charging when the restarted charging protocol handshake fails are merely an example for explanation, and should not be construed as a limitation on embodiments of this application. A quantity of restarted charging protocol handshakes is not limited in embodiments of this application, and may be specifically determined based on an actual scenario.

It should be noted that values of the preset duration T01, the preset duration T02, the preset duration T03, and the preset duration T1 may be specifically determined based on an actual scenario. This is not limited in embodiments of this application. For example, the preset duration T01 may be set to any value like 10 ms, 20 ms, or 50 ms based on the actual scenario. For example, the preset duration T02 may be set to any value like 10 ms, 20 ms, or 50 ms based on the actual scenario. For example, the preset duration T03 may be set to any value like 10 ms, 20 ms, or 50 ms based on the actual scenario. For example, the preset duration T1 may be set to any value like 0 ms, 5 ms, 10 ms, or 20 ms based on the actual scenario.

Optionally, switching the statuses of the first signal line and the second signal line in the first electronic device 601 may be setting the first signal line in the first electronic device 601 to a pull-up state, and setting the second signal line in the first electronic device 601 to a high resistive state. Switching the statuses of the first signal line and the second signal line in the second electronic device 602 may be setting the first signal line in the second electronic device 602 to a high resistive state, and setting the second signal line to a pull-up state.

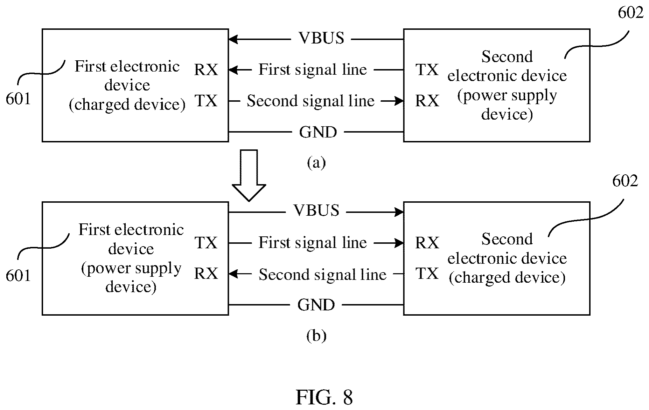

FIG. 8 is a diagram 2 of an application scenario according to an embodiment of this application.

As shown in (a) in FIG. 8, initially, the first electronic device 601 is a charged device, and the second electronic device 602 is a power supply device, to be specific, for the first electronic device 601, the first signal line may be an RX, and the second signal line may be a TX. For the second electronic device 602, the first signal line may be a TX, and the second signal line may be an RX. In this case, the second electronic device 602 may adjust an output voltage of the second electronic device 602, to electrify the VBUS. In this way, the second electronic device 602 may provide electric energy for the first electronic device 601 through the VBUS.

When the user performs a switching operation on the first electronic device 601, the first electronic device 601 may switch statuses of the first signal line and the second signal line in the first electronic device 601, to be specific, exchange the RX and the TX in the first electronic device 601. As shown in (b) in FIG. 8, after switching, for the first electronic device 601, the first signal line may be a TX, and the second signal line may be an RX.

Similarly, the second electronic device 602 may switch statuses of the first signal line and the second signal line in the second electronic device 602, to be specific, exchange the RX and the TX in the second electronic device 602. As shown in (b) in FIG. 8, after switching, for the second electronic device 602, the first signal line may be an RX, and the second signal line may be a TX.

As shown in (b) in FIG. 8, the second electronic device 602 may further adjust the output voltage of the second electronic device 602, so that the second electronic device 602 stops power supply. In this way, the second electronic device 602 stops providing the electric energy for the first electronic device 601 through the VBUS.

The first electronic device 601 may adjust an output voltage of the first electronic device 601, so that the first electronic device 601 starts power supply, to be specific, the first electronic device 601 may provide electric energy for the second electronic device 602 through the VBUS. In this way, the first electronic device 601 may be switched from the charged device to a power supply device, and the second electronic device 602 may be switched from the power supply device to a charged device.

In another example, after detecting the switching operation, the first electronic device 601 may first determine whether the first electronic device 601 meets a switching condition (which may be referred to as a switching condition A below), to be specific, determine whether the first electronic device 601 can be switched to the power supply device, to switch the power role when the first electronic device 601 meets the switching condition A. This ensures effectiveness of switching the power role, and improves user experience.

It should be noted that the switching condition A may be specifically determined based on an actual scenario. This is not limited in embodiments of this application. For example, it may be determined, based on the actual scenario, that the switching condition A includes at least one of a battery level, a battery temperature, cable impedance, voltage and current precision, and a port leakage current.

For example, the switching condition A may be that the battery level is greater than a preset battery level (which may be referred to as a preset battery level A below). The battery level and the preset battery level A may be represented using a percentage of a battery capacity. For example, the preset battery level A may be 60% of the battery capacity. To be specific, when the first electronic device 601 determines that the battery level of the first electronic device 601 is greater than the preset battery level A, for example, when the battery level of the first electronic device 601 is 80%, the first electronic device 601 may determine that the first electronic device 601 meets the switching condition A.

For example, the switching condition A may be that the battery temperature is less than or equal to a preset temperature (which may be referred to as a preset temperature A below). For example, the preset temperature A may be 20 degrees. To be specific, when the first electronic device 601 determines that the battery temperature of the first electronic device 601 is less than or equal to 20 degrees, the first electronic device 601 may determine that the first electronic device 601 meets the switching condition A.

For example, the switching condition A may be that the battery level is greater than the preset battery level A, and the battery temperature is less than or equal to the preset temperature A. To be specific, when the first electronic device 601 determines that the battery level of the first electronic device 601 is less than or equal to the preset battery level A, and the battery temperature of the first electronic device 601 is less than or equal to the preset temperature A, the first electronic device 601 may determine that the first electronic device 601 meets the switching condition A.

When the first electronic device 601 meets the switching condition A, the first electronic device 601 may send the switching instruction A to the second electronic device 602. After receiving the switching instruction, the second electronic device 602 may send, to the first electronic device 601, an ACK (which may be referred to as an ACK A1 below) for confirming that the switching instruction A is received and a consent instruction (which may be referred to as a consent instruction A below) for consenting to switching. To be specific, the second electronic device 602 may send the ACK A1 and the consent instruction A to the first electronic device 601 through the first signal line (namely, the TX in the second electronic device 602).

For example, after the second electronic device 602 sends the ACK A1 and the consent instruction A, the second electronic device 602 may adjust the output voltage of the second electronic device 602, to de-electrify the VBUS. In this way, the second electronic device 602 stops power supply, so that the second electronic device 602 no longer provides the electric energy for the first electronic device 601 through the VBUS. The second electronic device 602 may further switch the statuses of the first signal line and the second signal line in the second electronic device 602.

After receiving the ACK A1 and the consent instruction A that are returned by the second electronic device 602, the first electronic device 601 may switch the statuses of the first signal line and the second signal line in the first electronic device 601, and may adjust the output voltage of the first electronic device 601, to electrify the VBUS. In this way, the first electronic device 601 may provide the electric energy for the second electronic device 602 through the VBUS.

For example, after receiving the ACK A1 and the consent instruction A that are returned by the second electronic device 602, the first electronic device 601 may return, to the second electronic device 602, an ACK (which may be referred to as an ACK A2 below) for confirming that the consent instruction A is received. To be specific, the first electronic device 601 may send the ACK A2 to the second electronic device 602 through the second signal line (namely, the TX in the first electronic device 601).

After receiving the ACK A2 returned by the first electronic device 601, the second electronic device 602 may adjust the output voltage of the second electronic device 602, to de-electrify the VBUS. In this way, the second electronic device 602 stops power supply, so that the second electronic device 602 no longer provides the electric energy for the first electronic device 601 through the VBUS. The second electronic device 602 may further switch the statuses of the first signal line and the second signal line in the second electronic device 602.

Alternatively, the second electronic device 602 requires time to parse the ACK A2, to determine whether the power role indeed needs to be switched. Therefore, to ensure accurate switching of the power role, after receiving the ACK A2, the second electronic device 602 may adjust the output voltage of the second electronic device 602 after preset duration (which may be referred to as preset duration T21 below), to stop power supply, and switch the statuses of the first signal line and the second signal line in the second electronic device 602.

After returning the ACK A2 to the second electronic device 602, the first electronic device 601 may switch the statuses of the first signal line and the second signal line in the first electronic device 601, and may adjust the output voltage of the first electronic device 601, to electrify the VBUS. In this way, the first electronic device 601 may provide the electric energy for the second electronic device 602 through the VBUS.

Optionally, after returning the ACK A2 to the second electronic device 602, the first electronic device 601 may first switch the statuses of the first signal line and the second signal line in the first electronic device 601, and adjust the output voltage of the first electronic device 601 after the preset duration T1 of determining that a handshake between the first electronic device 601 used as the power supply device and the second electronic device 602 used as the charged device succeeds, to electrify the VBUS. In this way, the first electronic device 601 may provide the electric energy for the second electronic device 602 through the VBUS.

Optionally, after returning the ACK A2 to the second electronic device 602, the first electronic device 601 may determine time (for example, time A) at which the second electronic device 602 switches the statuses of the first signal line and the second signal line in the second electronic device 602. Then, the first electronic device 601 may switch the statuses of the first signal line and the second signal line in the first electronic device 601 after preset duration (which may be referred to as preset duration T31 below) of the time A, and adjust the output voltage of the first electronic device 601. In other words, after the second electronic device 602 determines to switch the role, to be specific, after the second electronic device 602 is switched to the charged device, the first electronic device 601 may switch the first electronic device 601 to the power supply device. This effectively ensures accuracy of switching the power role.

For example, the first electronic device 601 may first switch the statuses of the first signal line and the second signal line in the first electronic device 601 after the preset duration T31 of the time A. Then, the first electronic device 601 may adjust the output voltage of the first electronic device 601 after the preset duration T1 of determining that the handshake between the first electronic device 601 used as the power supply device and the second electronic device 602 used as the charged device succeeds, to electrify the VBUS. In this way, the first electronic device 601 may provide the electric energy for the second electronic device 602 through the VBUS, to reduce the power supply conflict on the VBUS.

It should be noted that values of the preset duration T21 and the preset duration T31 may be specifically determined based on an actual scenario. This is not limited in embodiments of this application. For example, the preset duration T21 may be set to any value like 2 ms, 5 ms, or 10 ms based on the actual scenario. For example, the preset duration T31 may be set to any value like 3 ms, 5 ms, or 10 ms based on the actual scenario.

It may be understood that, when the first electronic device 601 does not meet the switching condition A, the first electronic device 601 may refuse to switch the power role, to be specific, the first electronic device 601 does not send the switching instruction A to the second electronic device 602. In this case, the first electronic device 601 does not switch the statuses of the first signal line and the second signal line in the first electronic device 601. In this way, the first electronic device 601 is still used as the charged device, and the second electronic device 602 is still used as the power supply device.

Optionally, a control instruction (for example, the ping instruction, the ACK, the switching instruction, or the consent instruction) sent between the first electronic device 601 and the second electronic device 602 may include a message header, a control instruction, and a cyclic redundancy check (cyclic redundancy check, CRC). A length of the message header may be 2 bytes. A length of the control instruction may be 1 byte. A length of the CRC may also be 1 byte.

Optionally, related content of the control instruction (for example, the ping instruction, the ACK, the switching instruction, and the consent instruction) sent between the first electronic device 601 and the second electronic device 602 may be shown in Table 1. A number of each control instruction in Table 1 is merely an example for explanation, and should not be construed as a limitation on embodiments of this application. In this embodiment of this application, the number of each control instruction may alternatively be set to another value based on an actual requirement.

**Table 1**

| Number | Control instruction | Sender | Receiver |
|---|---|---|---|
| 0x00 | Ping instruction | Power supply device/Charged device | Power supply device/Charged device |
| 0x01 | ACK | Power supply device/Charged device | Power supply device/Charged device |
| 0x03 | Consent instruction | Power supply device/Charged device | Power supply device/Charged device |
| 0x10 | Switching instruction | Power supply device/Charged device | Power supply device/Charged device |

Optionally, a data message sent between the first electronic device 601 and the second electronic device 602 may include a message header, a command, a data length, data, and a CRC. The command is used to distinguish different data messages. A length of the message header may be 2 bytes. A length of the command may be 1 byte. A length of the data length may be 1 byte. A length of the data may be 1 to 59 bytes. A length of the CRC may be 1 byte.

For example, related content of the data message (for example, a refusal instruction) sent between the first electronic device 601 and the second electronic device 602 may be shown in Table 2. A number of the data message in Table 2 is merely an example for explanation, and should not be construed as a limitation on embodiments of this application. In this embodiment of this application, the number of the data message may alternatively be set to another value based on an actual requirement.

**Table 2**

| Number | Data message | Sender | Receiver |
|---|---|---|---|
| 0x09 | Refusal instruction | Power supply device/Charged device | Power supply device/Charged device |

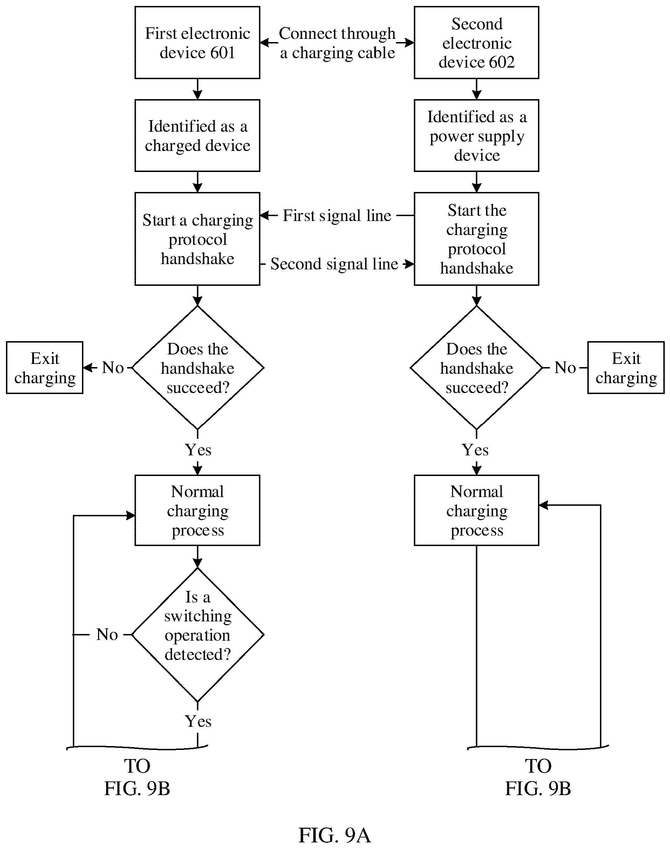

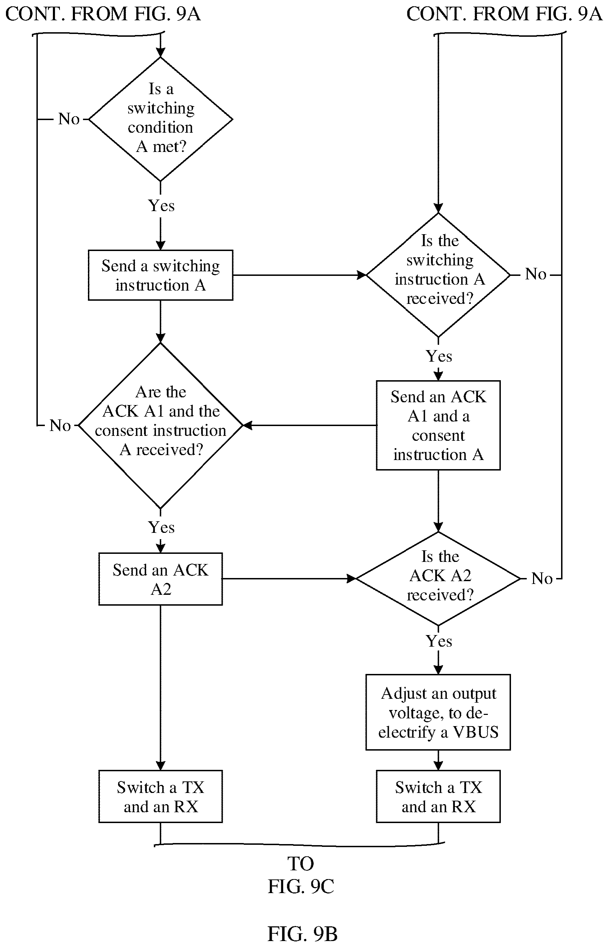

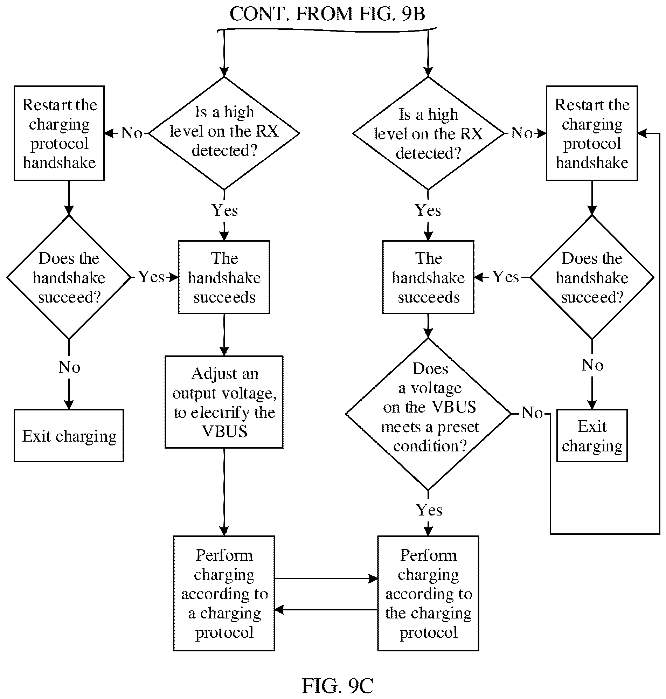

FIG. 9A to FIG. 9C are a schematic flowchart 1 of a power role switching method according to an embodiment of this application. In this embodiment, an example in which the first electronic device 601 detects a switching operation, to switch a power role is used for description.

As shown in FIG. 9A to FIG. 9C, initially, the first electronic device 601 may be connected to the second electronic device 602 through a charging cable. In this case, the first electronic device 601 may be identified as a charged device, and the second electronic device 602 may be identified as a power supply device. Then, the first electronic device 601 and the second electronic device 602 may start a charging protocol handshake. When the charging protocol handshake succeeds, the first electronic device 601 and the second electronic device 602 may enter a normal charging process, to be specific, the first electronic device 601 may receive electric energy provided by the second electronic device 602. It should be understood that, when the charging protocol handshake fails, the first electronic device 601 and the second electronic device 602 may exit charging.

As shown in FIG. 9A to FIG. 9C, in a process in which the first electronic device 601 receives the electric energy provided by the second electronic device 602, when a user wants to trigger switching of the power role on the first electronic device 601, the user may perform the switching operation on the first electronic device 601. That is, the first electronic device 601 may detect the switching operation on the first electronic device 601. When detecting the switching operation, the first electronic device 601 may first determine whether the first electronic device 601 meets the switching condition A. When the first electronic device 601 meets the switching condition A, the first electronic device 601 may send the switching instruction A to the second electronic device 602. When no switching operation is detected, or the first electronic device 601 does not meet the switching condition A, the first electronic device 601 may still be used as the charged device to receive the electric energy provided by the second electronic device 602.

The second electronic device 602 may determine whether the switching instruction A sent by the first electronic device 601 is received.

When receiving the switching instruction A, the second electronic device 602 may send the ACK A1 and the consent instruction A to the first electronic device 601. It should be understood that, when the second electronic device 602 does not receive the switching instruction A, the second electronic device 602 may still be used as the power supply device, to provide the electric energy to the first electronic device 601.

The first electronic device 601 may determine whether the ACK A1 and the consent instruction A that are returned by the second electronic device 602 are received.

When receiving the ACK A1 and the consent instruction A that are returned by the second electronic device 602, the first electronic device 601 may return, to the second electronic device 602, the ACK A2 for confirming that the consent instruction A is received. When receiving no ACK A1 and consent instruction A, the first electronic device 601 may still be used as the charged device, to receive the electric energy provided by the second electronic device 602.

The second electronic device 602 may determine whether the ACK A2 returned by the first electronic device 601 is received.

When receiving the ACK A2, the second electronic device 602 may adjust an output voltage of the second electronic device 602 after the preset duration T21, to de-electrify a VBUS, and may switch statuses of a first signal line and a second signal line in the second electronic device 602. When receiving no ACK A2, the second electronic device 602 may still be used as the power supply device, to provide the electric energy for the first electronic device 601.

After returning the ACK A2 to the second electronic device 602, the first electronic device 601 may determine the time A at which the second electronic device 602 switches the statuses of the first signal line and the second signal line in the second electronic device 602. The first electronic device 601 may first switch statuses of the first signal line and the second signal line in the first electronic device 601 after the preset duration T31 of the time A. Then, the first electronic device 601 may adjust an output voltage of the first electronic device 601 after the preset duration T1 of determining that the handshake between the first electronic device 601 used as a power supply device and the second electronic device 602 used as a charged device succeeds, to electrify the VBUS. In this way, the first electronic device 601 may provide electric energy for the second electronic device 602 through the VBUS.

To be specific, after switching the statuses of the first signal line and the second signal line in the first electronic device 601, the first electronic device 601 may determine whether a high level on the second signal line (namely, an RX in the first electronic device 601) is detected. When detecting the high level on the second signal line within the preset duration T01, the first electronic device 601 may determine that the handshake between the first electronic device 601 and the second electronic device 602 succeeds. The first electronic device 601 may adjust the output voltage of the first electronic device 601 after the preset duration T1 of determining that the handshake succeeds, to electrify the VBUS. In this way, the first electronic device 601 may provide the electric energy for the second electronic device 602 through the VBUS.

It should be understood that, when detecting no high level on the second signal line within the preset duration T01, the first electronic device 601 may determine that the handshake fails. In this case, the first electronic device 601 may restart the charging protocol handshake. When the restarted charging protocol handshake succeeds, the first electronic device 601 may adjust the output voltage of the first electronic device 601, to electrify the VBUS. In this way, the first electronic device 601 may provide the electric energy for the second electronic device 602 through the VBUS.

When the restarted charging protocol handshake fails, the first electronic device 601 may exit charging, so that the charging process between the first electronic device 601 and the second electronic device 602 is terminated.

It may be understood that, after switching the statuses of the first signal line and the second signal line, the second electronic device 602 may also detect a level on the first signal line (namely, an RX in the second electronic device 602). When the second electronic device 602 detects a high level on the first signal line within the preset duration T02, the second electronic device 602 may determine that the handshake between the second electronic device 602 used as the charged device and the first electronic device 601 used as the power supply device succeeds. After the second electronic device 602 determines that the handshake between the second electronic device 602 and the first electronic device 601 succeeds, the second electronic device 602 may detect that a voltage on the VBUS meets a preset condition. When the second electronic device 602 detects, within the preset duration T03, that the voltage on the VBUS meets the preset condition, the second electronic device 602 may determine that a power connection between the second electronic device 602 and the first electronic device 601 succeeds, to be specific, determine that the second electronic device 602 may communicate with the first electronic device 601 according to a charging protocol. In this way, the second electronic device 602 may receive, according to the charging protocol, the electric energy provided by the first electronic device 601.

The preset condition may be determined based on the preset value B. For details, refer to descriptions of the foregoing preset condition.

Similarly, when detecting no high level on the first signal line within the preset duration T02 or not detecting, within the preset duration T03, that the voltage on the VBUS meets the preset condition (to be specific, the voltage on the VBUS within the preset duration T03 does not meet the preset condition), the second electronic device 602 may determine that the handshake fails. In this case, the second electronic device 602 may restart the charging protocol handshake. When the restarted charging protocol handshake succeeds, and it is detected, within the preset duration T03 after the handshake succeeds, that the voltage on the VBUS meets the preset condition, the second electronic device 602 may determine that the power connection between the second electronic device 602 and the first electronic device 601 succeeds, to be specific, determine that the second electronic device 602 may communicate with the first electronic device 601 according to the charging protocol. In this case, the second electronic device 602 may receive, according to the charging protocol, the electric energy provided by the first electronic device 601.

When the restarted charging protocol handshake fails, the second electronic device 602 may exit charging, so that the charging process between the first electronic device 601 and the second electronic device 602 is terminated.

It should be noted that the foregoing descriptions that the first electronic device 601 or the second electronic device 602 exits charging when the restarted charging protocol handshake fails are merely an example for explanation, and should not be construed as a limitation on embodiments of this application. A quantity of restarted charging protocol handshakes is not limited in embodiments of this application, and may be specifically determined based on an actual scenario.

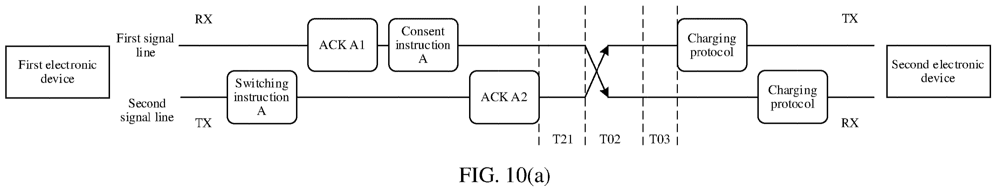

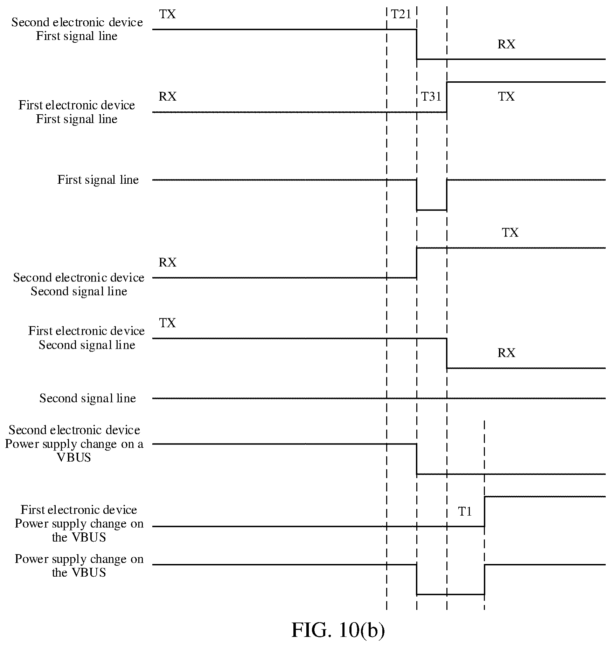

FIG. 10(a) and FIG. 10(b) are a diagram of signal switching in power role switching according to an embodiment of this application. In FIG. 10(a) and FIG. 10(b), switching of the power role shown in FIG. 9A to FIG. 9C is used as an example for description.

As shown in FIG. 10(a) and FIG. 10(b), initially, in a charging process in which the first electronic device 601 is a charged device and the second electronic device 602 is a power supply device, for the first electronic device 601, the first signal line may be an RX, and the second signal line may be a TX; and for the second electronic device 602, the first signal line may be a TX, and the second signal line may be an RX.

When the first electronic device 601 detects a switching operation, the first electronic device 601 may determine whether the first electronic device 601 meets the switching condition A. As shown in FIG. 10(a), when the first electronic device 601 meets the switching condition A, the first electronic device 601 may send the switching instruction A to the second electronic device 602 through the second signal line.

After receiving the switching instruction A, the second electronic device 602 may send the ACK A1 and the consent instruction A to the first electronic device 601 through the first signal line.

The first electronic device 601 receives the ACK A1 and the consent instruction A, and may send the ACK A2 to the second electronic device 602 through the second signal line.

As shown in FIG. 10(a) and FIG. 10(b), after receiving the ACK A2, the second electronic device 602 may adjust an output voltage of the second electronic device 602 after the preset duration T21, to de-electrify the VBUS. In this way, the second electronic device 602 stops power supply, and may exchange the TX and the RX in the second electronic device 602.

As shown in FIG. 10(b), the first electronic device 601 may exchange the TX and the RX in the first electronic device 601 after the preset duration T31 within which the second electronic device 602 switches statuses of the first signal line and the second signal line in the second electronic device 602, and may adjust an output voltage of the first electronic device 601 after the preset duration T1 of determining that a handshake between the first electronic device 601 used as a power supply device and the second electronic device 602 used as a charged device succeeds, to electrify the VBUS. It should be understood that, in FIG. 10(b), an example in which the first electronic device 601 detects the high level on the second signal line after the first electronic device 601 exchanges the TX and the RX in the first electronic device 601, to determine that the handshake between the first electronic device 601 and the second electronic device 602 succeeds is used for description.

As shown in FIG. 10(a), after exchanging the TX and the RX in the second electronic device 602, the second electronic device 602 may determine whether a high level on the first signal line is detected within the preset duration T02. After the second electronic device 602 detects the high level on the first signal line within the preset duration T02, the second electronic device 602 may determine that the handshake between the second electronic device 602 and the first electronic device 601 succeeds. After determining that the handshake between the second electronic device 602 and the first electronic device 601 succeeds, the second electronic device 602 may detect whether a voltage on the VBUS meets a preset condition. When detecting, within the preset duration T03, that the voltage on the VBUS meets the preset condition, the second electronic device 602 may determine that a power connection between the second electronic device 602 and the first electronic device 601 succeeds, to be specific, determine that the second electronic device 602 may communicate with the first electronic device 601 according to a charging protocol. In this way, the second electronic device 602 may receive, according to the charging protocol, electric energy provided by the first electronic device 601.

As shown in FIG. 10(b), after the power role is switched, for the first electronic device 601, the first signal line may be a TX, and the second signal line may be an RX; and for the second electronic device 602, the first signal line may be an RX, and the second signal line may be a TX. In addition, a power supply change on the VBUS may also be shown in FIG. 10(b). In other words, as shown in FIG. 10(b), initially, the second electronic device 602 may provide electric energy for the first electronic device 601 through the VBUS. After switching is completed, the first electronic device 601 may provide the electric energy for the second electronic device 602 through the VBUS.

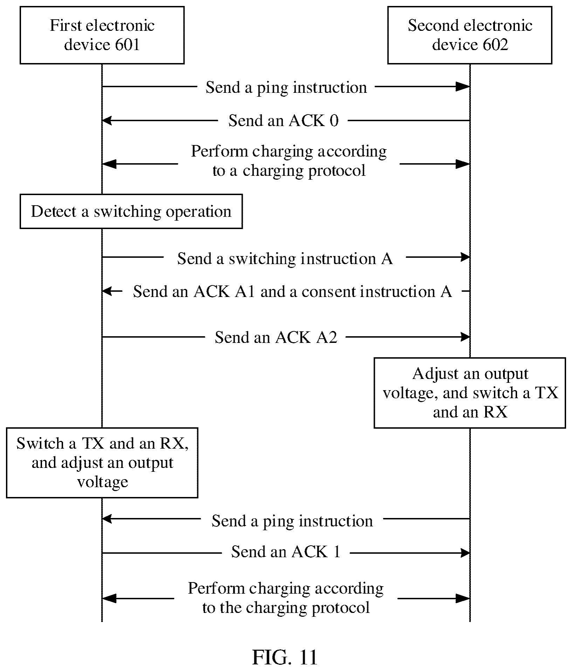

FIG. 11 is a schematic flowchart 2 of a power role switching method according to an embodiment of this application. In this embodiment, an example in which the first electronic device 601 detects a switching operation, to switch a power role is used for description.

Initially, the first electronic device 601 may be connected to the second electronic device 602 through a charging cable. In this case, the first electronic device 601 may be identified as a charged device, and the second electronic device 602 may be identified as a power supply device. After the first electronic device 601 is identified as the charged device and the second electronic device 602 is identified as the power supply device, the first electronic device 601 may send a ping instruction to the second electronic device 602, to conform whether the first electronic device 601 is connected to the second electronic device 602.

After receiving the ping instruction, the second electronic device 602 may send, to the first electronic device 601, an ACK (which may be referred to as an ACK 0 below) for confirming that the ping instruction is received.

After the first electronic device 601 receives the ACK 0, the first electronic device 601 and the second electronic device 602 may perform charging according to a charging protocol, to be specific, the first electronic device 601 may receive, according to the charging protocol, electric energy provided by the second electronic device 602.

In a process in which the first electronic device 601 receives the electric energy provided by the second electronic device 602, when a user wants to trigger switching of the power role on the first electronic device 601, the user may perform the switching operation on the first electronic device 601.

As shown in FIG. 11, when the first electronic device 601 detects the switching operation, the first electronic device 601 may send the switching instruction A to the second electronic device 602.

After receiving the switching instruction A, the second electronic device 602 may send, to the first electronic device 601, the ACK A1 for confirming that the switching instruction A is received and the consent instruction A.

After receiving the ACK A1 and the consent instruction A, the first electronic device 601 may return, to the second electronic device 602, the ACK A2 for confirming that the consent instruction A is received.

After receiving the ACK A2, the second electronic device 602 may adjust an output voltage of the second electronic device 602 after the preset duration T21, to de-electrify a VBUS, and may switch statuses of a first signal line and a second signal line in the second electronic device 602.

After returning the ACK A2 to the second electronic device 602, the first electronic device 601 may determine the time A at which the second electronic device 602 switches the statuses of the first signal line and the second signal line in the second electronic device 602. The first electronic device 601 may first switch statuses of the first signal line and the second signal line in the first electronic device 601 after the preset duration T31 of the time A. Then, the first electronic device 601 may adjust an output voltage of the first electronic device 601 after the preset duration T1 of determining that a handshake between the first electronic device 601 used as a power supply device and the second electronic device 602 used as a charged device succeeds, to electrify the VBUS. In this way, the first electronic device 601 may provide electric energy for the second electronic device 602 through the VBUS.

To be specific, after switching the statuses of the first signal line and the second signal line in the first electronic device 601, the first electronic device 601 may determine whether a high level on the second signal line (namely, an RX in the first electronic device 601) is detected. When detecting the high level on the second signal line within the preset duration T01, the first electronic device 601 may determine that the handshake between the first electronic device 601 and the second electronic device 602 succeeds. The first electronic device 601 may adjust the output voltage of the first electronic device 601 after the preset duration T1 of determining that the handshake succeeds, to electrify the VBUS. In this way, the first electronic device 601 may provide the electric energy for the second electronic device 602 through the VBUS.

It may be understood that, after the first electronic device 601 is switched to the power supply device and the second electronic device 602 is switched to the charged device, the second electronic device 602 may send a ping instruction to the first electronic device 601, to confirm whether the second electronic device 602 is connected to the first electronic device 601.

After receiving the ping instruction, the first electronic device 601 may send, to the second electronic device 602, an ACK (which may be referred to as an ACK 1 below) for confirming that the ping instruction is received.

After the second electronic device 602 receives the ACK 1, the second electronic device 602 and the first electronic device 601 may perform charging according to a charging protocol, to be specific, the first electronic device 601 may provide the electric energy for the second electronic device 602 according to the charging protocol.

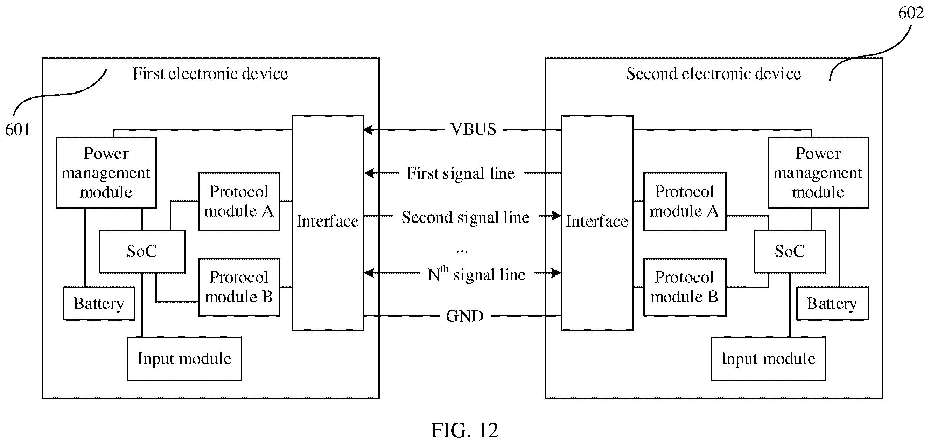

FIG. 12 is a diagram 2 of a power role switching system according to an embodiment of this application.

As shown in FIG. 12, the first electronic device 601 and the second electronic device 602 each may include an interface, a protocol module A, a protocol module B, a system on chip (system on chip, SoC), a power management module, an input module, a battery, and the like. It should be understood that the interface may match a charging cable, to be specific, the interface may include pins corresponding to a signal line, a VBUS, a CC, a GND, and the like in the charging cable. In this way, the first electronic device 601 may be connected to the second electronic device 602 through the charging cable.

The protocol module A and/or the protocol module B may be configured to provide a charging protocol (for example, a CC-based charging protocol or a charging protocol based on two signal lines) used in a charging process. The power management module may be configured to receive a charging input, to charge the battery, or may be used for a power supply output, to provide electric energy for another battery. The SoC may be configured to control a charging receiving process or a power supply output process. The input module may be configured to receive a related operation input by a user.

With reference to the system shown in FIG. 12 and detection of a switching operation on the first electronic device 601, the following describes an example of switching of a power role.

Initially, the first electronic device 601 may be connected to the second electronic device 602 through a charging cable. In this case, the first electronic device 601 may be identified as a charged device, and the second electronic device 602 may be identified as a power supply device. Then, the first electronic device 601 and the second electronic device 602 may start a charging protocol handshake. When the charging protocol handshake succeeds, the first electronic device 601 and the second electronic device 602 may enter a normal charging process, to be specific, the first electronic device 601 may receive electric energy provided by the second electronic device 602. It should be understood that, when the charging protocol handshake fails, the first electronic device 601 and the second electronic device 602 may exit charging.

In a process in which the first electronic device 601 receives the electric energy provided by the second electronic device 602, when the user wants to trigger switching of the power role on the first electronic device 601, the user may perform the switching operation on the first electronic device 601. To be specific, the input module (which may be referred to as a first input module below) of the first electronic device 601 may detect a user operation on the first electronic device 601. When the first input module detects the user operation, the first input module may send related information corresponding to the user operation to the SoC (which may be referred to as a first SoC below) of the first electronic device 601.

After receiving the related information corresponding to the user operation, the first SoC may determine whether the user operation is the switching operation for switching the power role. When determining that the user operation is the switching operation, the first SoC may determine whether the first electronic device 601 meets the switching condition A. When the first electronic device 601 meets the switching condition A, the first SoC may indicate the protocol module A or the protocol module B (which may be collectively referred to as a first protocol module below) of the first electronic device 601 to send the switching instruction A to the second electronic device 602. When it is determined that the user operation is not the switching operation, or the first electronic device 601 does not meet the switching condition A, the first SoC does not indicate the first protocol module to send the switching instruction A. In this way, the first electronic device 601 may still be used as the charged device, to receive the electric energy provided by the second electronic device 602.

The protocol module A or the protocol module B (which may be collectively referred to as a second protocol module below) of the second electronic device 602 may receive the switching instruction A sent by the first protocol module, may parse the received switching instruction A, to determine whether the switching instruction A sent by the first electronic device 601 is received, and may send a parsing result (to be specific, the switching instruction A is received or the switching instruction A is not received) to the SoC (which may be referred to as a second SoC below) of the second electronic device 602.

Alternatively, after receiving the switching instruction A, the second protocol module may send the switching instruction A to the second SoC. After receiving the switching instruction A, the second SoC may parse the switching instruction A, to determine whether the switching instruction A sent by the first electronic device 601 is received.

When receiving the switching instruction A sent by the first electronic device 601, the second SoC may indicate the second protocol module to send the ACK A1 and the consent instruction A to the first electronic device 601. It should be understood that, when receiving no switching instruction A sent by the first electronic device 601, the second SoC does not indicate the second protocol module to send the ACK A1 and the consent instruction A. In this way, the second electronic device 602 may still be used as the power supply device, to provide the electric energy for the first electronic device 601.

The first protocol module may receive the ACK A1 and the consent instruction A that are sent by the second protocol module, may parse the ACK A1 and the consent instruction A, to determine whether the ACK A1 and the consent instruction A that are returned by the second electronic device 602 are received, and may send a parsing result (to be specific, the ACK A1 and the consent instruction A are received, or the ACK A1 and the consent instruction A are not received) to the first SoC.

Alternatively, after receiving the ACK A1 and the consent instruction A, the first protocol module may send the ACK A1 and the consent instruction A to the first SoC. After receiving the ACK A1 and the consent instruction A, the first SoC may parse the ACK A1 and the consent instruction A, to determine whether the ACK A1 and the consent instruction A that are returned by the second electronic device 602 are received.

When receiving the ACK A1 and the consent instruction A that are returned by the second electronic device 602, the first protocol module may return, to the second electronic device 602, an ACK A2 for conforming that the consent instruction A is received, or the first SoC may indicate the first protocol module to return the ACK A2 to the second electronic device 602. When receiving no ACK A1 and consent instruction A, the first protocol module does not return the ACK A2, or the first SoC does not indicate the first protocol module to return the ACK A2. In this way, the first electronic device 601 may still be used as the charged device, to receive the electric energy provided by the second electronic device 602.

The second protocol module may receive the ACK A2 returned by the first protocol module, may determine, after parsing the ACK A2, whether the ACK A2 returned by the first electronic device 601 is received, and may send a parsing result (to be specific, the ACK A2 is received or the ACK A2 is not received) to the second SoC.

Alternatively, after receiving the ACK A2, the second protocol module may send the ACK A2 to the second SoC. After receiving the ACK A2, the second SoC may parse the ACK A2, to determine whether the ACK A2 returned by the first electronic device 601 is received.

After determining that the ACK A2 returned by the first electronic device 601 is received, the second SoC may indicate the power management module (which may be referred to as a second power management module below) to adjust an output voltage of the second electronic device 602 after the preset duration T21, to de-electrify the VBUS.

In addition, the second SoC may further indicate the second protocol module to switch statuses of the first signal line and the second signal line in the second electronic device 602. Alternatively, after receiving the ACK A2 returned by the first protocol module, the second protocol module may switch statuses of the first signal line and the second signal line in the second electronic device 602.

When receiving no ACK A2, the second SoC does not indicate the power management module to adjust the output voltage, and does not indicate the second protocol module to switch the statuses of the first signal line and the second signal line. In this way, the second electronic device 602 may still be used as the power supply device, to provide the electric energy for the first electronic device 601.

After returning the ACK A2, the first protocol module may determine the time A at which the second electronic device 602 switches the statuses of the first signal line and the second signal line in the second electronic device 602, and may switch statuses of the first signal line and the second signal line in the first electronic device 601 after the preset duration T31 of the time A. Alternatively, after the first protocol module returns the ACK A2, the first SoC may determine the time A at which the second electronic device 602 switches the statuses of the first signal line and the second signal line in the second electronic device 602, and may indicate, after the preset duration T31 of the time A, the first protocol module to switch the statuses of the first signal line and the second signal line in the first electronic device 601.

Then, after the preset duration T1 of determining that the handshake between the first electronic device 601 used as a power supply device and the second electronic device 602 used as a charged device succeeds, the first SoC may indicate the first power management module to adjust an output voltage of the first electronic device 601, to electrify the VBUS. In this way, the first electronic device 601 may provide electric energy for the second electronic device 602 through the VBUS.

To be specific, after switching the statuses of the first signal line and the second signal line, the first protocol module may detect a level on the second signal line (namely, an RX in the first electronic device 601). When the first protocol module detects a high level on the second signal line within the preset duration T01, the first protocol module may determine that the handshake between the first electronic device 601 and the second electronic device 602 succeeds, and send, to the first SoC, related information indicating that the handshake succeeds. After the preset duration T1 of determining that the handshake succeeds, the first SoC may indicate the first power management module to adjust the output voltage of the first electronic device 601, to electrify the VBUS. In this way, the first electronic device 601 may provide the electric energy for the second electronic device 602 through the VBUS.

Alternatively, after switching the statuses of the first signal line and the second signal line, the first protocol module may detect the level on the second signal line, and send the detected level to the first SoC. The first SoC may determine, based on the received level, whether the high level is detected within the preset duration T01. When the high level is detected, the first SoC may determine that the handshake between the first electronic device 601 and the second electronic device 602 succeeds, and may indicate, after the preset duration T1 of determining that the handshake succeeds, the first power management module to adjust the output voltage of the first electronic device 601, to electrify the VBUS. In this way, the first electronic device 601 may provide the electric energy for the second electronic device 602 through the VBUS.

It should be understood that, when the first protocol module does not detect the high level on the second signal line within the preset duration T01, the first protocol module may determine that the handshake fails. In this case, the first protocol module may restart the charging protocol handshake. When the restarted charging protocol handshake succeeds, the first protocol module may send, to the first SoC, the related information indicating that the handshake succeeds. After determining that the handshake succeeds, the first SoC may indicate the first power management module to adjust the output voltage of the first electronic device 601, to electrify the VBUS.

Alternatively, when the first SoC determines, based on the received level, that no high level is detected within the preset duration T01, the first SoC may determine that the handshake fails, and may indicate the first protocol module to restart the charging protocol handshake. When the restarted charging protocol handshake succeeds, the first SoC may indicate the first power management module to adjust the output voltage of the first electronic device 601, to electrify the VBUS.

When the restarted charging protocol handshake fails, the first SoC may exit charging, so that the charging process between the first electronic device 601 and the second electronic device 602 is terminated.

Whether the restarted handshake protocol succeeds may be determined by the first protocol module, or may be determined by the first SoC. For specific content, refer to the foregoing related content about whether the handshake succeeds.

It may be understood that, after switching the statuses of the first signal line and the second signal line, the second protocol module may also detect a level on the first signal line (namely, an RX in the second electronic device 602). When the second protocol module detects a high level on the first signal line within the preset duration T02, the second protocol module may determine that the handshake between the second electronic device 602 used as the charged device and the first electronic device 601 used as the power supply device succeeds, and send, to the second SoC, related information indicating that the handshake succeeds. After determining that the handshake between the second electronic device 602 and the first electronic device 601 succeeds, the second SoC may indicate the second power management module to detect a voltage on the VBUS.

After detecting the voltage on the VBUS, the second power management module may determine whether a voltage on the VBUS within the preset duration T03 meets a preset condition, and may send a determining result (to be specific, the voltage on the VBUS within the preset duration T03 meets the preset condition or does not meet the preset condition) to the second SoC. After receiving the determining result, the second SoC may determine, based on the determining result, whether the voltage on the VBUS within the preset duration T03 meets the preset condition. When the voltage on the VBUS within the preset duration T03 meets the preset condition, the second SoC may determine that a power connection between the second electronic device 602 and the first electronic device 601 succeeds, to be specific, determine that the second electronic device 602 may communicate with the first electronic device 601 according to a charging protocol. In this case, the second electronic device 602 may indicate the second protocol module to communicate with the first electronic device 601 according to the charging protocol.

Alternatively, after detecting the voltage on the VBUS, the second power management module may send the detected voltage to the second SoC. The second SoC may determine whether the voltage on the VBUS within the preset duration T03 meets the preset condition. When the voltage on the VBUS within the preset duration T03 meets the preset condition, the second SoC may determine that the power connection between the second electronic device 602 and the first electronic device 601 succeeds, to be specific, determine that the second electronic device 602 may communicate with the first electronic device 601 according to the charging protocol. In this case, the second electronic device 602 may indicate the second protocol module to communicate with the first electronic device 601 according to the charging protocol.

Alternatively, after determining that the handshake between the second electronic device 602 and the first electronic device 601 succeeds, the second protocol module may detect the voltage on the VBUS. After detecting the voltage on the VBUS, the second protocol module may determine whether the voltage on the VBUS within the preset duration T03 meets the preset condition. When the voltage on the VBUS within the preset duration T03 meets the preset condition, the second protocol module may determine that the power connection between the second electronic device 602 and the first electronic device 601 succeeds, to be specific, determine that the second electronic device 602 may communicate with the first electronic device 601 according to the charging protocol. In this case, the second protocol module communicates with the first electronic device 601 according to the charging protocol.

Alternatively, after detecting the voltage on the VBUS, the second protocol module may send the detected voltage to the second SoC. The second SoC may determine whether the voltage on the VBUS within the preset duration T03 meets the preset condition. When the voltage on the VBUS within the preset duration T03 meets the preset condition, the second SoC may determine that the power connection between the second electronic device 602 and the first electronic device 601 succeeds, to be specific, determine that the second electronic device 602 may communicate with the first electronic device 601 according to the charging protocol. In this case, the second SoC may indicate the second protocol module to communicate with the first electronic device 601 according to the charging protocol.

The preset condition may be determined based on the preset value B. For details, refer to descriptions of the foregoing preset condition.

Similarly, when detecting no high level on the first signal line within the preset duration T02 or not detecting, within the preset duration T03, that the voltage on the VBUS meets the preset condition (to be specific, the voltage on the VBUS within the preset duration T03 does not meet the preset condition), the second protocol module or the second SoC may determine that the handshake fails. In this case, the second protocol module may restart the charging protocol handshake, or the second SoC may indicate the second protocol module to restart the charging protocol handshake. When the restarted charging protocol handshake succeeds, and it is detected, within the preset duration T03 after the handshake succeeds, that the voltage on the VBUS meets the preset condition, the second protocol module or the second SoC may determine that the power connection between the second electronic device 602 and the first electronic device 601 succeeds, to be specific, determine that the second electronic device 602 may communicate with the first electronic device 601 according to the charging protocol. In this case, the second protocol module may communicate with the first electronic device 601 according to the charging protocol, or the second SoC may indicate the second protocol module to communicate with the first electronic device 601 according to the charging protocol.

When the restarted charging protocol handshake fails, the second SoC may exit charging, so that the charging process between the first electronic device 601 and the second electronic device 602 is terminated.

Whether the restarted handshake protocol succeeds may be determined by the second protocol module, or may be determined by the second SoC. For specific content, refer to the foregoing related content about whether the handshake succeeds.

2. The second electronic device 602 triggers switching of the power role in the charging process based on the switching operation detected by the second electronic device 602.

In a process in which the first electronic device 601 is the charged device, and the second electronic device 602 is the power supply device, to be specific, the second electronic device 602 provides the electric energy for the first electronic device 601, when the user wants to trigger switching of the power role on the second electronic device 602, the user may perform the switching operation on the second electronic device 602, for example, may tap the "Yes" button 7021 shown in FIG. 7(b). After detecting the switching operation, the second electronic device 602 may determine that the power role in the charging process needs to be switched. In this case, the second electronic device 602 may send a switching instruction (which may be referred to as a switching instruction B below) to the first electronic device 601. To be specific, the second electronic device 602 may send the switching instruction B to the first electronic device 601 through the first signal line. The switching instruction B is used to request to switch the first electronic device 601 to the power supply device, to implement switching of the power role in the charging process.

It should be understood that, when detecting the switching operation, the second electronic device 602 may adjust an output voltage of the second electronic device 602, for example, may adjust the output voltage of the second electronic device 602 to a preset value A, to de-electrify the VBUS. In this way, the second electronic device 602 stops providing the electric energy for the first electronic device 601 through the VBUS.

In addition, the second electronic device 602 may switch statuses of the first signal line and the second signal line in the second electronic device 602, to be specific, exchange the RX and the TX in the second electronic device 602. For example, initially, for the second electronic device 602, the first signal line may be the TX, and the second signal line may be the RX. After the statuses of the first signal line and the second signal line in the second electronic device 602 are switched, the first signal line may be an RX, and the second signal line may be a TX.

In an example, after receiving the switching instruction B, the first electronic device 601 may switch statuses of the first signal line and the second signal line in the first electronic device 601, to be specific, exchange the RX and the TX in the first electronic device 601. For example, initially, for the first electronic device 601, the first signal line may be the RX, and the second signal line may be the TX. After the statuses of the first signal line and the second signal line in the first electronic device 601 are switched, the first signal line may be a TX, and the second signal line may be an RX.

The first electronic device 601 may further adjust an output voltage of the first electronic device 601, for example, may adjust the output voltage of the first electronic device 601 to a preset value B, to electrify the VBUS. In this way, the first electronic device 601 may provide electric energy for the second electronic device 602 through the VBUS.

For example, to avoid a power supply conflict on the VBUS, and ensure effective switching of the power role, after switching the statuses of the first signal line and the second signal line, the first electronic device 601 may detect a level on the second signal line (namely, a switched RX). When the first electronic device 601 detects a high level on the second signal line within preset duration T01, the first electronic device 601 may determine that a handshake between the first electronic device 601 used as the power supply device and the second electronic device 602 used as the charged device succeeds. In this case, after preset duration T1 of determining that the handshake between the first electronic device 601 and the second electronic device 602 succeeds, the first electronic device 601 may adjust the output voltage of the first electronic device 601 to the preset value B, to electrify the VBUS. In this way, the first electronic device 601 may provide the electric energy for the second electronic device 602 through the VBUS.

In other words, after receiving the switching instruction B, the first electronic device 601 may first switch the statuses of the first signal line and the second signal line, and then may adjust the output voltage of the first electronic device 601 after the preset duration T1 of determining that the handshake between the first electronic device 601 used as the power supply device and the second electronic device 602 used as the charged device succeeds, to electrify the VBUS. In this way, the first electronic device 601 may provide the electric energy for the second electronic device 602 through the VBUS, to ensure effective switching of the power role.

When detecting no high level on the second signal line within the preset duration T01, the first electronic device 601 may restart a charging handshake protocol handshake. When the restarted charging protocol handshake succeeds, the first electronic device 601 may adjust the output voltage of the first electronic device 601, to electrify the VBUS. When the restarted charging protocol handshake fails, the first electronic device 601 may exit charging, so that the charging process between the first electronic device 601 and the second electronic device 602 is terminated.

It should be understood that, after switching the statuses of the first signal line and the second signal line, the second electronic device 602 may detect a level on the first signal line (namely, a switched RX). When the second electronic device 602 detects a high level on the first signal line within preset duration T02, the second electronic device 602 may determine that the handshake between the second electronic device 602 used as the charged device and the first electronic device 601 used as the power supply device succeeds. After the second electronic device 602 determines that the handshake between the second electronic device 602 and the first electronic device 601 succeeds, the second electronic device 602 may detect whether a voltage on the VBUS meets a preset condition. When the second electronic device 602 detects, within preset duration T03, that the voltage on the VBUS meets the preset condition, the second electronic device 602 may determine that a power connection between the second electronic device 602 and the first electronic device 601 succeeds, and may perform communication according to a charging protocol, to be specific, the second electronic device 602 may receive, according to the charging protocol, the electric energy provided by the first electronic device 601.

When the second electronic device 602 detects no high level on the first signal line within the preset duration T02, or the second electronic device 602 detects, within the preset duration T03, that the voltage on the VBUS does not meet the preset condition, the second electronic device 602 may restart the charging protocol handshake, to determine, based on the restarted charging protocol handshake, whether to receive the electric energy provided by the first electronic device 601.

The preset condition may be determined based on the preset value B. A specific manner of determining the preset condition may be determined based on an actual scenario. This is not specifically limited in embodiments of this application. Optionally, a voltage range may be determined based on the preset value B, and the preset condition may be that the voltage falls with the voltage range.

For example, when the preset value B is 5 V, it may be determined that the preset condition is that the voltage falls within [4.5 V, 5.5 V]. In other words, when the second electronic device 602 detects that the voltage on the VBUS falls within [4.5 V, 5.5 V], for example, detects that the voltage on the VBUS is 5.2 V, the second electronic device 602 may determine that the detected voltage on the VBUS meets the preset condition. When the second electronic device 602 detects that the voltage on the VBUS does not fall within [4.5 V, 5.5 V], for example, detects that the voltage on the VBUS is 2 V, the second electronic device 602 may determine that the detected voltage on the VBUS does not meet the preset condition.

For example, when the preset value B is 10 V, it may be determined that the preset condition is that the voltage falls within [8.5 V, 11.5 V]. In other words, when the second electronic device 602 detects that the voltage on the VBUS falls within [8.5 V, 11.5 V], for example, detects that the voltage on the VBUS is 10.2 V, the second electronic device 602 may determine that the detected voltage on the VBUS meets the preset condition. When the second electronic device 602 detects that the voltage on the VBUS does not fall within [8.5 V, 11.5 V], for example, detects that the voltage on the VBUS is 2 V, the second electronic device 602 may determine that the detected voltage on the VBUS does not meet the preset condition.

For example, when the preset value B is 15 V, it may be determined that the preset condition is that the voltage falls within [12 V, 16 V]. In other words, when the second electronic device 602 detects that the voltage on the VBUS falls within [12 V, 16 V], for example, detects that the voltage on the VBUS is 14 V, the second electronic device 602 may determine that the detected voltage on the VBUS meets the preset condition. When the second electronic device 602 detects that the voltage on the VBUS does not fall within [12 V, 16 V], for example, detects that the voltage on the VBUS is 5 V, the second electronic device 602 may determine that the detected voltage on the VBUS does not meet the preset condition.

In another example, after receiving the switching instruction B, the first electronic device 601 may first determine whether the first electronic device 601 meets a switching condition (which may be referred to as a switching condition B below), to be specific, determine whether the first electronic device 601 can be switched to the power supply device, to switch the power role when the first electronic device 601 meets the switching condition B. This ensures effectiveness of switching the power role, and improves user experience.

It may be understood that the switching condition B may be specifically determined based on an actual scenario. This is not limited in embodiments of this application. For example, it may be determined, based on the actual scenario, that the switching condition B includes at least one of a battery level, a battery temperature, cable impedance, voltage and current precision, and a port leakage current.

For example, the switching condition B may be that the battery level is greater than a preset battery level (which is referred to as a preset battery level B below). The battery level and the preset battery level B may be represented using a percentage of a battery capacity. For example, the preset battery level B may be 70% of the battery capacity. In other words, when the first electronic device 601 determines that the battery level of the first electronic device 601 is less than or equal to the preset battery level B, for example, when the battery level of the first electronic device 601 is 90%, the first electronic device 601 may determine that the first electronic device 601 meets the switching condition B.

For example, the switching condition B may be that the battery temperature is less than or equal to a preset temperature (which may be referred to as a preset temperature B below). For example, the preset temperature B may be 20 degrees. In other words, when the first electronic device 601 determines that the battery temperature of the first electronic device 601 is less than or equal to 20 degrees, the first electronic device 601 may determine that the first electronic device 601 meets the switching condition B.

For example, the switching condition B may be that the battery level is greater than the preset battery level B, and the battery temperature is less than or equal to the preset temperature B. In other words, when the first electronic device 601 determines that the battery level of the first electronic device 601 is greater than the preset battery level B, and the battery temperature of the first electronic device 601 is less than or equal to the preset temperature B, the first electronic device 601 may determine that the first electronic device 601 meets the switching condition B.

When the first electronic device 601 meets the switching condition B, the first electronic device 601 may send, to the second electronic device 602, an ACK (which may be referred to as an ACK B1 below) for confirming that the switching instruction B is received, and a consent instruction (which may be referred to as a consent instruction B below) for consenting to switching. To be specific, the first electronic device 601 may send the ACK B1 and the consent instruction B to the second electronic device through the second signal line (namely, the TX in the first electronic device 601).

For example, after receiving the ACK B1 and the consent instruction B that are returned by the first electronic device 601, the second electronic device 602 may adjust the output voltage of the second electronic device 602, to de-electrify the VBUS. In this way, the second electronic device 602 stops power supply, so that the second electronic device 602 no longer provides the electric energy for the first electronic device 601 through the VBUS. In addition, the second electronic device 602 may further switch the statuses of the first signal line and the second signal line in the second electronic device 602.

After sending the ACK B1 and the consent instruction B to the second electronic device 602, the first electronic device 601 may switch the statuses of the first signal line and the second signal line in the first electronic device 601, and may adjust the output voltage of the first electronic device 601, to electrify the VBUS. In this way, the first electronic device 601 may provide the electric energy for the second electronic device 602 through the VBUS.

For example, after receiving the ACK B1 and the consent instruction B that are returned by the first electronic device 601, the second electronic device 602 may return, to the first electronic device 601, an ACK (which may be referred to as an ACK B2 below) for confirming that the consent instruction B is received. To be specific, the second electronic device 602 may send the ACK B2 to the first electronic device 601 through the first signal line (namely, the TX in the second electronic device 602).

After receiving the ACK B1 and the consent instruction B that are returned by the first electronic device 601, or returning the ACK B2 to the first electronic device 601, the second electronic device 602 may adjust the output voltage of the second electronic device 602, to de-electrify the VBUS. In this way, the second electronic device 602 stops providing the electric energy for the first electronic device 601. The second electronic device 602 may further switch the statuses of the first signal line and the second signal line in the second electronic device 602.

Alternatively, the first electronic device 601 requires time to parse the ACK B2, to determine whether the power role indeed needs to be switched. Therefore, to ensure accurate switching of the power role, the second electronic device 602 may adjust the output voltage of the second electronic device 602 after preset duration (which may be referred to as preset duration T22 below) of returning the ACK B2, to stop power supply, and switch the statuses of the first signal line and the second signal line in the second electronic device 602.

After receiving the ACK B2 returned by the second electronic device 602, the first electronic device 601 may switch the statuses of the first signal line and the second signal line in the first electronic device 601, and may adjust the output voltage of the first electronic device 601, to electrify the VBUS. In this way, the first electronic device 601 may provide the electric energy for the second electronic device 602 through the VBUS.

Optionally, after receiving the ACK B2 returned by the second electronic device 602, the first electronic device 601 may first switch the statuses of the first signal line and the second signal line in the first electronic device 601, and may adjust the output voltage of the first electronic device 601 after the preset duration T1 of determining that the handshake between the first electronic device 601 used as the power supply device and the second electronic device 602 used as the charged device succeeds, to electrify the VBUS. In this way, the first electronic device 601 may provide the electric energy for the second electronic device 602 through the VBUS.

Optionally, after receiving the ACK B2 returned by the second electronic device 602, the first electronic device 601 may determine time A at which the second electronic device 602 switches the statuses of the first signal line and the second signal line in the second electronic device 602. Then, the first electronic device 601 may switch the statuses of the first signal line and the second signal line in the first electronic device 601 after preset duration (which may be referred to as preset duration T32 below) of the time A, and adjust the output voltage of the first electronic device 601. In other words, after the second electronic device 602 determines to switch the role, to be specific, after the second electronic device 602 is switched to the charged device, the first electronic device 601 may switch the first electronic device 601 to the power supply device. This effectively ensures accuracy of switching the power role.

For example, the first electronic device 601 may first switch the statuses of the first signal line and the second signal line in the first electronic device 601 after the preset duration T32 of the time A. Then, the first electronic device 601 may adjust the output voltage of the first electronic device 601 after the preset duration T1 of determining that the handshake between the first electronic device 601 used as the power supply device and the second electronic device 602 used as the charged device succeeds, to electrify the VBUS. In this way, the first electronic device 601 may provide the electric energy for the second electronic device 602 through the VBUS, to reduce the power supply conflict on the VBUS.

It should be noted that values of the preset duration T22 and the preset duration T32 may be specifically determined based on an actual scenario. This is not limited in embodiments of this application. For example, the preset duration T22 may be set to any value like 2 ms, 5 ms, or 10 ms based on the actual scenario. For example, the preset duration T32 may be set to any value like 3 ms, 5 ms, or 10 ms based on the actual scenario.

It may be understood that, when the first electronic device 601 does not meet the switching condition B, the first electronic device 601 may refuse to switch the power role, and may send a refusal instruction (which may be referred to as a refusal instruction B below) to the second electronic device 602. To be specific, the first electronic device 601 may send the refusal instruction B to the second electronic device 602 through the second signal line. When receiving the refusal instruction B returned by the first electronic device 601, the second electronic device 602 may determine that the first electronic device 601 refuses to switch the power role. In this case, the second electronic device 602 does not switch the statuses of the first signal line and the second signal line in the second electronic device 602, and the first electronic device 601 does not switch the statuses of the first signal line and the second signal line in the first electronic device 601. In this way, the first electronic device 601 may still be used as the charged device, and the second electronic device 602 may still be used as the power supply device.

It should be noted that a format and/or content of the consent instruction B may be the same as or different from that of the consent instruction A. Formats and/or content of the ACK B1, the ACK B2, the ACK A1, and the ACK A2 may be the same, or may be different.

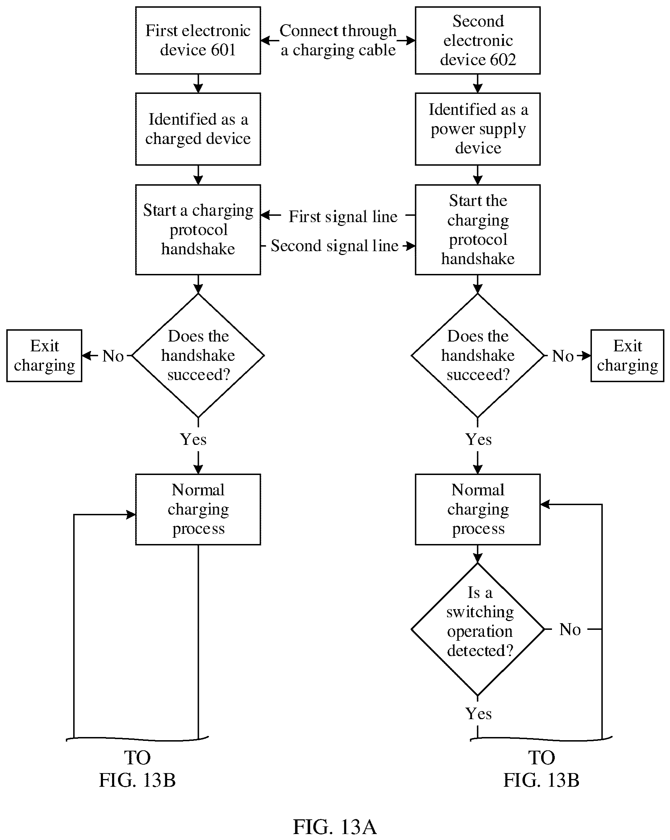

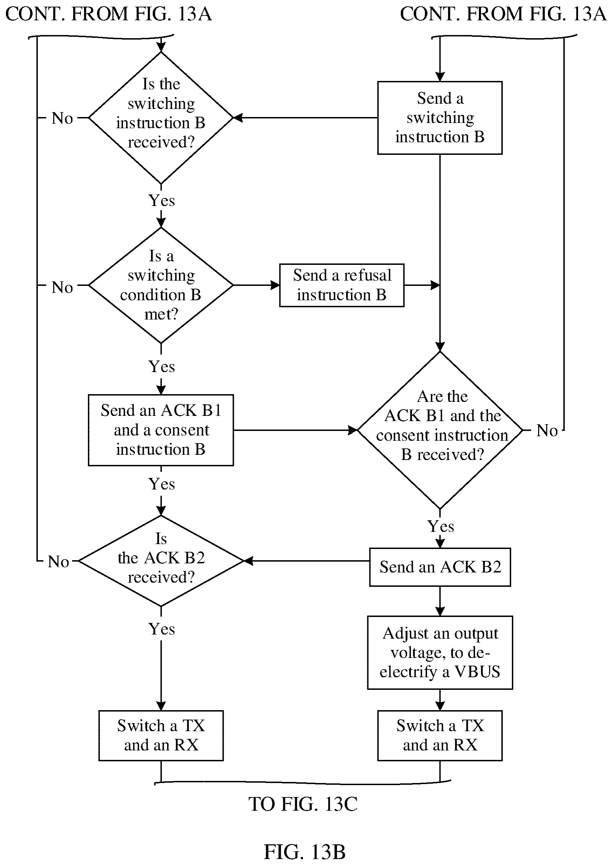

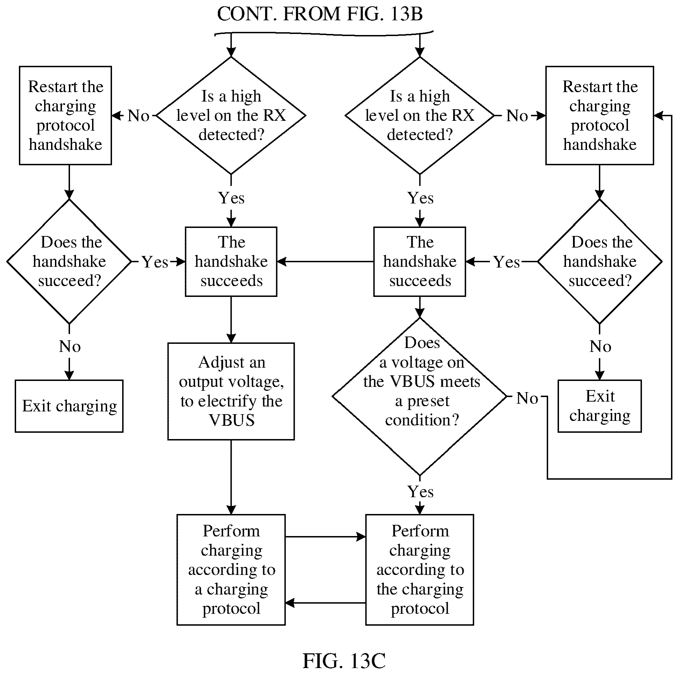

FIG. 13A to FIG. 13C are a schematic flowchart of a power role switching method according to another embodiment of this application. In this embodiment, an example in which the second electronic device 602 detects a switching operation, to switch a power role is used for description.

As shown in FIG. 13A to FIG. 13C, initially, the first electronic device 601 may be connected to the second electronic device 602 through a charging cable. In this case, the first electronic device 601 may be identified as a charged device, and the second electronic device 602 may be identified as a power supply device. Then, the first electronic device 601 and the second electronic device 602 may start a charging protocol handshake. When the charging protocol handshake succeeds, the first electronic device 601 and the second electronic device 602 may enter a normal charging process, to be specific, the second electronic device 602 may provide electric energy for the first electronic device 601. It should be understood that, when the charging protocol handshake fails, the first electronic device 601 and the second electronic device 602 may exit charging.

As shown in FIG. 13A to FIG. 13C, in a process in which the second electronic device 602 provides the electric energy for the first electronic device 601, when a user wants to trigger switching of the power role on the second electronic device 602, the user may perform the switching operation on the second electronic device 602. That is, the second electronic device 602 may detect the switching operation on the second electronic device 602. When detecting the switching operation, the second electronic device 602 may send the switching instruction B to the first electronic device 601. When detecting no switching operation, the second electronic device 602 may still be used as the power supply device, to provide the electric energy for the first electronic device 601.

The first electronic device 601 may determine whether the switching instruction B sent by the second electronic device 602 is received.

When receiving the switching instruction B, the first electronic device 601 may first determine whether the first electronic device 601 meets the switching condition B. When the first electronic device 601 meets the switching condition B, the first electronic device 601 may send the ACK B1 and the consent instruction B to the second electronic device 602. When the first electronic device 601 does not meet the switching condition B, the first electronic device 601 may send the refusal instruction B to the second electronic device 602. In this case, the first electronic device 601 may still be used as the charged device, to receive the electric energy provided by the second electronic device 602.

It should be understood that, when the first electronic device 601 does not receive the switching instruction B, the first electronic device 601 may still be used as the charged device, to receive the electric energy provided by the second electronic device 602.

The second electronic device 602 may determine whether the ACK B1 and the consent instruction B that are returned by the first electronic device 601 are received.

When receiving the ACK B1 and the consent instruction B that are returned by the first electronic device 601, the second electronic device 602 may return, to the first electronic device 601, the ACK B2 for confirming that the consent instruction B is received. When receiving no ACK B1 and consent instruction B, the second electronic device 602 may still be used as the power supply device, to provide the electric energy for the first electronic device 601.

The second electronic device 602 may adjust an output voltage of the second electronic device 602 after the preset duration T22 of returning the ACK B2 to the first electronic device 601, to de-electrify a VBUS. In this way, the second electronic device 602 stops providing the electric energy for the first electronic device 601. In addition, the second electronic device 602 may further switch statuses of a first signal line and a second signal line in the second electronic device 602.

The first electronic device 601 may determine whether the ACK B2 returned by the second electronic device 602 is received.

When receiving the ACK B2, the first electronic device 601 may determine the time A at which the second electronic device 602 switches the statuses of the first signal line and the second signal line in the second electronic device 602, and may first switch statuses of the first signal line and the second signal line in the first electronic device 601 after the preset duration T32 of the time A. Then, the first electronic device 601 may adjust an output voltage of the first electronic device 601 after the preset duration T1 of determining that the handshake between the first electronic device 601 used as a power supply device and the second electronic device 602 used as a charged device succeeds, to electrify the VBUS. In this way, the first electronic device 601 may provide electric energy for the second electronic device 602 through the VBUS.

It should be understood that, after switching the statuses of the first signal line and the second signal line, the second electronic device 602 may also determine whether the handshake between the second electronic device 602 and the first electronic device 601 succeeds, and after determining that the handshake succeeds, detect whether the voltage on the VBUS meets the preset condition, to determine whether the second electronic device 602 and the first electronic device 601 may perform charging according to charging protocol, to be specific, whether the second electronic device 602 may receive, according to the charging protocol, the electric energy provided by the first electronic device 601.

For specific content of determining whether the handshake between the first electronic device 601 used as the power supply device and the second electronic device 602 used as the charged device succeeds and detecting, by the second electronic device 602, whether the voltage on the VBUS meets the preset condition, refer to specific descriptions in FIG. 9A to FIG. 9C. Details are not described herein again.

It should be understood that, when receiving no ACK B2, the first electronic device 601 may still be used as the charged device, to receive the electric energy provided by the second electronic device 602.

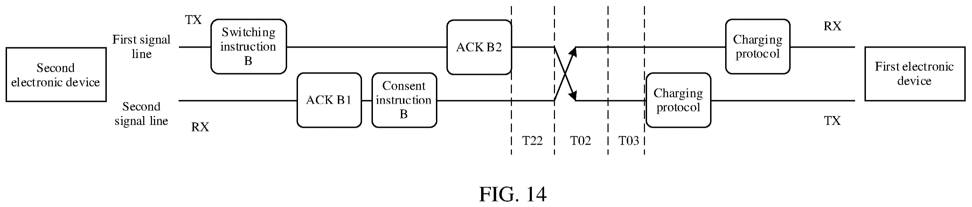

FIG. 14 is a diagram of signal switching in power role switching according to another embodiment of this application. In FIG. 14, switching of the power role shown in FIG. 13A to FIG. 13C is used as an example for description.

As shown in FIG. 14, initially, in a charging process in which the first electronic device 601 is a charged device and the second electronic device 602 is a power supply device, for the first electronic device 601, the first signal line may be an RX, and the second signal line may be a TX; and for the second electronic device 602, the first signal line may be a TX, and the second signal line may be an RX.

When the second electronic device 602 detects a switching operation, the second electronic device 602 may send the switching instruction B to the first electronic device 601 through the first signal line.

After receiving the switching instruction B, the first electronic device 601 may determine whether the first electronic device 601 meets the switching condition B. When the first electronic device 601 meets the switching condition B, the first electronic device 601 may send the ACK B1 and the consent instruction B to the second electronic device 602 through the second signal line.

The second electronic device 602 receives the ACK B1 and the consent instruction B, and may send the ACK B2 to the first electronic device 601 through the first signal line.

After the preset duration T22 of sending the ACK B2 by the second electronic device 602, the first electronic device 601 and the second electronic device 602 may start to adjust output voltages, and adjust statuses of the first signal line and the second signal line. In this way, the second electronic device 602 stops power supply, and the first electronic device 601 starts power supply.

As shown in FIG. 14, after exchanging the TX and the RX in the second electronic device 602, the second electronic device 602 may determine whether a high level on the first signal line is detected within the preset duration T02. After the second electronic device 602 detects the high level on the first signal line within the preset duration T02, the second electronic device 602 may determine that a handshake between the second electronic device 602 and the first electronic device 601 succeeds. After determining that the handshake between the second electronic device 602 and the first electronic device 601 succeeds, the second electronic device 602 may detect whether a voltage on the VBUS meets a preset condition. When detecting, within the preset duration T03, that the voltage on the VBUS meets the preset condition, the second electronic device 602 may determine that a power connection between the second electronic device 602 and the first electronic device 601 succeeds, to be specific, determine that the second electronic device 602 may communicate with the first electronic device 601 according to a charging protocol. In this way, the second electronic device 602 may receive, according to the charging protocol, electric energy provided by the first electronic device 601.

It should be noted that, in power role switching, for a change of the first signal line, a change of the second signal line, and a power supply change on the VBUS, refer to FIG. 10(b). Details are not described herein again.

With reference to the system shown in FIG. 12 and detection of a switching operation on the second electronic device 602, the following describes an example of switching of a power role.

Initially, the first electronic device 601 may be connected to the second electronic device 602 through a charging cable. In this case, the first electronic device 601 may be identified as a charged device, and the second electronic device 602 may be identified as a power supply device. Then, the first electronic device 601 and the second electronic device 602 may start a charging protocol handshake. When the charging protocol handshake succeeds, the first electronic device 601 and the second electronic device 602 may enter a normal charging process, to be specific, the second electronic device 602 may provide electric energy for the first electronic device 601. It should be understood that, when the charging protocol handshake fails, the first electronic device 601 and the second electronic device 602 may exit charging.

In a process in which the second electronic device 602 provides the electric energy for the first electronic device 601, when a user wants to trigger switching of the power role on the second electronic device 602, the user may perform the switching operation on the second electronic device 602. To be specific, the input module (which may be referred to as a second input module below) of the second electronic device 602 may detect a user operation on the second electronic device 602. When the second input module detects the user operation, the second input module may send related information corresponding to the user operation to a second SoC of the second electronic device 602.

After receiving the related information corresponding to the user operation, the second SoC may determine whether the user operation is the switching operation for switching the power role. When determining that the user operation is the switching operation, the second SoC may indicate a second protocol module to send the switching instruction B to the first electronic device 601. When detecting no switching operation, the second SoC does not indicate the second protocol module to send the switching instruction B. In this way, the second electronic device 602 may still be used as the power supply device to provide the electric energy for the first electronic device 601.

A first protocol module of the first electronic device 601 may receive the switching instruction B sent by the second protocol module, may parse the received switching instruction B, to determine whether the switching instruction B sent by the second electronic device 602 is received, and may send a parsing result (to be specific, the switching instruction B is received or the switching instruction B is not received) to a first SoC of the first electronic device 601.

Alternatively, after receiving the switching instruction B, the first protocol module may send the switching instruction B to the first SoC. After receiving the switching instruction B, the first SoC may parse the switching instruction B, to determine whether the switching instruction B sent by the second electronic device 602 is received.

When receiving the switching instruction B sent by the second electronic device 602, the first SoC may determine whether the first electronic device 601 meets the switching condition B. When the first electronic device 601 meets the switching condition B, the first SoC may indicate the first protocol module to send the ACK B1 and the consent instruction B to the second electronic device 602. When the first electronic device 601 does not meet the switching condition B, the first SoC may indicate the first protocol module to send the refusal instruction B to the second electronic device 602. In this case, the first electronic device 601 may still be used as the charged device, to receive the electric energy provided by the second electronic device 602.

It should be understood that, when receiving no switching instruction B sent by the second electronic device 602, the first electronic device 601 may still be used as the charged device, to receive the electric energy provided by the second electronic device 602.

The second protocol module may receive the ACK B1 and the consent instruction B that are sent by the first protocol module, may parse the ACK B1 and the consent instruction B, to determine whether the ACK A1 and the consent instruction A that are returned by the first electronic device 601 are received, and may send a parsing result (to be specific, the ACK B1 and the consent instruction B are received, or the ACK B1 and the consent instruction B are not received) to the second SoC.

Alternatively, after receiving the ACK B1 and the consent instruction B, the second protocol module may send the ACK B1 and the consent instruction B to the second SoC. After receiving the ACK B1 and the consent instruction B, the second SoC may parse the ACK B1 and the consent instruction B, to determine whether the ACK B1 and the consent instruction B that are returned by the first electronic device 601 are received.

When receiving the ACK B1 and the consent instruction B that are returned by the first electronic device 601, the second protocol module may return, to the first electronic device 601, the ACK B2 for confirming that the consent instruction B is received, or the second SoC may indicate the second protocol module to return the ACK B2 to the first electronic device 601. When receiving no ACK B1 and consent instruction B, the second protocol module does not return the ACK B2, or the second SoC does not indicate the second protocol module to return the ACK B2. In this way, the second electronic device 602 may still be used as the power supply device, to provide the electric energy for the first electronic device 601.

After the preset duration T22 of returning the ACK B2 to the first electronic device 601, the second SoC may indicate a second power management module to adjust the output voltage of the second electronic device 602, to de-electrify the VBUS. In this way, the second electronic device 602 stops providing the electric energy for the first electronic device 601. In addition, the second protocol module may switch statuses of the first signal line and the second signal line in the second electronic device 602. Alternatively, the second SoC may further indicate the second protocol module to switch the statuses of the first signal line and the second signal line in the second electronic device 602.

The first protocol module may receive the ACK B2 sent by the second protocol module, may parse the ACK B2, to determine whether the ACK B2 returned by the second electronic device 602 is received, and may send a parsing result (to be specific, the ACK B2 is received or the ACK B2 is not received) to the first SoC. Alternatively, after receiving the ACK B2, the first protocol module may send the ACK B2 to the first SoC. After receiving the ACK B2, the first SoC may parse the ACK B2, to determine whether the ACK B2 returned by the second electronic device 602 is received.

When receiving the ACK B2 returned by the second electronic device 602, the first protocol module may determine the time A at which the second electronic device 602 switches the statuses of the first signal line and the second signal line in the second electronic device 602, and may switch statuses of the first signal line and the second signal line in the first electronic device 601 after the preset duration T32 of the time A. Alternatively, the first SoC may determine the time A at which the second electronic device 602 switches the statuses of the first signal line and the second signal line in the second electronic device 602, and may indicate, after the preset duration T32 of the time A, the first protocol management module to switch the statuses of the first signal line and the second signal line in the first electronic device 601.

Then, after the preset duration T1 of determining that the handshake between the first electronic device 601 used as a power supply device and the second electronic device 602 used as a charged device succeeds, the first SoC may indicate the first power management module to adjust the output voltage of the first electronic device 601, to electrify the VBUS. In this way, the first electronic device 601 may provide electric energy for the second electronic device 602 through the VBUS.

To be specific, after switching the statuses of the first signal line and the second signal line, the first protocol module may detect a level on the second signal line. When the first protocol module detects a high level on the second signal line within the preset duration T01, the first protocol module may determine that the handshake between the first electronic device 601 and the second electronic device 602 succeeds, and send, to the first SoC, related information indicating that the handshake succeeds. After the preset duration T1 of determining that the handshake succeeds, the first SoC may indicate the first power management module to adjust the output voltage of the first electronic device 601, to electrify the VBUS. In this way, the first electronic device 601 may provide the electric energy for the second electronic device 602 through the VBUS.

Alternatively, after switching the statuses of the first signal line and the second signal line, the first protocol module may detect the level on the second signal line, and send the detected level to the first SoC. The first SoC may determine, based on the received level, whether the high level is detected within the preset duration T01. When the high level is detected, the first SoC may determine that the handshake between the first electronic device 601 and the second electronic device 602 succeeds, and may indicate, after the preset duration T1 of determining that the handshake succeeds, the first power management module to adjust the output voltage of the first electronic device 601, to electrify the VBUS. In this way, the first electronic device 601 may provide the electric energy for the second electronic device 602 through the VBUS.

It should be understood that, when the first protocol module does not detect the high level on the second signal line within the preset duration T01, the first protocol module may determine that the handshake fails. In this case, the first protocol module may restart the charging protocol handshake. When the restarted charging protocol handshake succeeds, the first protocol module may send, to the first SoC, the related information indicating that the handshake succeeds. The first SoC may indicate the first power management module to adjust the output voltage of the first electronic device 601, to electrify the VBUS.

Alternatively, when the first SoC determines, based on the received level, that no high level is detected within the preset duration T01, the first SoC may determine that the handshake fails, and may indicate the first protocol module to restart the charging protocol handshake. When the restarted charging protocol handshake succeeds, the first SoC may indicate the first power management module to adjust the output voltage of the first electronic device 601, to electrify the VBUS.

When the restarted charging protocol handshake fails, the first SoC may exit charging, so that the charging process between the first electronic device 601 and the second electronic device 602 is terminated.

Whether the restarted handshake protocol succeeds may be determined by the first protocol module, or may be determined by the first SoC. For specific content, refer to the foregoing related content about whether the handshake succeeds.

It may be understood that, after switching the statuses of the first signal line and the second signal line, the second protocol module may also detect a level on the first signal line. When the second protocol module detects a high level on the first signal line within the preset duration T02, the second protocol module may determine that the handshake between the second electronic device 602 used as the charged device and the first electronic device 601 used as the power supply device succeeds, and send, to the second SoC, related information indicating that the handshake succeeds. After determining that the handshake between the second electronic device 602 and the first electronic device 601 succeeds, the second SoC may indicate the second power management module to detect a voltage on the VBUS.

After detecting the voltage on the VBUS, the second power management module may determine whether a voltage on the VBUS within the preset duration T03 meets a preset condition, and may send a determining result (to be specific, the voltage on the VBUS within the preset duration T03 meets the preset condition or does not meet the preset condition) to the second SoC. After receiving the determining result, the second SoC may determine, based on the determining result, whether the voltage on the VBUS within the preset duration T03 meets the preset condition. When the voltage on the VBUS within the preset duration T03 meets the preset condition, the second SoC may determine that a power connection between the second electronic device 602 and the first electronic device 601 succeeds, to be specific, determine that the second electronic device 602 may communicate with the first electronic device 601 according to a charging protocol. In this case, the second electronic device 602 may indicate the second protocol module to communicate with the first electronic device 601 according to the charging protocol.

Alternatively, after detecting the voltage on the VBUS, the second power management module may send the detected voltage to the second SoC. The second SoC may determine whether the voltage on the VBUS within the preset duration T03 meets the preset condition. When the voltage on the VBUS within the preset duration T03 meets the preset condition, the second SoC may determine that the power connection between the second electronic device 602 and the first electronic device 601 succeeds, to be specific, determine that the second electronic device 602 may communicate with the first electronic device 601 according to the charging protocol. In this case, the second electronic device 602 may indicate the second protocol module to communicate with the first electronic device 601 according to the charging protocol.

Alternatively, after determining that the handshake between the second electronic device 602 and the first electronic device 601 succeeds, the second protocol module may detect the voltage on the VBUS. After detecting the voltage on the VBUS, the second protocol module may determine whether the voltage on the VBUS within the preset duration T03 meets the preset condition. When the voltage on the VBUS within the preset duration T03 meets the preset condition, the second protocol module may determine that the power connection between the second electronic device 602 and the first electronic device 601 succeeds, to be specific, determine that the second electronic device 602 may communicate with the first electronic device 601 according to the charging protocol. In this case, the second protocol module may communicate with the first electronic device 601 according to the charging protocol.

Alternatively, after detecting the voltage on the VBUS, the second protocol module may send the detected voltage to the second SoC. The second SoC may determine whether the voltage on the VBUS within the preset duration T03 meets the preset condition. When the voltage on the VBUS within the preset duration T03 meets the preset condition, the second SoC may determine that the power connection between the second electronic device 602 and the first electronic device 601 succeeds, to be specific, determine that the second electronic device 602 may communicate with the first electronic device 601 according to the charging protocol. In this case, the second electronic device 602 may indicate the second protocol module to communicate with the first electronic device 601 according to the charging protocol.

The preset condition may be determined based on the preset value B. For details, refer to descriptions of the foregoing preset condition.

Similarly, when detecting no high level on the first signal line within the preset duration T02 or not detecting, within the preset duration T03, that the voltage on the VBUS meets the preset condition (to be specific, the voltage on the VBUS within the preset duration T03 does not meet the preset condition), the second protocol module or the second SoC may determine that the handshake fails. In this case, the second protocol module may restart the charging protocol handshake, or the second SoC may indicate the second protocol module to restart the charging protocol handshake. When the restarted charging protocol handshake succeeds, and it is detected, within the preset duration T03 after the handshake succeeds, that the voltage on the VBUS meets the preset condition, the second protocol module or the second SoC may determine that the power connection between the second electronic device 602 and the first electronic device 601 succeeds, to be specific, determine that the second electronic device 602 may communicate with the first electronic device 601 according to the charging protocol. In this case, the second protocol module may communicate with the first electronic device 601 according to the charging protocol, or the second SoC may indicate the second protocol module to communicate with the first electronic device 601 according to the charging protocol.

When the restarted charging protocol handshake fails, the second SoC may exit charging, so that the charging process between the first electronic device 601 and the second electronic device 602 is terminated.

Whether the restarted handshake protocol succeeds may be determined by the second protocol module, or may be determined by the second SoC. For specific content, refer to the foregoing related content about whether the handshake succeeds.

It should be understood that, when receiving no ACK B2, the first electronic device 601 may still be used as the charged device, to receive the electric energy provided by the second electronic device 602.

In a possible implementation, as shown in (b) in FIG. 6, the charging cable may further include a CC. To be specific, the first electronic device 601 may be further connected to the second electronic device 602 through the CC. When the first electronic device 601 or the second electronic device 602 detects the switching operation, the first electronic device 601 may switch a level status of the CC in the first electronic device 601, and the second electronic device 602 may also switch a level status of the CC in the second electronic device 602.

It may be understood that the first electronic device 601 and the second electronic device 602 may include a pin (for example, a CC 1) corresponding to the CC. The first electronic device 601 may adjust the level status of the CC in the first electronic device 601 by adjusting the CC 1 in the first electronic device 601. Similarly, the second electronic device 602 may adjust the level status of the CC in the second electronic device 602 by adjusting the CC 1 in the second electronic device 602.

For example, initially, the first electronic device 601 may be a charged device, and the second electronic device 602 may be a power supply device. In this case, the CC 1 in the first electronic device 601 may be pulled down via a resistor Rd, to generate a pull-down signal. The CC 1 in the second electronic device 602 may be pulled up via a resistor Rp, to generate a pull-up signal. When detecting the switching operation, the first electronic device 601 may pull up the CC 1 in the first electronic device 601 via a resistor Rp, to generate a pull-up signal. The second electronic device 602 may pull down the CC 1 in the second electronic device 602 via resistor Rd, to generate a pull-down signal.

In an example, when the first electronic device 601 is further connected to the second electronic device 602 through the CC, the first electronic device 601 and the second electronic device 602 may still adjust the output voltage of the first electronic device 601 and the output voltage of the second electronic device 602 using related instructions (for details, refer to the foregoing descriptions) received on the first signal line and the second signal line, to adjust the power role in the charging process.

In another example, when the first electronic device 601 is further connected to the second electronic device 602 through the CC, the first electronic device 601 may determine a charging status of the second electronic device 602 based on the level status of the CC in the first electronic device 601, namely, a signal detected by the first electronic device 601 on the CC. Similarly, the second electronic device 602 may also determine a charging status of the first electronic device 601 based on the level status of the CC in the second electronic device 602, namely, a signal detected by the second electronic device 602 on the CC. Therefore, the first electronic device 601 and the second electronic device 602 may respectively adjust the output voltages based on the charging status of the first electronic device 601 and the charging status of the second electronic device 602, to adjust the power role in the charging process.

In other words, in this embodiment, when the power role needs to be switched, to be specific, when the switching operation is detected, the first electronic device 601 and the second electronic device 602 may separately adjust the power role according to a charging protocol in which communication is performed based on the CC, to be specific, switch the charging statuses of the first electronic device 601 and the second electronic device 602, and adjust power supply on the VBUS based on the charging statuses of the first electronic device 601 and the second electronic device 602. In addition, the first electronic device 601 may switch the statuses of the first signal line and the second signal line in the first electronic device 601 according to related instructions transmitted through the first signal line and the second signal line. The second electronic device 602 may also switch the statuses of the first signal line and the second signal line in the second electronic device 602 according to related instructions transmitted through the first signal line and the second signal line.

It should be understood that, for specific content of determining, by the first electronic device 601, the charging status of the second electronic device 602 based on the signal detected on the CC, and determining, by the second electronic device 602, the charging status of the first electronic device 601 based on the signal detected on the CC, refer to related descriptions in FIG. 1 to FIG. 3. Details are not described herein again.

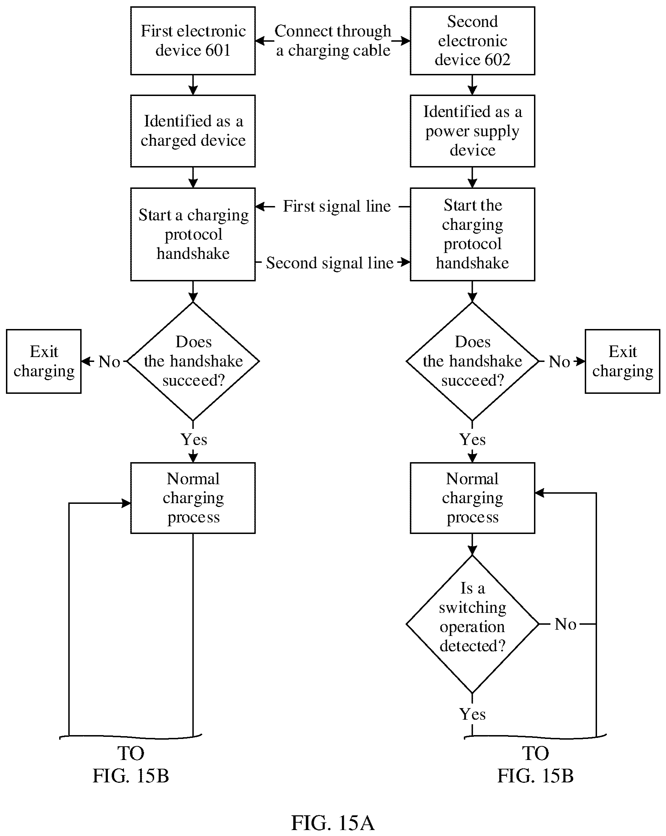

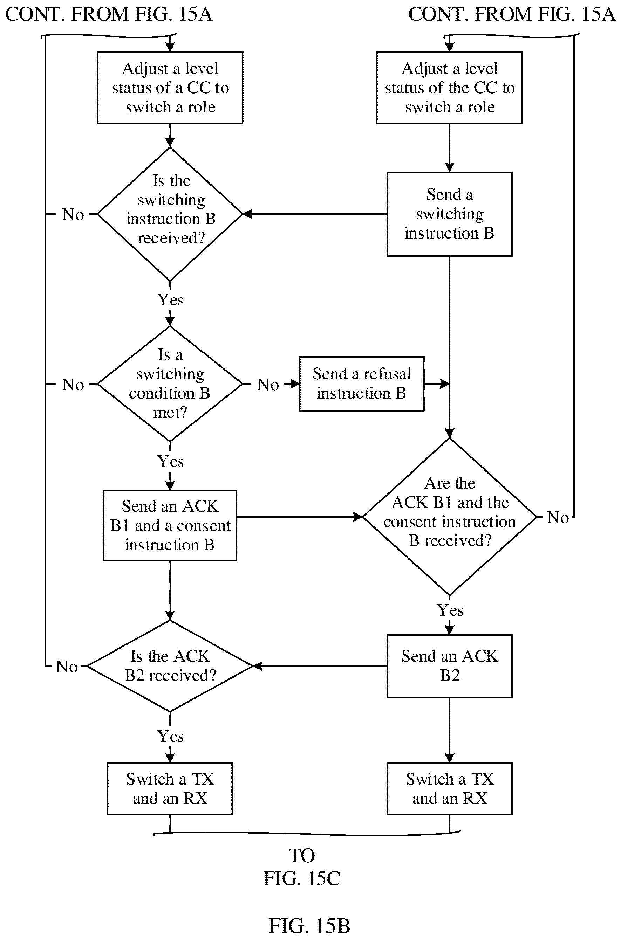

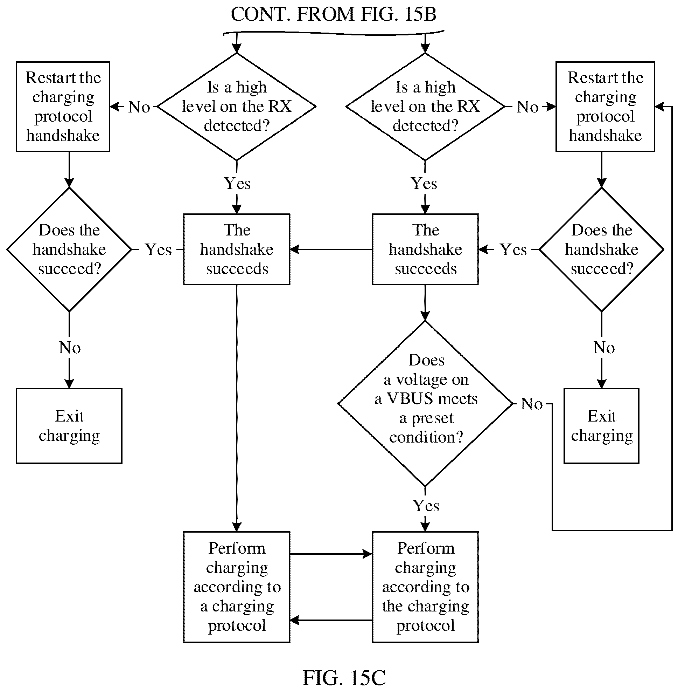

FIG. 15A to FIG. 15C are a schematic flowchart of a power role switching method according to still another embodiment of this application. In this embodiment, an example in which the second electronic device 602 detects a switching operation, to switch a power role is used for description.

As shown in FIG. 15A to FIG. 15C, initially, the first electronic device 601 may be connected to the second electronic device 602 through a charging cable. In this case, the first electronic device 601 may be identified as a charged device, and the second electronic device 602 may be identified as a power supply device. Then, the first electronic device 601 and the second electronic device 602 may start a charging protocol handshake. When the charging protocol handshake succeeds, the first electronic device 601 and the second electronic device 602 may enter a normal charging process, to be specific, the second electronic device 602 may provide electric energy for the first electronic device 601. It should be understood that, when the charging protocol handshake fails, the first electronic device 601 and the second electronic device 602 may exit charging.

As shown in FIG. 15A to FIG. 15C, in a process in which the second electronic device 602 provides the electric energy for the first electronic device 601, when a user wants to trigger switching of the power role on the second electronic device 602, the user may perform the switching operation on the second electronic device 602. That is, the second electronic device 602 may detect the switching operation on the second electronic device 602.

When detecting the switching operation, the second electronic device 602 may adjust a level status of a CC based on the switching operation, to switch a role, to be specific, switch a level status of the CC in the second electronic device 602. The first electronic device 601 may adjust a level status of the CC based on the switching operation, to switch a role, to be specific, switch a level status of the CC in the first electronic device 601, to adjust charging statuses of the first electronic device 601 and the second electronic device 602, so as to adjust the power role in the charging process. In this way, the first electronic device 601 may provide electric energy for the second electronic device 602 through a VBUS.

In addition, the second electronic device 602 may further send a switching instruction B to the first electronic device 601.

It should be understood that, when detecting no switching operation, the second electronic device 602 may still be used as the power supply device, to provide the electric energy for the first electronic device 601.

The first electronic device 601 may determine whether the switching instruction B sent by the second electronic device 602 is received.

When receiving the switching instruction B, the first electronic device 601 may first determine whether the first electronic device 601 meets a switching condition B. When the first electronic device 601 meets the switching condition B, the first electronic device 601 may send an ACK B1 and a consent instruction B to the second electronic device 602. When the first electronic device 601 does not meet the switching condition B, the first electronic device 601 may send a refusal instruction B to the second electronic device 602. In this case, the first electronic device 601 may still be used as the charged device, to receive the electric energy provided by the second electronic device 602.

It should be understood that, when the first electronic device 601 does not receive the switching instruction B, the first electronic device 601 may still be used as the charged device, to receive the electric energy provided by the second electronic device 602.

The second electronic device 602 may determine whether the ACK B1 and the consent instruction B that are returned by the first electronic device 601 are received.

When receiving the ACK B1 and the consent instruction B that are returned by the first electronic device 601, the second electronic device 602 may return, to the first electronic device 601, an ACK B2 for confirming that the consent instruction B is received. When receiving no ACK B1 and consent instruction B, the second electronic device 602 may still be used as the power supply device, to provide the electric energy for the first electronic device 601.

The second electronic device 602 may switch statuses of a first signal line and a second signal line in the second electronic device 602 after preset duration T22 of returning the ACK B2 to the first electronic device 601.

The first electronic device 601 may determine whether the ACK B2 returned by the second electronic device 602 is received.

When receiving the ACK B2, the first electronic device 601 may determine time A at which the second electronic device 602 switches the statuses of the first signal line and the second signal line in the second electronic device 602, and may switch statuses of the first signal line and the second signal line in the first electronic device 601 after preset duration T32 of the time A.

Then, after it is determined that the handshake between the first electronic device 601 used as a power supply device and the second electronic device 602 used as a charged device succeeds, and the second electronic device 602 detects, within preset duration T03, that a voltage on the VBUS meets a preset condition, the first electronic device 601 and the second electronic device 602 may perform charging according to a charging protocol.

For specific content of determining whether the handshake between the first electronic device 601 used as the power supply device and the second electronic device 602 used as the charged device succeeds and whether it is detected that the voltage on the VBUS meets the preset condition, refer to specific descriptions in FIG. 9A to FIG. 9C. Details are not described herein again.

It should be noted that, when receiving no ACK B2, the first electronic device 601 may still be used as the charged device, to receive the electric energy provided by the second electronic device 602.

It should be understood that sequence numbers of the steps in the foregoing embodiments do not mean an execution sequence. The execution sequence of the processes should be determined based on functions and internal logic of the processes, and should not be construed as any limitation on the implementation processes of embodiments of this application.

An embodiment of this application further provides a power role switching apparatus, corresponding to the power role switching method described in the foregoing embodiments. Modules of the apparatus may correspondingly implement the steps of the power role switching method.

It should be noted that content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

It may be clearly understood by persons skilled in the art that, for convenient and brief description, division into the foregoing functional units or modules is merely used as an example for illustration. During actual application, the foregoing functions may be allocated to different functional units or modules for implementation based on a requirement, that is, an inner structure of the apparatus is divided into different functional units or modules to implement all or some of the functions described above. The functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the foregoing method embodiments. Details are not described herein again.

An embodiment of this application further provides an electronic device. The electronic device includes at least one memory, at least one processor, and a computer program that is stored in the at least one memory and that may be run on the at least one processor. When the processor executes the computer program, the electronic device is enabled to implement the steps in any one of the foregoing method embodiments. For example, a structure of the electronic device may be shown in FIG. 4.

An embodiment of this application further provides a computer-readable storage medium. The computer-readable storage medium stores a computer program. When the computer program is executed by a computer, the computer is enabled to implement the steps in any one of the foregoing power role switching method embodiments.

An embodiment of this application provides a computer program product. When the computer program product runs on an electronic device, the electronic device is enabled to implement the steps in any one of the foregoing power role switching method embodiments.

The integrated unit may be stored in a computer-readable storage medium when being implemented in the form of the software functional unit and sold or used as an independent product. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a source code form, an object code form, an executable file, some intermediate forms, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc. In some jurisdictions, the computer-readable storage medium cannot be an electrical carrier signal or a telecommunication signal according to legislation and patent practices.

In the foregoing embodiments, descriptions of embodiments have respective focuses. For a part that is not described in detail or recorded in an embodiment, refer to related descriptions in other embodiments.

Persons of ordinary skill in the art may be aware that units and algorithm steps in the examples described with reference to embodiments disclosed in this specification can be implemented by electronic hardware or a combination of computer software and the electronic hardware. Whether these functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one place, or may be distributed on a plurality of network units. Some or all of the units may be selected based on an actual requirement, to achieve the objectives of the solutions of embodiments.

The foregoing embodiments are merely intended for describing the technical solutions of this application, but not for limiting the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A power role switching method, applied to a first electronic device, wherein initially, the first electronic device is a charged device, and is configured to receive electric energy provided by a second electronic device, the first electronic device and the second electronic device each have a function of being charged and a power supply function, the first electronic device is connected to the second electronic device through a first signal line and a second signal line, the first signal line is a signal line for the first electronic device to receive data sent by the second electronic device, the second signal line is a signal line for the first electronic device to send data to the second electronic device, and the method comprises:
receiving, by the first electronic device, a first operation, wherein the first operation is used to switch a power role in a charging process;
sending, by the first electronic device, a first instruction to the second electronic device based on the first operation, wherein the first instruction indicates the second electronic device to switch to a charged device; and
based on the first operation, adjusting, by the first electronic device, the first signal line to be the signal line for the first electronic device to send the data to the second electronic device, adjusting the second signal line to be the signal line for the first electronic device to receive the data sent by the second electronic device, and adjusting an output voltage of the first electronic device, to switch the first electronic device to a power supply device.

2. The method according to claim 1, wherein sending, by the first electronic device, the first instruction to the second electronic device comprises:
determining, by the first electronic device, whether the first electronic device meets a switching condition; and
sending, by the first electronic device, the first instruction to the second electronic device when the first electronic device meets the switching condition.

3. The method according to claim 2, wherein the method further comprises:
receiving, by the first electronic device, a second instruction, wherein the second instruction is used to consent to switch the power role, and the second instruction is sent by the second electronic device to the first electronic device after the second electronic device receives the first instruction.

4. The method according to claim 3, wherein adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device comprises:
after receiving the second instruction, adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device.

5. The method according to claim 3, wherein after receiving, by the first electronic device, the second instruction, the method further comprises:
sending, by the first electronic device, a third instruction to the second electronic device, wherein the third instruction is used to confirm that the second instruction is received.

6. The method according to claim 5, wherein adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device comprises:
after second preset duration of sending the third instruction, adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device.

7. The method according to any one of claims 1 to 6, wherein after adjusting, by the first electronic device, the first signal line to be the signal line for the first electronic device to send the data to the second electronic device, and adjusting the second signal line to be the signal line for the first electronic device to receive the data sent by the second electronic device, the method further comprises:
detecting, by the first electronic device, a level on the second signal line; and
when detecting a high level on the second signal line within third preset duration, determining, by the first electronic device, that a handshake between the first electronic device and the second electronic device succeeds; or
when detecting no high level on the second signal line within the third preset duration, determining, by the first electronic device, that the handshake between the first electronic device and the second electronic device fails, and restarting a charging protocol handshake.

8. The method according to claim 7, wherein adjusting, by the first electronic device, the output voltage of the first electronic device comprises:
adjusting, by the first electronic device, the output voltage of the first electronic device after fourth preset duration of determining that the handshake between the first electronic device and the second electronic device succeeds.

9. The method according to any one of claims 1 to 8, wherein adjusting, by the first electronic device, the first signal line to be the signal line for the first electronic device to send the data to the second electronic device, and adjusting the second signal line to be the signal line for the first electronic device to receive the data sent by the second electronic device comprises:
setting, by the first electronic device, the first signal line to a pull-up state, and setting the second signal line to a high resistive state.

10. The method according to any one of claims 1 to 9, wherein the first electronic device is further connected to the second electronic device through a CC signal line; and
after receiving, by the first electronic device, the first operation, the method further comprises:
adjusting, by the first electronic device, a level status of the CC signal line in the first electronic device based on the first operation.

11. The method according to claim 10, wherein adjusting, by the first electronic device, the output voltage of the first electronic device comprises:
adjusting, by the first electronic device, the output voltage of the first electronic device based on the level status of the CC signal line in the first electronic device.

12. The method according to any one of claims 1 to 11, wherein adjusting, by the first electronic device, the output voltage of the first electronic device comprises:
adjusting, by the first electronic device, the output voltage of the first electronic device to a first preset value.

13. A power role switching method, applied to a second electronic device, wherein initially, the second electronic device is a power supply device, and is configured to provide electric energy for a first electronic device, the first electronic device and the second electronic device each have a function of being charged and a power supply function, the second electronic device is connected to the first electronic device through a first signal line and a second signal line, the first signal line is a signal line for the second electronic device to send data to the first electronic device, the second signal line is a signal line for the second electronic device to receive data sent by the first electronic device, and the method comprises:
receiving, by the second electronic device, a first instruction, wherein the first instruction indicates the second electronic device to switch to a charged device, the first instruction is sent by the first electronic device to the second electronic device when the first electronic device receives a first operation, and the first operation is used to switch a power role in a charging process; and
according to the first instruction, adjusting, by the second electronic device, an output voltage of the second electronic device, adjusting the first signal line to be the signal line for the second electronic device to receive the data sent by the first electronic device, and adjusting the second signal line to be the signal line for the second electronic device to send the data to the first electronic device, to switch the second electronic device to the charged device.

14. The method according to claim 13, wherein after receiving, by the second electronic device, the first instruction, the method further comprises:
sending, by the second electronic device, a second instruction to the first electronic device after receiving the first instruction, wherein the second instruction is used to consent to switch the power role.

15. The method according to claim 14, wherein according to the first instruction, adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device comprises:
after sending the second instruction, adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device.

16. The method according to claim 14 or 15, wherein after sending, by the second electronic device, the second instruction to the first electronic device, the method further comprises:
receiving, by the second electronic device, a third instruction, wherein the third instruction is sent by the first electronic device to the second electronic device after the first electronic device receives the second instruction, and the third instruction is used to confirm that the second instruction is received.

17. The method according to claim 16, wherein according to the first instruction, adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device comprises:
after first preset duration of receiving the third instruction, adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device.

18. The method according to any one of claims 13 to 17, wherein adjusting, by the second electronic device, the first signal line to be the signal line for the second electronic device to receive the data sent by the first electronic device, and adjusting the second signal line to be the signal line for the second electronic device to send the data to the first electronic device comprises:
setting, by the second electronic device, the first signal line to a high resistive state, and setting the second signal line to a pull-up state.

19. The method according to any one of claims 13 to 18, wherein adjusting, by the second electronic device, the output voltage of the second electronic device comprises:
adjusting, by the second electronic device, the output voltage of the second electronic device to a second preset value.

20. The method according to claim 19, wherein after adjusting, by the second electronic device, the first signal line to be the signal line for the second electronic device to receive the data sent by the first electronic device, and adjusting the second signal line to be the signal line for the second electronic device to send the data to the first electronic device, the method further comprises:
detecting, by the second electronic device, a level on the first signal line; and
when detecting a high level on the first signal line within third preset duration, determining, by the second electronic device, that a handshake between the second electronic device and the first electronic device succeeds; or
when detecting no high level on the first signal line within the third preset duration, determining, by the second electronic device, that the handshake between the second electronic device and the first electronic device fails, and restarting a charging protocol handshake.

21. The method according to claim 20, wherein the first electronic device is further connected to the second electronic device through a VBUS power line; and
the method further comprises:
after determining that the handshake between the second electronic device and the first electronic device succeeds, detecting, by the second electronic device, whether a voltage on the VBUS power line meets a preset condition, wherein the preset condition is determined based on the second preset value; and
when detecting within fifth preset duration that the voltage on the VBUS power line meets the preset condition, receiving, by the second electronic device according to a charging protocol, electric energy provided by the first electronic device; or
restarting, by the second electronic device, the charging protocol handshake when not detecting, within the fifth preset duration, that the voltage on the VBUS meets the preset condition.

22. The method according to any one of claims 13 to 21, wherein the second electronic device is further connected to the first electronic device through a CC signal line; and
the method further comprises:
adjusting, by the second electronic device, a level status of the CC signal line in the second electronic device according to the first instruction.

23. The method according to claim 22, wherein adjusting, by the second electronic device, the output voltage of the second electronic device comprises:
adjusting, by the second electronic device, the output voltage of the second electronic device based on the level status of the CC signal line in the second electronic device.

24. A power role switching system, wherein the system comprises a first electronic device and a second electronic device, the first electronic device and the second electronic device each have a function of being charged and a power supply function, initially, the first electronic device is a charged device, the second electronic device is a power supply device, the first electronic device is connected to the second electronic device through a first signal line and a second signal line, the first signal line is a signal line for the first electronic device to receive data sent by the second electronic device, and the second signal line is a signal line for the first electronic device to send data to the second electronic device;
the first electronic device is configured to perform steps in the power role switching method according to any one of claims 1 to 12; and
the second electronic device is configured to perform steps in the power role switching method according to any one of claims 13 to 23.

25. A power role switching method, applied to a second electronic device, wherein initially, the second electronic device is a power supply device, and is configured to provide electric energy for a first electronic device, the first electronic device and the second electronic device each have a function of being charged and a power supply function, the second electronic device is connected to the first electronic device through a first signal line and a second signal line, the first signal line is a signal line for the second electronic device to send data to the first electronic device, the second signal line is a signal line for the second electronic device to receive data sent by the first electronic device, and the method comprises:
receiving, by the second electronic device, a first operation, wherein the first operation is used to switch a power role in a charging process;
based on the first operation, adjusting, by the second electronic device, an output voltage of the second electronic device, adjusting the first signal line to be the signal line for the second electronic device to receive the data sent by the first electronic device, and adjusting the second signal line to be the signal line for the second electronic device to send the data to the first electronic device; and
sending, by the second electronic device, a first instruction to the first electronic device based on the first operation, wherein the first instruction is used to switch the first electronic device to a power supply device.

26. The method according to claim 25, wherein the method further comprises:
receiving, by the second electronic device, a second instruction, wherein the second instruction is used to consent to switch the power role, and the second instruction is sent by the first electronic device to the second electronic device when the first electronic device determines, after receiving the first instruction, that the first electronic device meets a switching condition.

27. The method according to claim 26, wherein adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device comprises:
after receiving the second instruction, adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device.

28. The method according to claim 26, wherein after receiving, by the second electronic device, the second instruction, the method further comprises:
sending, by the second electronic device, a third instruction to the first electronic device, wherein the third instruction is used to confirm that the second instruction is received.

29. The method according to claim 28, wherein adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device comprises:
after first preset duration of sending the third instruction, adjusting, by the second electronic device, the output voltage of the second electronic device, adjusting the first signal line to be the signal line for the second electronic device to receive the data sent by the first electronic device, and adjusting the second signal line to be the signal line for the second electronic device to send the data to the first electronic device.

30. The method according to any one of claims 25 to 29, wherein adjusting, by the second electronic device, the first signal line to be the signal line for the second electronic device to receive the data sent by the first electronic device, and adjusting the second signal line to be the signal line for the second electronic device to send the data to the first electronic device comprises:
setting, by the second electronic device, the first signal line to a high resistive state, and setting the second signal line to a pull-up state.

31. The method according to any one of claims 25 to 30, wherein adjusting, by the second electronic device, the output voltage of the second electronic device comprises:
adjusting, by the second electronic device, the output voltage of the second electronic device to a second preset value.

32. The method according to claim 31, wherein after adjusting, by the second electronic device, the first signal line to be the signal line for the second electronic device to receive the data sent by the first electronic device, and adjusting the second signal line to be the signal line for the second electronic device to send the data to the first electronic device, the method further comprises:
detecting, by the second electronic device, a level on the first signal line; and
when detecting a high level on the first signal line within third preset duration, determining, by the second electronic device, that a handshake between the second electronic device and the first electronic device succeeds; or
when detecting no high level on the first signal line within the third preset duration, determining, by the second electronic device, that the handshake between the second electronic device and the first electronic device fails, and restarting a charging protocol handshake.

33. The method according to claim 32, wherein the first electronic device is further connected to the second electronic device through a VBUS power line; and
the method further comprises:
after determining that the handshake between the second electronic device and the first electronic device succeeds, detecting, by the second electronic device, whether a voltage on the VBUS power line meets a preset condition, wherein the preset condition is determined based on the second preset value; and
performing, by the second electronic device, charging from the first electronic device according to a charging protocol when detecting within fifth preset duration that the voltage on the VBUS power line meets the preset condition; or
restarting, by the second electronic device, the charging protocol handshake when not detecting, within the fifth preset duration, that the power on the VBUS power line meets the preset condition.

34. The method according to any one of claims 25 to 33, wherein the second electronic device is further connected to the first electronic device through a CC signal line; and
after receiving, by the second electronic device, the first operation, the method further comprises:
switching, by the second electronic device, a level status of the CC signal line in the second electronic device based on the first operation.

35. The method according to claim 34, wherein adjusting, by the second electronic device, the output voltage of the second electronic device comprises:
adjusting, by the second electronic device, the output voltage of the second electronic device based on the level status of the CC signal line in the second electronic device.

36. A power role switching method, applied to a first electronic device, wherein initially, the first electronic device is a charged device, and is configured to receive electric energy provided by a second electronic device, the first electronic device and the second electronic device each have a function of being charged and a power supply function, the first electronic device is connected to the second electronic device through a first signal line and a second signal line, the first signal line is a signal line for the first electronic device to receive data sent by the second electronic device, the second signal line is a signal line for the first electronic device to send data to the second electronic device, and the method comprises:
receiving, by the first electronic device, a first instruction, wherein the first instruction indicates the first electronic device to switch to a power supply device, the first instruction is sent by the second electronic device to the first electronic device after the second electronic device receives a first operation, and the first operation is used to switch a power role in a charging process; and
according to the first instruction, adjusting, by the first electronic device, the first signal line to be the signal line for the first electronic device to send the data to the second electronic device, adjusting the second signal line to be the signal line for the first electronic device to receive the data sent by the second electronic device, and adjusting an output voltage of the first electronic device, to switch the first electronic device to the power supply device.

37. The method according to claim 36, wherein after receiving, by the first electronic device, the first instruction, the method further comprises:
determining, by the first electronic device, whether the first electronic device meets a switching condition; and
sending, by the first electronic device, a second instruction to the second electronic device when the first electronic device meets the switching condition, wherein the second instruction is used to consent to switch the power role.

38. The method according to claim 37, wherein according to the first instruction, adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device comprises:
after sending the second instruction, adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device.

39. The method according to claim 37 or 38, wherein after sending, by the first electronic device, the second instruction to the second electronic device, the method further comprises:
receiving, by the first electronic device, a third instruction, wherein the third instruction is sent by the second electronic device to the first electronic device after the second electronic device receives the second instruction, and the third instruction is used to confirm that the second instruction is received.

40. The method according to claim 39, wherein according to the first instruction, adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device comprises:
after second preset duration of receiving the third instruction, adjusting, by the first electronic device, the first signal line to be the signal line for the first electronic device to send the data to the second electronic device, adjusting the second signal line to be the signal line for the first electronic device to receive the data sent by the second electronic device, and adjusting the output voltage of the first electronic device.

41. The method according to any one of claims 36 to 40, wherein after adjusting, by the first electronic device, the first signal line to be the signal line for the first electronic device to send the data to the second electronic device, and adjusting the second signal line to be the signal line for the first electronic device to receive the data sent by the second electronic device, the method further comprises:
detecting, by the first electronic device, a level on the second signal line; and
when detecting a high level on the second signal line within third preset duration, determining, by the first electronic device, that a handshake between the first electronic device and the second electronic device succeeds; or
when detecting no high level on the second signal line within the third preset duration, determining, by the first electronic device, that the handshake between the first electronic device and the second electronic device fails, and restarting a charging protocol handshake.

42. The method according to claim 41, wherein adjusting, by the first electronic device, the output voltage of the first electronic device comprises:
adjusting, by the first electronic device, the output voltage of the first electronic device after the third preset duration of determining that the handshake between the first electronic device and the second electronic device succeeds.

43. The method according to any one of claims 36 to 42, wherein adjusting, by the first electronic device, the first signal line to be the signal line for the first electronic device to send the data to the second electronic device, and adjusting the second signal line to be the signal line for the first electronic device to receive the data sent by the second electronic device comprises:
setting, by the first electronic device, the first signal line to a pull-up state, and setting the second signal line to a high resistive state.

44. The method according to any one of claims 36 to 43, wherein the first electronic device is further connected to the second electronic device through a CC signal line; and
the method further comprises:
adjusting, by the first electronic device, a level status of the CC signal line in the first electronic device according to the first instruction.

45. The method according to claim 44, wherein adjusting, by the first electronic device, the output voltage of the first electronic device comprises:
adjusting, by the first electronic device, the output voltage of the first electronic device based on the level status of the CC signal line in the first electronic device.

46. The method according to any one of claims 36 to 45, wherein adjusting, by the first electronic device, the output voltage of the first electronic device comprises:
adjusting, by the first electronic device, the output voltage of the first electronic device to a first preset value.

47. A power role switching system, wherein the system comprises a first electronic device and a second electronic device, the first electronic device and the second electronic device each have a function of being charged and a power supply function, initially, the first electronic device is a charged device, the second electronic device is a power supply device, the first electronic device is connected to the second electronic device through a first signal line and a second signal line, the first signal line is a signal line for the second electronic device to send data to the first electronic device, and the second signal line is a signal line for the second electronic device to receive data sent by the first electronic device;
the second electronic device is configured to perform steps in the power role switching method according to any one of claims 25 to 35; and
the first electronic device is configured to perform steps in the power role switching method according to any one of claims 36 to 46.

48. An electronic device, comprising a memory, a processor, and a computer program that is stored in the memory and that is capable of being run on the processor, wherein when the processor executes the computer program, the electronic device is enabled to implement the power role switching method according to any one of claims 1 to 12, 13 to 23, 25 to 35, or 36 to 46.

49. A first electronic device, wherein initially, the first electronic device is a charged device, and is configured to receive electric energy provided by a second electronic device, the first electronic device and the second electronic device each have a function of being charged and a power supply function, the first electronic device is connected to the second electronic device through a first signal line and a second signal line, the first signal line is a signal line for the first electronic device to receive data sent by the second electronic device, and the second signal line is a signal line for the first electronic device to send data to the second electronic device;
the first electronic device comprises a system on chip, a protocol module, a power management module, and an input module;
the input module is configured to: receive a first operation, and send first information of the first operation to the system on chip, wherein the first operation is used to switch a power role in a charging process;
the system on chip is configured to indicate, based on the first information of the first operation, the protocol module to send a first instruction to the second electronic device, wherein the first instruction indicates the second electronic device to switch to a charged device;
the protocol module is configured to: adjust the first signal line to be the signal line for the first electronic device to send the data to the second electronic device, and adjust the second signal line to be the signal line for the first electronic device to receive the data sent by the second electronic device; and
the system on chip is further configured to indicate the power management module to adjust an output voltage of the first electronic device.

50. A second electronic device, wherein initially, the second electronic device is a power supply device, and is configured to provide electric energy for a first electronic device, the first electronic device and the second electronic device each have a function of being charged and a power supply function, the second electronic device is connected to the first electronic device through a first signal line and a second signal line, the first signal line is a signal line for the second electronic device to send data to the first electronic device, and the second signal line is a signal line for the second electronic device to receive data sent by the first electronic device;
the second electronic device comprises a system on chip, a protocol module, and a power management module;
the protocol module is configured to: receive a first instruction, and send the first instruction to the system on chip, wherein the first instruction indicates the second electronic device to switch to a charged device, the first instruction is sent by the first electronic device to the second electronic device when the first electronic device receives a first operation, and the first operation is used to switch a power role in a charging process;
the system on chip is configured to indicate, according to the first instruction, the power management module to adjust an output voltage of the second electronic device; and
the protocol module is further configured to: according to the first instruction, adjust the first signal line to be the signal line for the second electronic device to receive the data sent by the first electronic device, and adjust the second signal line to be the signal line for the second electronic device to send the data to the first electronic device.

51. A second electronic device, wherein initially, the second electronic device is a power supply device, and is configured to provide electric energy for a first electronic device, the first electronic device and the second electronic device each have a function of being charged and a power supply function, the second electronic device is connected to the first electronic device through a first signal line and a second signal line, the first signal line is a signal line for the second electronic device to send data to the first electronic device, and the second signal line is a signal line for the second electronic device to receive data sent by the first electronic device;
the second electronic device comprises a system on chip, a protocol module, a power management module, and an input module;
the input module is configured to: receive a first operation, and send first information of the first operation to the system on chip, wherein the first operation is used to switch a power role in a charging process;
the system on chip is configured to indicate, based on the first information of the first operation, the power management module to adjust an output voltage of the second electronic device;
the protocol module is further configured to: based on the first information of the first operation, adjust the first signal line to be the signal line for the second electronic device to receive the data sent by the first electronic device, and adjust the second signal line to be the signal line for the second electronic device to send the data to the first electronic device; and
the system on chip is further configured to indicate the protocol module to send a first instruction to the first electronic device, wherein the first instruction is used to switch the first electronic device to a power supply device.

52. A first electronic device, wherein initially, the first electronic device is a charged device, and is configured to receive electric energy provided by a second electronic device, the first electronic device and the second electronic device each have a function of being charged and a power supply function, the first electronic device is connected to the second electronic device through a first signal line and a second signal line, the first signal line is a signal line for the first electronic device to receive data sent by the second electronic device, and the second signal line is a signal line for the first electronic device to send data to the second electronic device;
the first electronic device comprises a system on chip, a protocol module, and a power management module;
the protocol module is configured to: receive a first instruction, and send the first instruction to the system on chip, wherein the first instruction indicates the first electronic device to switch to a power supply device, the first instruction is sent by the second electronic device to the first electronic device after the second electronic device receives a first operation, and the first operation is used to switch a power role in a charging process;
the protocol module is further configured to: according to the first instruction, adjust the first signal line to be the signal line for the first electronic device to send the data to the second electronic device, and adjust the second signal line to be the signal line for the first electronic device to receive the data sent by the second electronic device; and
the system on chip is further configured to indicate, according to the first instruction, the power management module to adjust an output voltage of the first electronic device.
